# EUROPEAN PATENT APPLICATION

(11) **EP 4 687 208 A1**
(43) Date of publication of application: **04.02.2026**
(21) Application number: 25190330.8
(22) Date of filing: 18.07.2025
(51) Int. Cl.: H01M 50/247, H01M 50/296

(54) **BATTERY PACK**

(30) Priority: 02.08.2024 CN 202411059755; 21.02.2025 CN 202510202181; 20.05.2025 CN 202510656666; 10.06.2025 CN 202510774740
(71) Applicant: Nanjing Chervon Industry Co., Ltd., Nanjing, Jiangsu 211106 (CN)
(72) Inventor: ZHANG, Lisong, Nanjing, Jiangsu 211106 (CN); LI, Jing, Nanjing, Jiangsu 211106 (CN); LIU, Youchen, Nanjing, Jiangsu 211106 (CN); HU, Xue, Nanjing, Jiangsu 211106 (CN); YE, Dacheng, Nanjing, Jiangsu 211106 (CN); LI, Linjun, Nanjing, Jiangsu 211106 (CN); LV, Hong, Nanjing, Jiangsu 211106 (CN); CHEN, Weichao, Nanjing, Jiangsu 211106 (CN); WANG, Tianxiang, Nanjing, Jiangsu 211106 (CN); LIN, Xiaohong, Nanjing, Jiangsu 211106 (CN); ZENG, Yinyin, Nanjing, Jiangsu 211106 (CN); TAO, Shichun, Nanjing, Jiangsu 211106 (CN)
(74) Representative: Sun, Yiming

(57) **Abstract**

A battery pack includes a battery housing; a single cell disposed in the battery housing; and a battery energy transmission terminal including a composite pole piece electrically connected to the cell and formed by stacking at least two metal pole pieces. The continuous power density of the battery pack is greater than or equal to 2.5 W/cm³. The energy density of the battery pack is greater than or equal to 35 Ah/kg. The technical solution is adopted so that the battery pack with better performance, a higher continuous power density, and a higher energy density can be provided.

## Description

### TECHNICAL FIELD

The present application relates to the technical field of power supplies and, in particular, to a battery pack.

### BACKGROUND

A portable power tool is applicable in various scenarios of production and life. A rechargeable battery pack is configured to power the power tool so that the power tool is free from wires and more convenient for a user to use. Since the power tool operates using the battery pack, the performance of the battery pack affects the working condition of the power tool to a certain extent. With the development of power tools, higher requirements are imposed on the performance of battery packs.

This part provides background information related to the present application, and the background information is not necessarily the existing art.

### SUMMARY

To solve the deficiencies in the existing art, an object of the present application is to provide a battery pack with better performance, a higher continuous power density, and a higher energy density.

To achieve the preceding object, the present application adopts the technical solutions below.

A battery pack includes a battery housing; a single cell disposed in the battery housing; and a battery energy transmission terminal including a composite pole piece electrically connected to the cell and formed by stacking at least two metal pole pieces. The continuous power density of the battery pack is greater than or equal to 2.5 W/cm³. The energy density of the battery pack is greater than or equal to 35 Ah/kg.

In some examples, the cell is configured to be a full-tab battery, and full coverage tabs are disposed at the edges of current collectors of a positive electrode and/or a negative electrode.

In some examples, the maximum continuous operating current transmitted by the composite pole piece is greater than or equal to 50 A.

In some examples, the cross-sectional area of a portion of the composite pole piece transmitting the current is greater than or equal to 2 mm².

In some examples, the duration of the maximum continuous operating current transmitted by the composite pole piece is greater than or equal to 4s.

In some examples, the at least two metal pole pieces forming the composite pole piece are made of different materials.

In some examples, the at least two metal pole pieces forming the composite pole piece have different thicknesses.

In some examples, the battery energy transmission terminal further includes a battery USB Type-C terminal, where the electrical energy transmission power of the battery USB Type-C terminal is greater than or equal to 15 W.

In some examples, the battery pack further includes a circuit board disposed at a first end of the battery pack in a length direction, and the board area of the circuit board is less than or equal to 1.2 times the cross-sectional area of the cell.

In some examples, the voltage at the battery USB Type-C terminal is set to 9 V, 12 V, or 15 V.

In some examples, the outer contour dimension of the battery housing is fixed and configured to be a standard dimension, and the interior of the battery housing is provided with an adjustable support structure or designed with different internal dimensions to form accommodation spaces for accommodating at least two cells of different dimensions.

In some examples, vents are disposed on at least the end surfaces of a first end and a second end of the battery housing in a length direction, respectively to form the axial airflow from the first end to the second end.

In some examples, the thermal conductivity of the battery housing is greater than or equal to 1.1 W/(m·K).

In some examples, the battery pack further includes a light display device configured to indicate at least the state information of the cell, where a sheet region portion of the composite pole piece exposed outside the battery housing forms a connection region electrically connectable to a tool terminal of a power tool, the light display device is disposed at a first end of the battery housing in a length direction, and the connection region is disposed at a second end of the battery housing opposite to the first end in the length direction.

In some examples, the instantaneous power density of the battery pack is greater than or equal to 8.5 W/cm³.

In some examples, the continuous power density of the battery pack is greater than or equal to 1.2 W/g.

In some examples, the instantaneous power density of the battery pack is greater than or equal to 4.5 W/g.

In some examples, a battery pack includes a battery housing; a single cell disposed in the battery housing; and a battery energy transmission terminal including a composite pole piece electrically connected to the cell and formed by stacking at least two metal pole pieces. The continuous power density of the battery pack is greater than or equal to 2.5 W/cm³.

In some examples, a battery pack includes a battery housing; a single cell disposed in the battery housing; and a battery energy transmission terminal including a composite pole piece electrically connected to the cell and formed by stacking at least two metal pole pieces. The continuous power density of the battery pack is greater than or equal to 2.5 W/cm³. The alternating current (AC) internal resistance of the cell is less than or equal to 5.5 mΩ.

In some examples, the battery pack further includes a circuit board on which a 3D printed protective layer is provided.

In some examples, the battery pack further includes at least one thin film negative-temperature-coefficient (NTC) thermistor, a first end of the thin film NTC thermistor is connected to the circuit board, and a second end of the thin film NTC thermistor is attached to the surface of the cell.

In some examples, the discharge rate of the cell is greater than or equal to 10 C.

In some examples, a battery pack includes a battery housing; a single cell disposed in the battery housing, where the cell is configured to be a full-tab battery, and full coverage tabs are disposed at the edges of current collectors of a positive electrode and/or a negative electrode; and a battery energy transmission terminal electrically connected to the cell and including a composite pole piece formed by stacking at least two metal pole pieces. The maximum continuous operating current transmitted by the composite pole piece is greater than or equal to 50 A.

In some examples, the at least two metal pole pieces forming the composite pole piece have different thicknesses.

In some examples, the thickness of the first metal pole piece connected to the cell is less than the thickness of the second metal pole piece forming the connection region.

In some examples, the ratio of the thickness of the first metal pole piece to the thickness of the second metal pole piece is greater than or equal to 0.1 and less than or equal to 0.5.

In some examples, at least part of the surface of the second metal pole piece is covered with a wear-resistant conductive coating, and the wear-resistant conductive coating includes a nickel-plated coating.

In some examples, the area of the connection region is greater than or equal to 45 mm².

In some examples, the at least two metal pole pieces forming the composite pole piece are made of different materials.

In some examples, the cross-sectional area of a portion of the composite pole piece transmitting the current is greater than or equal to 2 mm².

In some examples, the duration of the maximum continuous operating current transmitted by the composite pole piece is greater than or equal to 4s.

In some examples, the composite pole piece includes a positive composite pole piece and a negative composite pole piece, and the connection region of the positive composite pole piece is disposed at a first end of the battery pack in the length direction.

In some examples, a battery pack for a power tool includes a battery housing; a single cell disposed in the battery housing; a circuit board disposed in the battery housing and located at an end of the battery pack in a length direction; and a battery energy transmission terminal including a battery USB Type-C terminal. The board area of the circuit board is less than or equal to 1.2 times the cross-sectional area of the cell. The electrical energy transmission power of the battery USB Type-C terminal is greater than or equal to 15 W.

In some examples, the battery energy transmission terminal further includes a composite pole piece formed by stacking at least two metal pole pieces, and the electrical energy transmission power of the composite pole piece is greater than or equal to 170 W.

In some examples, the battery pack further includes a signal terminal configured to transmit battery pack data and disposed at a first end of the battery pack opposite to the battery USB Type-C terminal in the length direction.

In some examples, the portion of the composite pole piece exposed outside the battery housing forms a connection region electrically connected to an external electrical device, and the connection region is disposed at a first end of the battery pack in the length direction or at a second end opposite to the first end.

In some examples, the rated voltage at the battery USB Type-C terminal is set to 9 V, 12 V, or 15 V.

In some examples, a battery pack suitable for a power tool includes a battery housing; a single cell disposed in the battery housing; a battery energy transmission terminal including a metal connecting pole piece electrically connected to the cell, where a sheet region portion of the metal connecting pole piece exposed outside the battery housing forms a connection region electrically connectable to a tool terminal of the power tool; and a light display device configured to indicate at least the state information of the cell, where the light display device is disposed at a first end of the battery housing in a length direction, and the connection region is disposed at a second end of the battery housing opposite to the first end in the length direction.

In some examples, the ratio of the shortest distance between the light display device and the connection region to the total length of the battery pack is greater than or equal to 0.8.

In some examples, a power tool to which a battery pack is adapted includes a battery mounting portion for accommodating the battery pack, and the first end is basically flush with an open end of the battery mounting portion.

In some examples, the battery pack further includes a circuit board disposed at the first end; and at least one thin film NTC thermistor, where a first end of the thin film NTC thermistor is connected to the circuit board, and a second end of the thin film NTC thermistor is attached to the surface of the cell.

In some examples, the battery pack further includes fixing members each of which is configured to fixedly attach the second end of a respective thin film NTC thermistor to the surface of the cell, and the fixing member includes a heat-resistant flexible adhesive member or an abutment member that mates with the battery housing to abut the second end of the thin film NTC thermistor against the surface of the cell.

In some examples, a 3D printed protective layer is disposed on the circuit board.

In some examples, the battery pack further includes a battery USB Type-C terminal disposed at the first end.

In some examples, the connecting pole piece includes a composite pole piece formed by stacking at least two metal pole pieces, and the composite pole piece includes a positive composite pole piece and a negative composite pole piece that are opposite to each other at the second end.

In some examples, the battery pack further includes multiple signal terminals adjacent to each other at the second end.

In some examples, a battery pack for a power tool includes a battery housing; a single cell disposed in the battery housing; and a battery energy transmission terminal including a connecting pole piece electrically connected to the cell and electrically connectable to the power tool to output electrical energy. Vents are disposed on at least the end surfaces of a first end and a second end of the battery housing in a length direction, respectively to form the axial airflow from the first end to the second end.

In some examples, an airflow guiding channel in the same direction as the length direction of the cell is formed inside the battery housing to guide the airflow entering from the first end or the second end to flow through the surface of the cell.

In some examples, the battery energy transmission terminal includes a composite pole piece formed by stacking at least two metal pole pieces, the composite pole piece has a main region overlapping the cell in the length direction of the battery pack, and the airflow guiding channel is adjacent to the main regions of the composite pole piece.

In some examples, the airflow guiding channel is defined by ribs on the battery housing.

In some examples, the battery pack further includes a circuit board disposed at the first end or the second end; and a vent is disposed on the circuit board.

In some examples, the thermal conductivity of the battery housing is greater than or equal to 1.1 W/(m·K).

In some examples, a battery pack for a power tool includes a battery housing; a single cell disposed in the battery housing; and a battery energy transmission terminal, an end of which is connected to the cell and the other end of which is connected to an external electrical device to transmit electrical energy. The outer contour dimension of the battery housing is fixed and configured to be a standard dimension, and the interior of the battery housing is provided with an adjustable support structure or designed with different internal dimensions to form accommodation spaces for accommodating at least two cells of different dimensions.

In some examples, the adjustable support structure includes detachable cell holders of at least two dimensions, and the cell holders of different dimensions are mounted to adapt to the cells of different models.

In some examples, the adjustable support structure includes a slidable partition, and the slidable partition slides to different mounting positions to form accommodation spaces for accommodating cells of different models in the battery housing.

In some examples, the adjustable support structure includes detachable filling devices, and the filling devices of different dimensions are inserted to form accommodation spaces for accommodating cells of different models in the battery housing.

In some examples, the adjustable support structure includes an elastic telescopic structure formed by at least part of the inner wall of the battery housing, cells of different models are disposed behind the battery housing, and the elastic telescopic structure is compressed to generate different compression forces.

In some examples, the adjustable support structure may be a combination of the preceding structures.

The present application has the benefits below. The composite pole piece formed by stacking two metal pole pieces is adopted for a single-cell battery pack so that the overcurrent capability of the single-cell battery pack can be enhanced. In this case, the single-cell battery pack has a higher continuous power density, a higher energy density, and a better performance.

### BRIEF DESCRIPTION OF DRAWINGS

FIG. 1 is a schematic view of a battery pack platform according to an example.
FIG. 2 is a schematic view of a battery pack according to an example.
FIG. 3 is a schematic view of an internal cell of the battery pack in FIG. 2.
FIG. 4 is a schematic view of a sliding connection groove of the battery pack in FIG. 2.
FIG. 5 is a schematic diagram of a control circuit for charging a battery pack via a battery USB terminal according to an example.
FIG. 6 is a schematic diagram of a control circuit for discharging a battery pack via a battery USB terminal according to an example.
FIG. 7 is a schematic view of a power tool according to an example.
FIG. 8 is a schematic view of a battery assembly device including three coupling portions according to an example.
FIG. 9 is a schematic view of a battery assembly device including five coupling portions according to an example.
FIG. 10 is a schematic view of a battery assembly device including a first battery fixing member according to an example.
FIG. 11 is a schematic view of the first battery fixing member in FIG. 10.
FIG. 12 is a schematic view of a battery assembly device including second battery fixing members according to an example.
FIG. 13 is a schematic view of the second battery fixing members in FIG. 12.
FIG. 14 is a schematic view of a battery pack that mates with a second battery fixing member according to an example.
FIG. 15 is a circuit diagram of a battery management module of a battery assembly device according to an example.
FIG. 16 is a schematic view of a first power supply device according to an example.
FIG. 17 is a schematic view of another first power supply device according to an example.
FIG. 18 is a schematic view of a second power supply device according to an example.
FIG. 19 is a schematic view illustrating that battery packs are mounted on a second power supply device according to an example.
FIG. 20 is a schematic view of a power tool including a battery mounting portion according to an example.
FIG. 21 is a schematic view of a power tool including two battery mounting portions according to an example.
FIG. 22 is a schematic view of a power tool including two parallel battery mounting portions according to an example.
FIG. 23 is a schematic view illustrating that battery packs in FIG. 22 are mounted on two battery mounting portions.
FIG. 24 is an exploded view of a power tool including a waterproof battery mounting portion according to an example.
FIG. 25 is a schematic view of the power tool in FIG. 24 after combination and sealing.
FIG. 26 is a circuit diagram of a balanced charging and discharging system of a battery assembly device according to an example.
FIG. 27 is a flowchart illustrating that a control module controls a working state of an equalization module according to an example.
FIG. 28 is a schematic diagram illustrating the connection between multiple sub-equalization modules and a battery pack according to an example.
FIG. 29 is a schematic diagram illustrating the connection of capacitors, transistors, and a magnetic element included in each sub-equalization module in FIG. 28.
FIG. 30A is a schematic diagram of the time consumed by the first solution corresponding to step S273a in FIG. 27.
FIG. 30B is a schematic diagram of the time consumed by the second solution corresponding to step S273b in FIG. 27.
FIG. 31 is a schematic view illustrating the connection of two circuit boards included in a circuit board assembly of a battery assembly device according to an example.
FIG. 32 is another schematic view illustrating the connection of two circuit boards included in a circuit board assembly of a battery assembly device according to an example.
FIG. 33 is a schematic view of a power supply device including multiple temperature acquisition devices according to an example.
FIG. 34 is a schematic view illustrating the specific structure of the temperature acquisition device in FIG. 33.
FIG. 35 is a schematic view of a battery pack including a temperature detection device according to an example.
FIG. 36 is a schematic diagram illustrating that a controller of a power supply device is electrically connected to multiple temperature acquisition devices according to an example.
FIG. 37 is a flowchart illustrating that a controller performs temperature protection on multiple battery packs according to an example.
FIG. 38 is a schematic diagram illustrating that a controller of a power supply device is electrically connected to a temperature simulation device according to an example.
FIG. 39 is a schematic view illustrating the comparison between the length of a power supply device and the length of a battery pack according to an example.
FIG. 40 is a schematic view of a power supply device including five coupling portions according to an example.
FIG. 41 is a schematic view of a power supply device including three coupling portions according to an example.
FIG. 42 is a schematic view illustrating another accommodation manner of three coupling portions included in a power supply device according to an example.
FIG. 43 is a schematic view illustrating that a temperature detection device is connected to a shock absorber according to an example.
FIG. 44 is a schematic view of a power supply device including a third battery fixing member according to an example.
FIG. 45 is a schematic view of the third battery fixing member in FIG. 44 in a closed state.
FIG. 46 is a side sectional view of the third battery fixing member in FIG. 44.
FIG. 47 is an internal perspective view of the third battery fixing member in FIG. 44.
FIG. 48 is a perspective view of a power supply device including a light display structure according to an example.
FIG. 49 is a front view illustrating that the power supply device in FIG. 48 includes the light display structure.
FIG. 50 is a perspective view of a battery pack including a composite pole piece according to an example.
FIG. 51 is a perspective view of the battery pack in FIG. 50 from another perspective.
FIG. 52 is a view illustrating the internal structures of the battery pack in FIG. 50 inside which a cell of a larger dimension is provided.
FIG. 53 is a view illustrating the internal structures of the battery pack in FIG. 50 inside which a cell of a smaller dimension and an adjustable support structure are provided.
FIG. 54 is a simplified schematic view of an uncoiled and unfolded full-tab battery cell according to an example.
FIG. 55 is a perspective view illustrating that a circuit board and a battery energy transmission terminal are included inside the battery pack in FIG. 50.
FIG. 56 is a perspective view of the interior of the battery pack in FIG. 55 from another perspective.
FIG. 57 is a sectional view of a cell in FIG. 55.
FIG. 58 is a perspective view illustrating that a battery energy transmission terminal is included inside the battery pack in FIG. 55.
FIG. 59A is a perspective view of a positive composite pole piece according to an example.
FIG. 59B is a perspective view of the positive composite pole piece in FIG. 59A from another perspective.
FIG. 59C is a perspective view of a negative composite pole piece according to an example.
FIG. 60 is a sectional view of a second metal pole piece in FIG. 59A or 59C.
FIG. 61 is a schematic view illustrating that a battery pack is mounted into a power tool according to an example.
FIG. 62 is a schematic view illustrating that a battery pack is mounted into a power tool including a transparent window according to an example.
FIG. 63 is a schematic view illustrating that a battery pack in which a light display device is located at a first end of a battery housing in a length direction is mounted into a power tool according to an example.
FIG. 64A is a perspective view of a battery pack in which a light display device is located at a first end of a battery housing in a length direction according to an example.
FIG. 64B is a view illustrating the internal structures of the battery pack in FIG. 64A.
FIG. 65A is a perspective view of a battery pack in which two circular vents are provided on an end surface of a first end of a battery housing in a length direction according to an example.
FIG. 65B is a perspective view of a battery pack in which two circular vents are provided on an end surface of a second end of a battery housing in a length direction corresponding to FIG. 65A.
FIG. 65C is a perspective view of a battery pack in which two rectangular vents are provided on an end surface of a first end of a battery housing in a length direction according to an example.
FIG. 65D is a perspective view of a battery pack in which two rectangular vents are provided on an end surface of a second end of a battery housing in a length direction corresponding to FIG. 65C.
FIG. 65E is a view illustrating the internal structures of the battery pack corresponding to FIGS. 65C and 65D.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

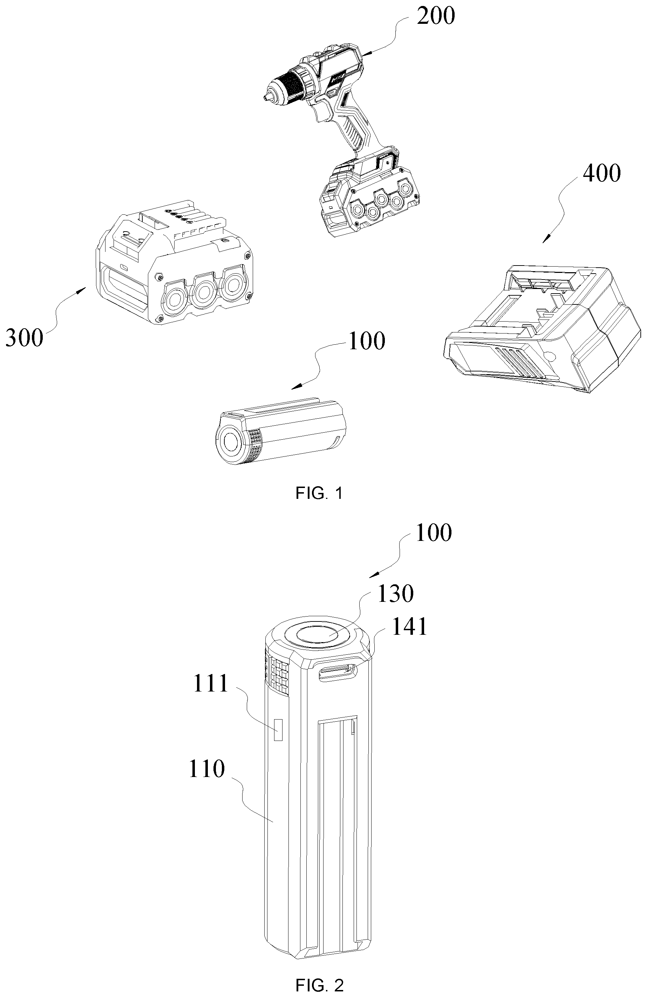

As shown in FIG. 1, a battery pack platform includes a battery pack 100, a power tool 200, a battery assembly device 300, and a power supply device 400. In FIG. 1, the case where the power tool 200 is an electric drill is used as an example for a specific description. Multiple power tools 200 may have different rated voltages, and each of the multiple power tools 200 with different rated voltages is powered by the battery pack 100 or the battery assembly device 300. The battery pack 100 and the battery assembly device 300 have different rated voltages, and multiple battery assembly devices 300 with different rated voltages exist. The battery assembly device 300 can be coupled with multiple battery packs 100 so that the battery assembly devices 300 with different rated voltages are formed, thereby supplying power to the power tools 200 with different rated voltages. Multiple power supply devices 400 have different rated voltages and charge the battery assembly devices 300 or the battery packs 100 with different rated voltages, respectively.

In some examples, the specific type of the power tool 200 is not limited in the present application. Optionally, the power tool 200 may be a handheld power tool, such as a drill, a hedge trimmer, or a sander. Alternatively, the power tool 200 may be a table tool, such as a table saw or a miter saw. Alternatively, the power tool 200 may be a push power tool, such as a push mower or a push snow thrower. Alternatively, the power tool 200 may be a riding power tool, such as a riding mower, a riding vehicle, or an all-terrain vehicle. Alternatively, the power tool 200 may be a robotic tool, such as a robotic mower or a robotic snow thrower. In some examples, the power tool 200 may be an electric drill, an electric lamp, an electric vehicle, or the like. In some examples, the power tool 200 may be a garden tool, such as a hedge trimmer, a blower, a mower, or a chainsaw. Alternatively, the power tool 200 may be a decorating tool, such as a screwdriver, a nail gun, a circular saw, or a sander. In some examples, the power tool 200 may be a vegetation care tool, such as a string trimmer, a mower, a hedge trimmer, or a chainsaw. Alternatively, the power tool 200 may be a cleaning tool, such as a blower, a snow thrower, or a cleaning machine. Alternatively, the power tool 200 may be a drilling tool, such as a drill, a screwdriver, a wrench, or an electric hammer. Alternatively, the power tool 200 may be a sawing tool such as a reciprocating saw, a jigsaw, or a circular saw. Alternatively, the power tool 200 may be a table tool, such as a table saw, a miter saw, a metal cutter, or an electric router. Alternatively, the power tool 200 may be a sanding tool such as an angle grinder or a sander.

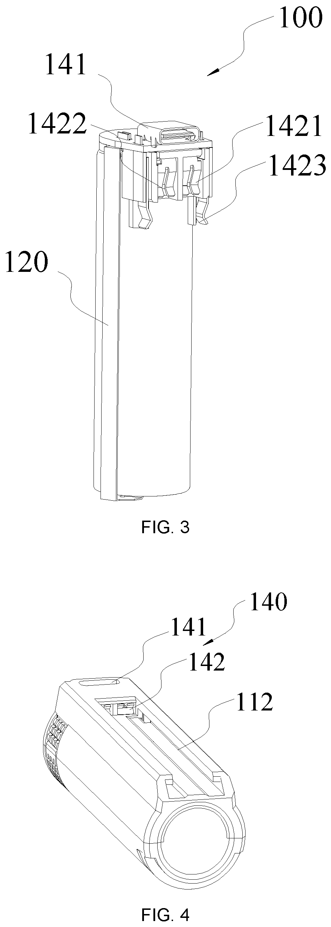

In some examples, as shown in FIGS. 2 and 3, the battery pack 100 includes a battery housing 110 and a single cell 120 inside the battery housing 110. Optionally, the battery housing 110 is a flame-retardant plastic housing so that when a problem occurs inside the battery pack 100 and sparks occur, the battery housing 110 can prevent the battery pack 100 from burning, thereby improving the safety of the battery pack 100. Additionally, the battery housing 110 may be made of any other material capable of preventing combustion, which is not limited in the present application. Optionally, the battery pack 100 is a full-tab battery. Optionally, the capacity of the battery pack 100 is 3 Ah.

An indicator light 130 is disposed at the end of the battery pack 100 and used for indicating the battery level of the battery pack 100. Further, a button 111 is provided on the battery housing 110, and the indicator light 130 is activated by pressing the button 111, thereby indicating the battery level of the battery pack 100. The button 111 may be disposed at any position on the battery housing 110, which is not limited in the present application. Optionally, the indicator light 130 includes two light indications: a green light and a red light. When the indicator light 130 is green, it indicates that the battery level of the battery pack 100 is greater than or equal to a sufficient power threshold. When the indicator light 130 is red, it indicates that the power of the battery pack 100 is less than the sufficient power threshold, and the power of the battery pack 100 is insufficient at this time. The sufficient power threshold may be 60% of the total battery capacity; or the sufficient power threshold may be 75% of the total battery capacity; or the sufficient power threshold may be 100% of the total battery capacity, that is, whenever the power of the battery pack 100 is consumed, the indicator light 130 is red. In addition, the sufficient power threshold may be any threshold set according to actual requirements, which is not limited in the present application. Optionally, the indicator light 130 includes three light indications: a green light, a yellow light, and a red light. When the indicator light 130 is green, it indicates that the battery pack 100 is fully charged. When the indicator light 130 is yellow, it indicates that the battery pack 100 has some power consumed but still has a higher battery level. When the indicator light 130 is red, it indicates that the battery pack 100 has consumed a significant amount of power and is running low on power. A determination threshold for determining whether the indicator light 130 is yellow or red is not limited in the present application, and the determination threshold may be determined according to actual requirements or empirical values. Further, in addition to the preceding two cases of light indications, the indicator light 130 may have any other light indications that can distinguish between the battery levels of the battery pack 100, which is not limited in the present application.

The battery pack 100 further includes a battery energy transmission terminal 140, and the battery energy transmission terminal 140 includes a battery USB terminal 141 and a battery electrical connection terminal 142. As shown in FIGS. 2 to 4, a USB interface is disposed on the side surface of the battery housing 110, that is, the battery USB terminal 141 is disposed in the USB interface, and the battery USB terminal 141 is disposed on the side surface of the battery housing 110. The battery USB terminal 141 is a bidirectional USB terminal. Optionally, the battery USB terminal 141 may be a Type-C terminal. As shown in FIG. 4, a sliding connection groove 112 is further provided on the side surface of the battery housing 110, and the battery electrical connection terminal 142 is disposed in the sliding connection groove 112. The sliding connection groove 112 may mate with the battery assembly device 300 to enable the battery pack 100 to be mounted into the battery assembly device 300 so that when the battery pack 100 is mounted into the battery assembly device 300, the battery electrical connection terminal 142 is coupled to the battery assembly device 300. As shown in FIG. 3, the battery electrical connection terminal 142 includes a positive pole piece 1421, a negative pole piece 1422, and a signal pole piece 1423 that are disposed inside the battery housing 110.

In some examples, the maximum continuous discharge current of the battery electrical connection terminal 142 is greater than or equal to 20 A. Optionally, the maximum continuous discharge current of the battery electrical connection terminal 142 is 25 A. Optionally, the maximum continuous discharge current of the battery electrical connection terminal 142 is 30 A. Optionally, the maximum continuous discharge current of the battery electrical connection terminal 142 is 32 A. Optionally, the maximum continuous discharge current of the battery electrical connection terminal 142 is 35 A. Optionally, the maximum continuous discharge current of the battery electrical connection terminal 142 is 40A. Optionally, the maximum continuous discharge current of the battery electrical connection terminal 142 is 45 A. In some examples, the maximum continuous charge current of the battery electrical connection terminal 142 is greater than or equal to 12 A. Optionally, the maximum continuous charge current of the battery electrical connection terminal 142 is 15 A. Optionally, the maximum continuous charge current of the battery electrical connection terminal 142 is 18 A. Optionally, the maximum continuous charge current of the battery electrical connection terminal 142 is 20 A. Optionally, the maximum continuous charge current of the battery electrical connection terminal 142 is 23 A.

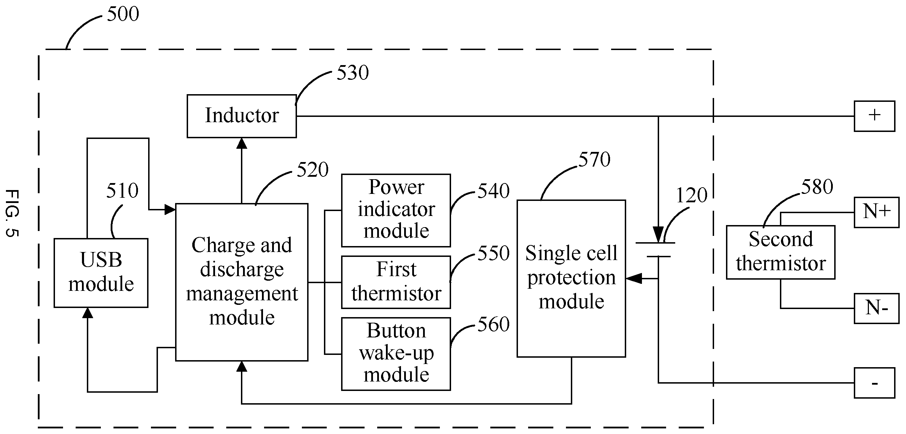

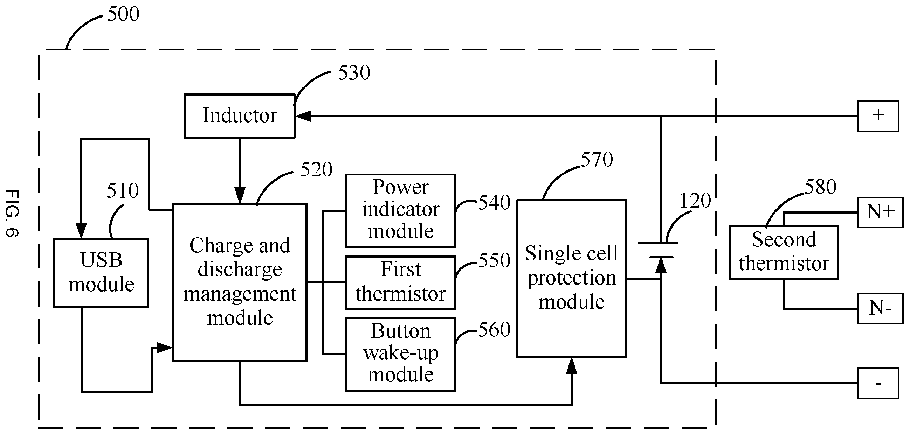

In some examples, since the battery USB terminal 141 is a bidirectional USB terminal, the battery pack 100 may be charged based on the battery USB terminal 141, and the battery pack 100 may be discharged externally based on the battery USB terminal 141. FIGS. 5 and 6 specifically show the schematic diagrams of a charging and discharging control circuit of the battery USB terminal 141 of the battery pack 100. FIG. 5 is a schematic diagram of a control circuit for charging the battery pack 100 via the battery USB terminal 141, and FIG. 6 is a schematic diagram of a control circuit for discharging the battery pack 100 via the battery USB terminal 141.

As shown in FIGS. 5 and 6, the control circuit 500 for charging/discharging the battery pack 100 via the battery USB terminal 141 includes a USB module 510, a charge and discharge management module 520, an inductor 530, a power indicator module 540, a first thermistor 550, a button wake-up module 560, a single cell protection module 570, and a cell 120. The USB module 510 corresponds to the battery USB terminal 141, and two ends of the USB module 510 are connected to the charge and discharge management module 520. The charge and discharge management module 520 is used for controlling the cell 120 to be charged via the USB module 510 or controlling the cell 120 to be discharged externally via the USB module 510. An end of the charge and discharge management module 520 is connected to the inductor 530, and the inductor 530 is used for controlling the boost and/or buck conversions inside the battery pack 100. The other end of the charge and discharge management module 520 is connected to the single cell protection module 570, and the single cell protection module 570 is connected to a negative electrode of the cell 120 to protect the cell 120, thereby performing secondary protection on the battery pack 100. For example, the battery pack 100 is protected from being overcharged. In addition, the charge and discharge management module 520 is connected to the power indicator module 540, the first thermistor 550, and the button wake-up module 560. The power indicator module 540 controls the indicator light 130 to display a corresponding color based on the battery level of the battery pack 100. The first thermistor 550 is used for performing temperature protection on the charge and discharge management module 520. The button wake-up module 560 matches the button 111. After the button 111 is pressed, the button wake-up module 560 is activated to activate the power indicator module 540 to control the indicator light 130.

As shown in FIG. 5, when the cell 120 is charged via the USB module 510, the current flows from an end of the USB module 510 to the charge and discharge management module 520, flows through the inductor 530 to the positive electrode of the cell 120, flows out from the negative electrode of the cell 120 to the single cell protection module 570, and flows through the charge and discharge management module 520 to the other end of the USB module 510 to form a charging circuit. Correspondingly, as shown in FIG. 6, when the cell 120 is discharged externally via the USB module 510, the current flows from the positive electrode of the cell 120 to the inductor 530, flows from the charge and discharge management module 520 to an end of the USB module 510, flows from the other end of the USB module 510 to the charge and discharge management module 520 and the single cell protection module 570 in sequence, and finally flows to the negative electrode of the cell 120 to form a discharging circuit.

In addition, as shown in FIGS. 5 and 6, when the battery pack 100 is applied to the power tool 200, two ends of the cell 120 are connected to the positive electrode and the negative electrode of the power tool 200, respectively. In this case, a second thermistor 580 is further provided, and the second thermistor 580 is connected to a signal terminal of the power tool 200 to perform temperature protection on the power tool 200.

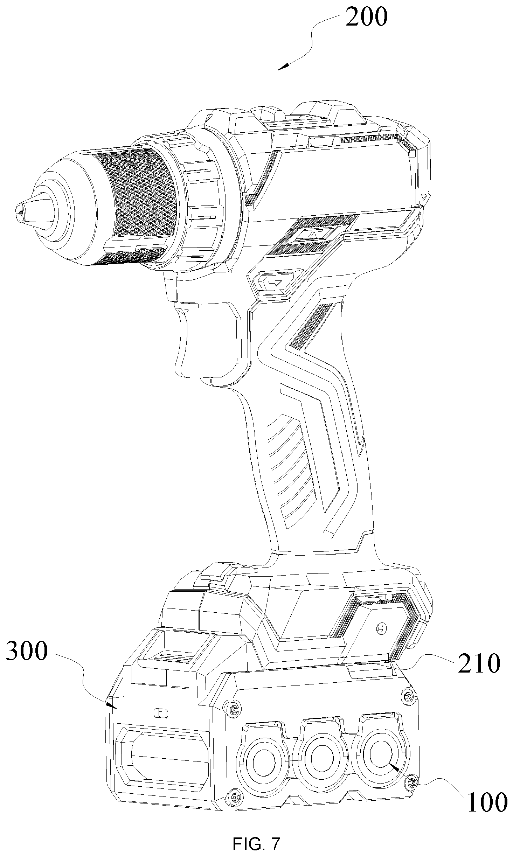

In some examples, as shown in FIG. 7, the power tool 200 includes a power interface 210. The battery assembly device 300 can be coupled to one or more battery packs 100. Specifically, one or more battery packs 100 can be detachably mounted to the battery assembly device 300, and the battery assembly device 300 is connected in series with multiple battery packs 100 so that the output voltage of the battery assembly device 300 is the sum of the rated voltages of the multiple battery packs 100. The battery assembly device 300 may be mounted to the power interface 210 of the power tool 200 and connected to the power interface 210. The battery assembly device 300 uses the electrical energy provided by the multiple battery packs 100 to supply power to the power tool 200. In addition, when the battery assembly device 300 does not need to supply power to the power tool 200, the battery packs 100 can be removed from the battery assembly device 300 to supply power to external electrical devices. Since the battery assembly device 300 is a combination of the multiple battery packs 100, the rated voltage of the battery assembly device 300 is greater than that of the battery pack 100. Therefore, the rated voltage of the external electrical device powered by the battery pack 100 is less than the rated voltage of the power tool 200 using the battery assembly device 300. Therefore, the battery pack 100 can supply power to the power tool 200 with a lower rated voltage, and multiple battery packs 100 can be coupled to the battery assembly device 300 to supply power to the power tool 200 with a higher rated voltage so that the battery packs 100 have better adaptability.

Optionally, the rated voltage of the battery pack 100 may be 4 V, and the rated voltage of the battery assembly device 300 may be 12 V so that the battery pack 100 may be removed from the battery assembly device 300 to supply power to an external electrical device with a rated voltage of 4 V, such as a 4 V handheld screwdriver. Therefore, the user purchases multiple battery packs 100; and based on the rated voltages of the power tools 200, the user couples the corresponding numbers of battery packs 100 to the battery assembly device 300 to supply power to the power tools 200 with different rated voltages, which is convenient, fast, and economical.

In some examples, the rated voltage of the battery pack 100 is 4 V, and at most three battery packs 100 can be coupled to the battery assembly device 300 so that the output voltage of the battery assembly device 300 may be 4 V, 8 V, or 12 V. In some examples, the rated voltage of the battery pack 100 is 4 V, and at most five battery packs 100 can be coupled to the battery assembly device 300 so that the output voltage of the battery assembly device 300 may be 4 V, 8 V, 12 V, 16 V, or 20 V. In addition, the rated voltage of the battery pack 100 may be another value, and the number of battery packs that can be coupled to the battery assembly device 300 may be another number, which is not limited in the present application. When the output voltage of the battery assembly device 300 is 12 V, the output power of the battery assembly device 300 is 60 W; and when the output voltage of the battery assembly device 300 is 20 V, the output power of the battery assembly device 300 is 100 W.

In some examples, the maximum continuous current of the battery assembly device 300 is greater than or equal to 20 A. Optionally, the maximum continuous current of the battery assembly device 300 is 30 A. Optionally, the maximum continuous current of the battery assembly device 300 is 40 A. Optionally, the maximum continuous current of the battery assembly device 300 is 60 A. Optionally, the maximum continuous current of the battery assembly device 300 is 80 A. Optionally, the maximum continuous current of the battery assembly device 300 is 90 A. Optionally, the maximum continuous current of the battery assembly device 300 is 100 A.

In some examples, the battery assembly device 300 includes multiple coupling portions 310 for coupling the battery packs 100. A guide rail 311 is disposed inside the coupling portion 310, and the guide rail 311 mates with the sliding connection groove 112 of the battery pack 100 so that the battery pack 100 can be inserted into the coupling portion 310. The number of coupling portions 310 is greater than or equal to two. Optionally, multiple coupling portions 310 may all be coupled to the battery packs 100 so that the battery assembly device 300 operates. Optionally, not all of the multiple coupling portions 310 are coupled to the battery packs 100 so that the battery assembly device 300 operates. That is, after at least one coupling portion 310 among the multiple coupling portions 310 is coupled to the battery pack 100, the battery assembly device 300 can operate.

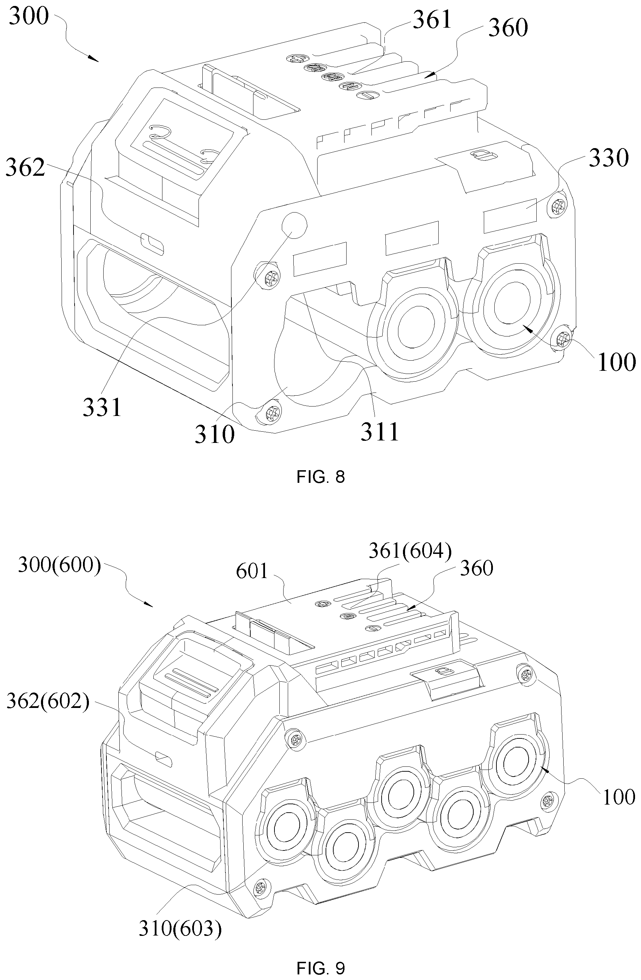

Optionally, as shown in FIG. 8, when the battery assembly device 300 includes three coupling portions 310, the three coupling portions 310 may be arranged in a straight line. Optionally, as shown in FIG. 9, when the battery assembly device 300 includes five coupling portions 310, the five coupling portions 310 may be arranged in a wavy pattern. Compared with a straight-line arrangement, the wavy arrangement can reduce the horizontal length of the battery assembly device 300, reduce the volume of the battery assembly device 300, and save material resources of the battery assembly device 300. In addition, the five coupling portions 310 may be arranged in a straight line, which is not limited in the present application.

The battery assembly device 300 further includes multiple battery fixing members 320. The battery fixing members 320 are disposed inside the battery assembly device 300. The battery fixing member 320 includes an elastic assembly 321, and the battery pack 100 can be inserted into and removed from the coupling portion 310 through the elastic assembly 321. The number of battery fixing members 320 is the same as the number of coupling portions 310. After the battery pack 100 is inserted and mounted into the coupling portion 310, the battery fixing member 320 can fix the battery pack 100 in the coupling portion 310 to prevent the battery pack 100 from sliding out of the coupling portion 310 or moving in the coupling portion 310.

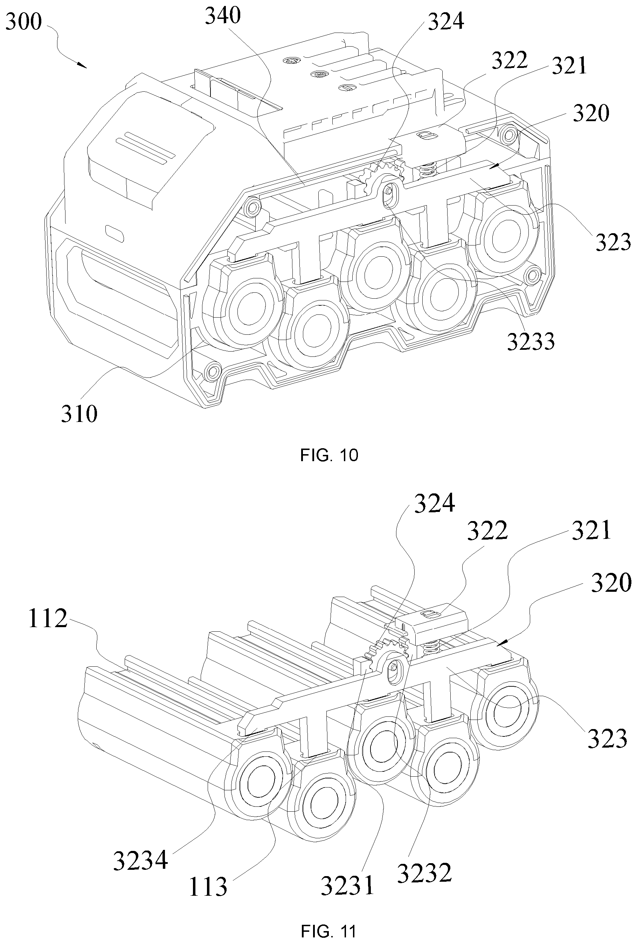

In some examples, as shown in FIGS. 10 and 11, the battery fixing member 320 includes the elastic assembly 321, a fixing button 322, a first fixing plate 323, and an adjustment mechanism 324. Optionally, the adjustment mechanism 324 is a gear, and the elastic assembly 321 is a spring. The elastic assembly 321 is connected to the fixing button 322, and both the elastic assembly 321 and the fixing button 322 are connected to the first fixing plate 323. A first adjustment plate 3231 and a second adjustment plate 3232 are disposed on the first fixing plate 323, are disposed at left and right ends of the adjustment mechanism 324, respectively, and mesh with the adjustment mechanism 324. The first fixing plate 323 further includes a hole 3233, and the hole 3233 mates with a protrusion of the adjustment mechanism 324. The first fixing plate 323 further includes multiple clamping members 3234 that mate with the battery packs 100, and the battery pack 100 is provided with an inserting portion 113 that mates with the clamping member 3234. Optionally, the insertion portion 113 may be the battery USB terminal 141. Optionally, the insertion portion 113 may be an independent structure, which is not limited in the present application. The clamping member 3234 may be in contact with the sliding connection groove 112 of the battery pack 100, and the portion of the clamping member 3234 and the portion of the sliding connection groove 112 that mate with each other are both inclined surfaces.

When the battery pack 100 is inserted into the coupling portion 310 of the battery assembly device 300, at the beginning, the clamping member 3234 is in contact with the sliding connection groove 112 of the battery pack 100. As the battery pack 100 is gradually pushed in, after passing through the mating inclined surfaces of the clamping member 3234 and the sliding connection groove 112, the battery housing 110 of the battery pack 100 abuts against the clamping member 3234 so that the first fixing plate 323 is pushed upward and the elastic assembly 321 is compressed. After the battery pack 100 is completely pushed into the coupling portion 310, the clamping member 3234 mates with the insertion portion 113 on the battery pack 100. In this case, the insertion portion 113 is engaged with the clamping member 3234, the first fixing plate 323 moves downward, and at the same time, the elastic assembly 321 applies a downward force to the first fixing plate 323 so that the clamping member 3234 can be better engaged in the insertion portion 113, and the battery fixing member 320 is in a locked state.

When the battery pack 100 needs to be pulled out from the coupling portion 310 of the battery assembly device 300, the fixing button 322 is pressed. Since the fixing button 322 is connected to the second adjustment plate 3232, the second adjustment plate 3232 moves downward to drive the adjustment mechanism 324 meshing with the second adjustment plate 3232 to rotate rightward so that the adjustment mechanism 324 drives the first adjustment plate 3231 meshing with the adjustment mechanism 324 to move upward, the first fixing plate 323 can move upward, the clamping member 3234 is disengaged from the insertion portion 113, and the battery pack 100 is no longer in contact with the first fixing plate 323 and can be pulled out from the coupling portion 310. In this case, the battery fixing member 320 is in an unlocked state. After the battery pack 100 is pulled out, the fixing button 322 is released, and the elastic assembly 321 recovers from being compressed to the original state, thereby driving the first fixing plate 323 to move downward and return to the original position.

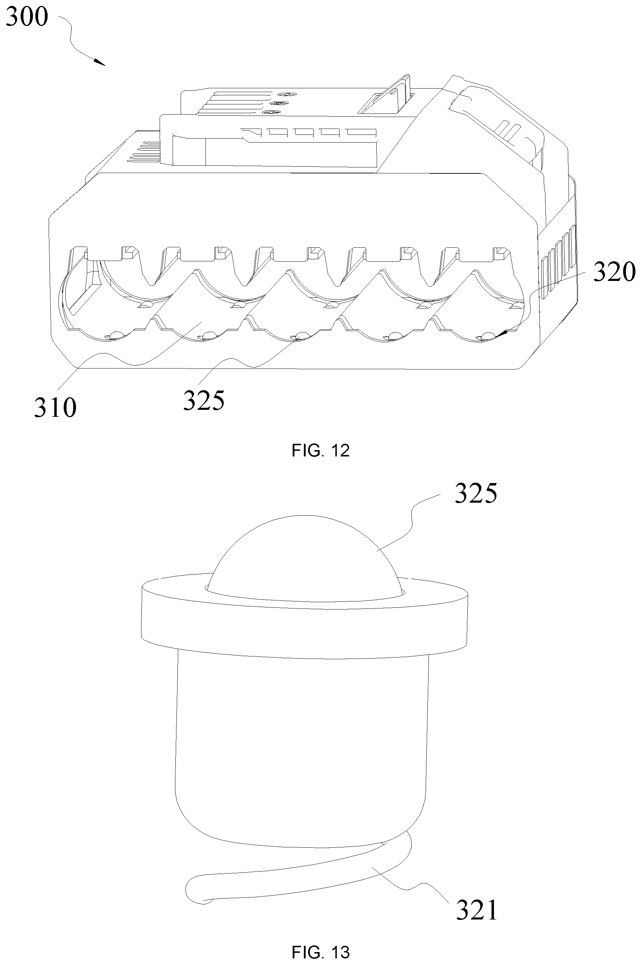

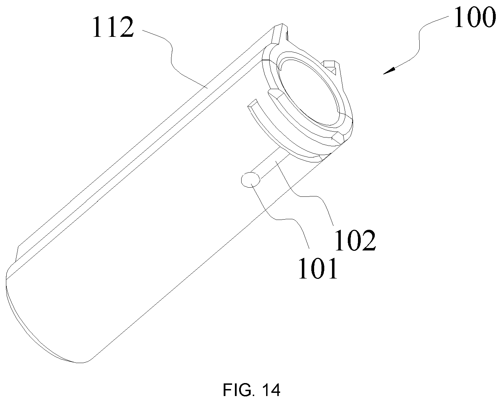

In some examples, as shown in FIGS. 12 and 13, the battery fixing member 320 includes the elastic assembly 321 and a positioning bead 325 that are connected. Optionally, the elastic assembly 321 and the positioning bead 325 are integrally formed. Optionally, the elastic assembly 321 and the positioning bead 325 are separately provided. The elastic assembly 321 and the positioning bead 325 are disposed at the bottom end of each coupling portion 310. As shown in FIG. 14, the battery pack 100 is provided with a ball groove 101 and a ball sliding groove 102 that mate with the positioning bead 325 and are disposed on the other side opposite to the sliding connection groove 112. When the battery pack 100 is inserted into the coupling portion 310, the positioning bead 325 mates with the ball sliding groove 102 to allow the insertion of the battery pack 100, until the positioning bead 325 mates with the ball groove 101 and is engaged in the ball groove 101. In this case, since the lower end of the positioning bead 325 is connected to the elastic assembly 321, the elastic assembly 321 applies an upward force so that the battery pack 100 can be better fixed in the coupling portion 310. In addition, the upper end of the coupling portion 310 may be made of a frictional material, such as rubber, thereby further enhancing the fixing strength of the battery pack 100 in the coupling portion 310. When the battery pack 100 is pulled out from the coupling portion 310, a force greater than the elastic force of the elastic assembly 321 is applied so that the positioning bead 325 can be disengaged from the ball groove 101 and then move along the ball sliding groove 102. In this manner, the battery pack 100 can be conveniently and quickly pulled out from the coupling portion 310.

In some examples, the battery assembly device 300 includes at least a battery level display 330. When multiple battery packs 100 are inserted into the coupling portions 310, the total battery level of the multiple battery packs 100 can be displayed through the battery level display 330. Alternatively, the number of battery level displays 330 is the same as the number of battery packs 100, and when each battery pack 100 is inserted into the coupling portion 310, multiple battery level displays 330 can display the battery levels of the battery packs 100, respectively. The case where the multiple battery level displays 330 display the battery levels of the battery packs 100, respectively is used as an example for a specific description in the present application. As shown in FIG. 8, the battery assembly device 300 includes multiple battery level displays 330, the number of battery level displays 330 is the same as the number of coupling portions 310, and each battery level display 330 is configured to display battery level information of one battery pack 100. The multiple battery level displays 330 are in one-to-one correspondence with the multiple coupling portions 310. After the battery pack 100 is inserted into the coupling portion 310, the corresponding battery level display 330 can display the battery level. Optionally, to facilitate the user observing the battery level information of the battery pack 100, the battery level display 330 may be disposed on the same side as the opening of the coupling portion 310 so that the user can directly observe the battery level of the battery pack 100 after inserting the battery pack 100 into the coupling portion 310.

In some examples, the battery assembly device 300 is further provided with a battery level display button 331 matching the battery level displays 330. After the button 331 is pressed, the battery level display 330 corresponding to the coupling portion 310 into which the battery pack 100 is inserted displays the battery level of the battery pack 100. Optionally, the battery level display 330 is configured to be a three-color light display, and the battery level information of the battery pack 100 is indicated by different light colors. Optionally, the battery level display 330 may be a two-color light display, a four-color light display, or a light display with any other number of colors to indicate the battery level information of the battery pack 100, which is not limited in the present application.

In some examples, the battery assembly device 300 further includes a control board 340 disposed inside the battery assembly device 300 and above the coupling portions 310. After the battery packs 100 are coupled to the coupling portions 310, the control board 340 may be connected to the positive pole pieces 1421, the negative pole pieces 1422, and the signal pole pieces 1423 of the multiple battery packs 100 to control the multiple battery packs 100.

In some examples, the battery assembly device 300 includes a power management module 350 for managing the charging and discharging of the multiple battery packs 100 or managing the electrical energy transmission of a device power transmission terminal 360 of the battery assembly device 300. The device power transmission terminal 360 includes a device electrical connection terminal 361 and a device USB terminal 362. The device electrical connection terminal 361 is used for coupling the power interface 210 of the power tool 200. Specifically, when the battery assembly device 300 is mounted to the power interface 210 of the power tool 200, the electrical connection between the battery assembly device 300 and the power tool 200 is achieved through the coupling of the device electrical connection terminal 361 and the power interface 210. The device USB terminal 362 is a bidirectional USB terminal. The battery assembly device 300 is charged via the device USB terminal 362, and the battery assembly device 300 may be discharged externally via the device USB terminal 362. That is, when the battery assembly device 300 is mounted to the power interface 210 of the power tool 200, the battery assembly device 300 may be charged via the device USB terminal 362 or may be discharged to other external power tools via the device USB terminal 362. Optionally, the device USB terminal 362 may be a Type-C terminal.

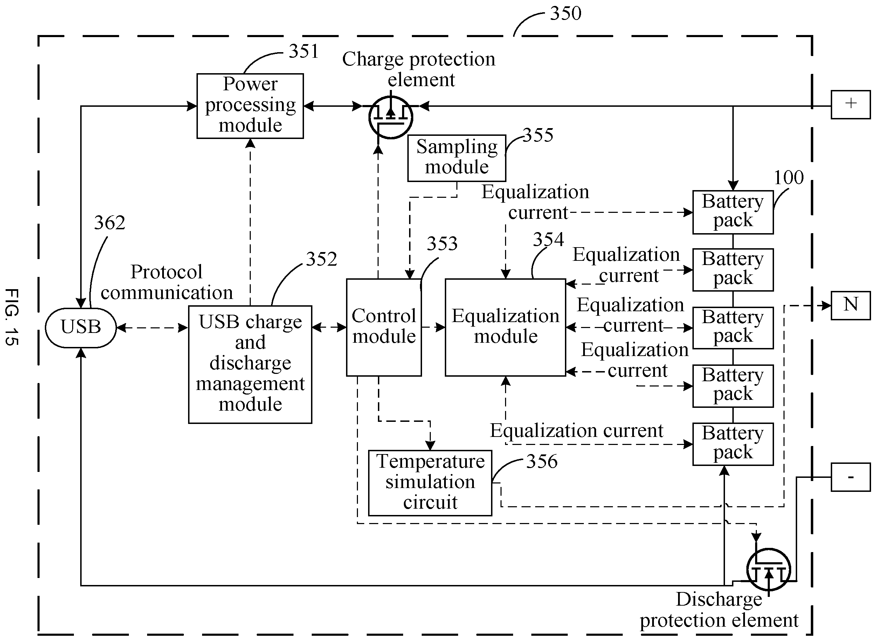

In some examples, as shown in FIG. 15, the power management module 350 includes a power processing module 351, a USB charge and discharge management module 352, a control module 353, an equalization module 354, a sampling module 355, and a temperature simulation circuit 356. The power management module 350 further includes a charge protection element and a discharge protection element. The charge protection element is used for providing protection when the battery packs 100 are charged, and the discharge protection element is used for providing protection when the battery packs 100 are discharged externally through the battery assembly device 300. Specifically, the charge protection element and the discharge protection element are used for performing charge protection and discharge protection when the device electrical connection terminal 361 is coupled to the power interface 210 of the power tool 200, thereby preventing overcharging, overdischarging, charging overcurrent, and discharging overcurrent of the battery packs 100. Optionally, the charge protection element may be a charge protection metal-oxide-semiconductor (MOS), and the discharge protection element may be a discharge protection MOS.

An end of the device USB terminal 362 is electrically connected to the power processing module 351, the charge protection element, and the battery pack 100, and the other end of the device USB terminal 362 is directly electrically connected to the battery pack 100, thereby forming a charging and discharging circuit between the device USB terminal 362 and the battery pack 100. In addition, when the battery assembly device 300 is electrically connected to the power tool 200, an end of the battery pack 100 is electrically connected to the positive electrode of the power tool 200, the other end of the battery pack 100 is electrically connected to the negative electrode of the power tool 200, and the discharge protection element is disposed on the connection path where the battery pack 100 is electrically connected to the negative electrode of the power tool 200 so that discharge safety is ensured when the battery pack 100 supplies power to the power tool 200 through the battery assembly device 300. Since the battery assembly device 300 is coupled to multiple battery packs 100, the battery packs 100 electrically connected to the positive and negative electrodes of the power tool 200 are different battery packs 100, and the different battery packs 100 are connected to each other. Optionally, as shown in FIG. 15, the case where five battery packs 100 are provided is used as an example for a specific description. In addition, the number of battery packs 100 may be any number greater than two, which is not limited in the present application.

The device USB terminal 362 is electrically connected to the USB charge and discharge management module 352, the device USB terminal 362 and the USB charge and discharge management module 352 communicate with each other through a corresponding communication protocol, and the USB charge and discharge management module 352 transmits a charging or discharging signal to the device USB terminal 362. The USB charge and discharge management module 352 is separately electrically connected to the power processing module 351 and the control module 353. The power processing module 351 is used for controlling the boost or buck of the battery packs 100 or the direct current (DC)-AC conversion or the DC-DC conversion of the battery packs 100 when the battery assembly device 300 is connected to the power tool 200.

The control module 353 is used for controlling the battery packs 100 inside the battery assembly device 300 to be charged via the device USB terminal 362 or controlling the battery packs 100 to be discharged externally via the device USB terminal 362 on the battery assembly device 300, thereby transmitting corresponding control signals to the USB charge and discharge management module 352. The control module 353 is electrically connected to the sampling module 355 and the temperature simulation circuit 356 separately, and the sampling module 355 collects information such as the current, voltage, and temperature of the battery packs 100 and transmits the information to the control module 353. Since the temperature of the battery packs 100 cannot be directly acquired by the sensor when the battery packs 100 are coupled into the battery assembly device 300, the temperature simulation circuit 356 is provided. The temperature simulation circuit 356 acquires the temperature information of the battery packs 100 acquired by the sampling module 355 from the control module 353 and is connected to the thermistor N to perform temperature protection on the battery packs 100.

The control module 353 is electrically connected to the charge protection element and the discharge protection element so that when controlling the battery packs 100 inside the battery assembly device 300 to be charged or discharged, the control module 353 can activate the corresponding protection element to perform a protection operation.

The control module 353 is further electrically connected to the equalization module 354, the equalization module 354 is electrically connected to the multiple battery packs 100 inside the battery assembly device 300 separately, the control module 353 actively controls the charge and discharge equalization between the multiple battery packs 100 based on the equalization module 354, and the equalization module 354 controls the battery packs 100 to be charged and discharged based on the equalization current. Optionally, among the multiple battery packs 100, when the battery level difference between two adjacent battery packs 100 is relatively large, the equalization between the adjacent battery packs may be achieved in an equalization method, and the current and voltage equalization between any two adjacent battery packs 100 may be achieved via cells 120, magnetic core elements, and transistors through buck, boost, and buck-boost topologies. Optionally, among the multiple battery packs 100, when the battery level difference between two non-adjacent battery packs 100 is relatively large, the equalization between the non-adjacent battery packs may be achieved in an equalization method, and the current and voltage equalization between any two battery packs 100, regardless of how many other battery packs are in between, may be achieved via cells 120, magnetic core elements, and transistors through buck, boost, and buck-boost topologies. In this case, the equalized energy is only exchanged between two equalized battery packs 100 and does not pass through the intermediate battery packs 100. Optionally, the equalization method may be a charging-while-equalizing approach. During the charging process, the equalized cells 120, the magnetic core elements, and the transistors work synchronously to perform current and voltage equalization through buck, boost, and buck-boost topologies so that all the battery packs 100 can be fully charged simultaneously. Optionally, the equalization method may be a discharging-while-equalizing approach. During the discharging process, the equalized cells 120, the magnetic core elements, and the transistors work synchronously to perform current and voltage equalization through buck, boost, and buck-boost topologies so that all the battery packs 100 can be fully discharged simultaneously. Optionally, the equalization method may be single-channel equalization, where at the same moment, one battery pack 100 is only equalized by another battery pack 100 or equalizes another battery pack 100. Optionally, the equalization method may be dual-channel equalization, where at the same moment, one battery pack 100 may be equalized by two adjacent battery packs 100 simultaneously or may equalize two adjacent battery packs 100. Optionally, the equalization method may be pre-equalization, that is, when the battery pack 100 to be equalized has an abnormality, other battery packs 100 are equalized first while waiting for the battery pack 100 to recover, thereby shortening the total equalization time. In addition, other equalization methods may be adopted, which are not limited in the present application.

In some examples, the power supply device 400 includes a first power supply device 410, the first power supply device 410 includes a power supply mounting portion 411, and the power supply mounting portion 411 may be connected to the battery assembly device 300, thereby charging one or more battery packs 100 in the battery assembly device 300. The specific process of charging the multiple battery packs 100 in the battery assembly device 300 is described above in detail in the present application, and the details are not repeated here. In addition, the first power supply device 410 may charge any high-voltage battery pack, multiple cells are provided in the high-voltage battery pack, and the first power supply device 410 specifically charges the multiple cells provided in the high-voltage battery pack.

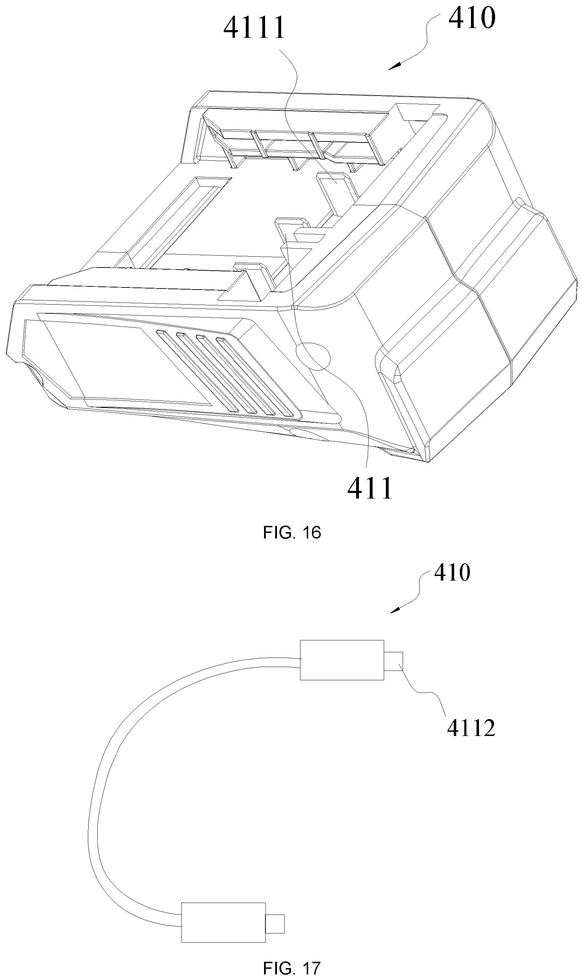

In some examples, when the numbers of coupling portions 310 included in the battery assembly device 300 are different, that is, when the maximum output voltages of the battery assembly device 300 are different, the first power supply device 410 matching the maximum output voltage is selected for connection and charging. Optionally, the first power supply device 410 may be a charger as shown in FIG. 16. Optionally, the first power supply device 410 may also be a charger as shown in FIG. 17.

In some examples, the power supply mounting portion 411 of the first power supply device 410 includes an electrical connection terminal portion 4111 and/or a USB terminal portion 4112. Optionally, the USB terminal portion 4112 may be a Type-C terminal. Optionally, as shown in FIG. 16, the power supply mounting portion 411 of the first power supply device 410 includes only the electrical connection terminal portion 4111. In this case, when the battery assembly device 300 is connected to the first power supply device 410, the electrical connection terminal portion 4111 is electrically coupled to the device electrical connection terminal 361, and the first power supply device 410 charges the battery packs 100 inside the battery assembly device 300 through the electrical connection terminal portion 4111. Optionally, as shown in FIG. 17, the power supply mounting portion 411 of the first power supply device 410 includes only the USB terminal portion 4112. In this case, when the battery assembly device 300 is connected to the first power supply device 410, the USB terminal portion 4112 is electrically coupled to the device USB terminal 362, and the first power supply device 410 charges the battery packs 100 inside the battery assembly device 300 through the USB terminal portion 4112. In addition, when the first power supply device 410 includes both the electrical connection terminal portion 4111 and the USB terminal portion 4112, the electrical connection terminal portion 4111 may be electrically coupled to the device electrical connection terminal 361, or the USB terminal portion 4112 may be electrically coupled to the device USB terminal 362 according to requirements so that the first power supply device 410 can charge the battery packs 100 inside the battery assembly device 300 in two manners.

In some examples, the power supply device 400 includes a second power supply device 420, the second power supply device 420 includes multiple battery mounting portions 421, the multiple battery mounting portions 421 can be coupled to one or more battery packs 100 to charge the one or more battery packs 100, and the battery mounting portions 421 mate with the sliding connection grooves 112 of the battery packs 100 so that the battery packs 100 can be more stably mounted to the second power supply device 420. When one or more battery packs 100 are coupled to the second power supply device 420, specifically, the battery electrical connection terminals 142 of the one or more battery packs 100 are coupled to the battery mounting portions 421.

When multiple battery packs 100 are coupled to the second power supply device 420, two charging modes are included: a simultaneous charging mode and a non-simultaneous charging mode. In the simultaneous charging mode, the second power supply device 420 prioritizes charging the battery pack 100 with the lowest state of charge to reduce the difference in charge levels among the battery packs 100, and then the multiple battery packs 100 are charged synchronously so that the multiple battery packs 100 are fully charged simultaneously. In the non-simultaneous charging mode, the second power supply device 420 prioritizes charging the battery pack 100 with the highest state of charge to fully charge the battery pack 100 first so that when the user urgently needs to use the battery pack 100, the user can obtain the fully charged battery pack 100 in a shorter period. Therefore, the second power supply device can not only fully charge the battery packs 100 simultaneously but also quickly charge one battery pack 100.

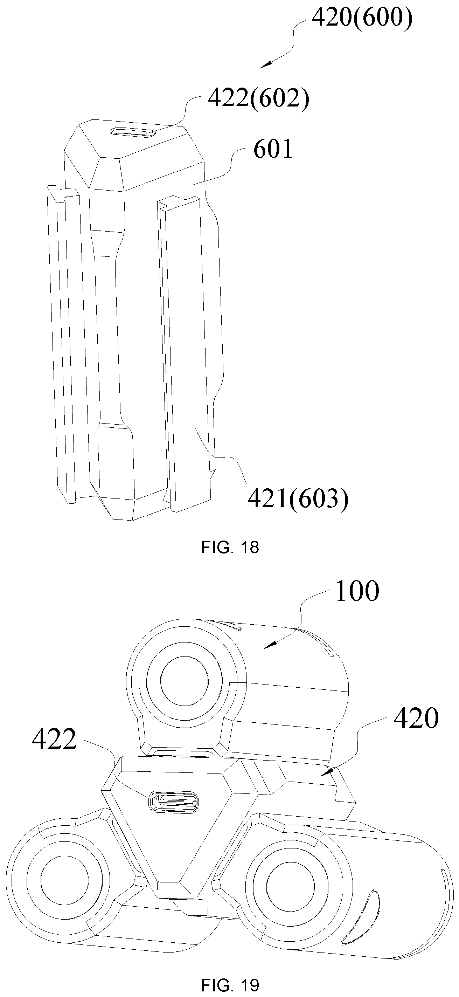

In some examples, as shown in FIGS. 18 and 19, the second power supply device 420 may include three battery mounting portions 421 for charging at most three battery packs 100 mounted to the second power supply device 420, and the entire second power supply device 420 has a triangular structure. Optionally, the second power supply device 420 can charge one battery pack 100 mounted to any battery mounting portion 421. Optionally, the second power supply device 420 can charge two battery packs 100 mounted to any two battery mounting portions 421. The battery mounting portions 421 are disposed on three side surfaces of the second power supply device 420 that are parallel to the mounting directions of the battery packs 100. In addition, the second power supply device 420 may have other shapes, which is not limited in the present application.

In some examples, the second power supply device 420 includes a second power supply device interface 422, and the second power supply device interface 422 is used for connecting an external charger to charge the battery packs 100 coupled to the second power supply device 420. As shown in FIGS. 18 and 19, the second power supply device interface 422 is disposed on the top of the second power supply device 420 so that the user can use the external charger for charging. Optionally, the second power supply device interface 422 is a bidirectional USB interface so that when the battery packs 100 are coupled to the second power supply device, the charger can charge the battery packs 100 via the second power supply device interface 422, or the battery packs 100 can be discharged externally via the second power supply device interface 422 to supply power to other electrical devices. The other electrical devices may be other household appliances or personal electrical devices other than the preceding power tool 200, such as a smartphone, a laptop, a mobile power supply, a soy milk maker, or a grinder.

In some examples, the battery pack 100 has the battery USB terminal 141, the battery assembly device 300 includes the device USB terminal 362, the power supply mounting portion 411 of the first power supply device 410 includes the USB terminal portion 4112, and the second power supply device interface 422 is a bidirectional USB interface, so the charger may be a power delivery (PD) charger with a universal USB interface, and the PD charger supports the PD charging protocol. In this manner, the PD charger can be electrically connected to the battery pack 100 to directly charge the battery pack 100; or the PD charger can be electrically connected to the battery assembly device 300 to charge the battery packs 100 in the battery assembly device 300; or the PD charger can be electrically connected to the first power supply device 410 or the second power supply device 420 to charge the battery packs 100 electrically coupled to the first power supply device 410 or the second power supply device 420. Therefore, only one PD charger is needed to achieve multiple methods for charging the battery pack 100, offering wide applicability and greater convenience.

When the battery pack 100 is directly coupled to the power tool 200 to supply power to the power tool, the battery electrical connection terminal 142 of the battery pack 100 is coupled to the power tool 200 to supply power to the power tool 200. Optionally, the power tool 200 may include one battery mounting portion 220 through which the battery pack 100 is mounted. Optionally, the power tool 200 may include multiple battery mounting portions 220 through which multiple battery packs 100 are mounted. When the battery pack 100 is mounted to the battery mounting portion 220, the battery pack 100 is detachably mounted to the battery mounting portion 220. Optionally, a button, a snap-fit structure, or other structures may be provided on the power tool 200 to enable the installation or removal of the battery pack 100. In addition, any other method that can achieve the installation or removal of the battery pack 100 in the battery mounting portion 220 is also provided, which is not limited in the present application.

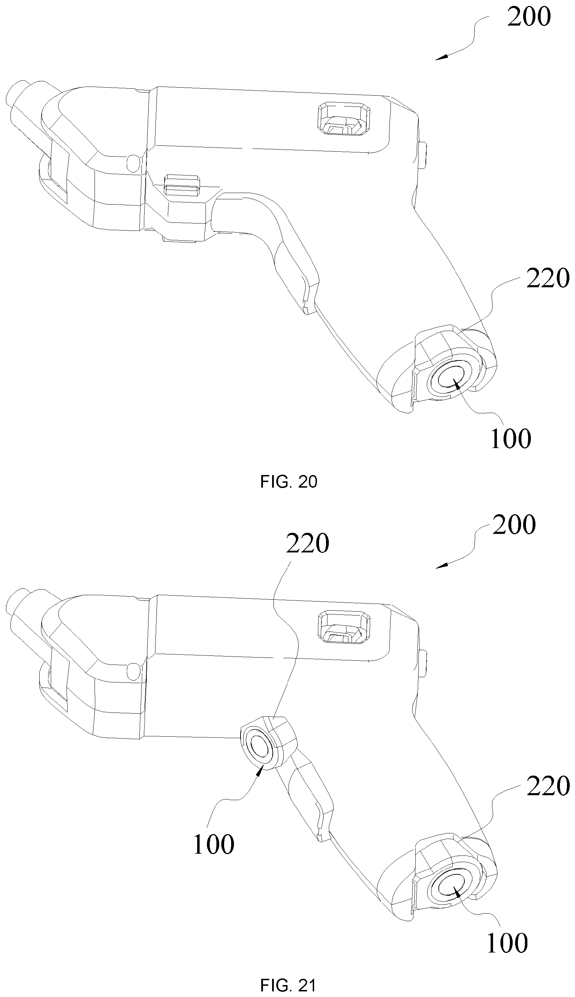

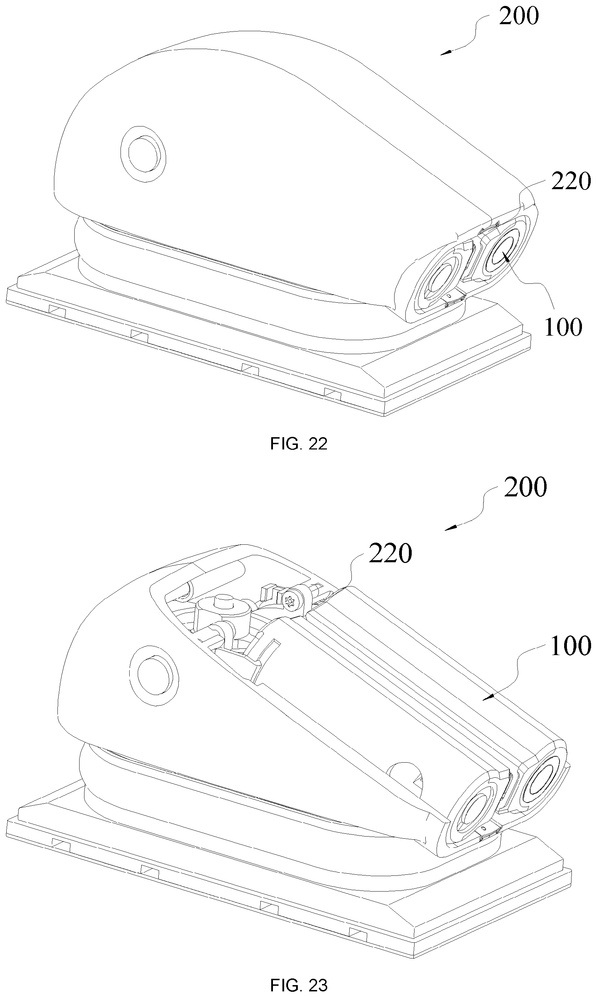

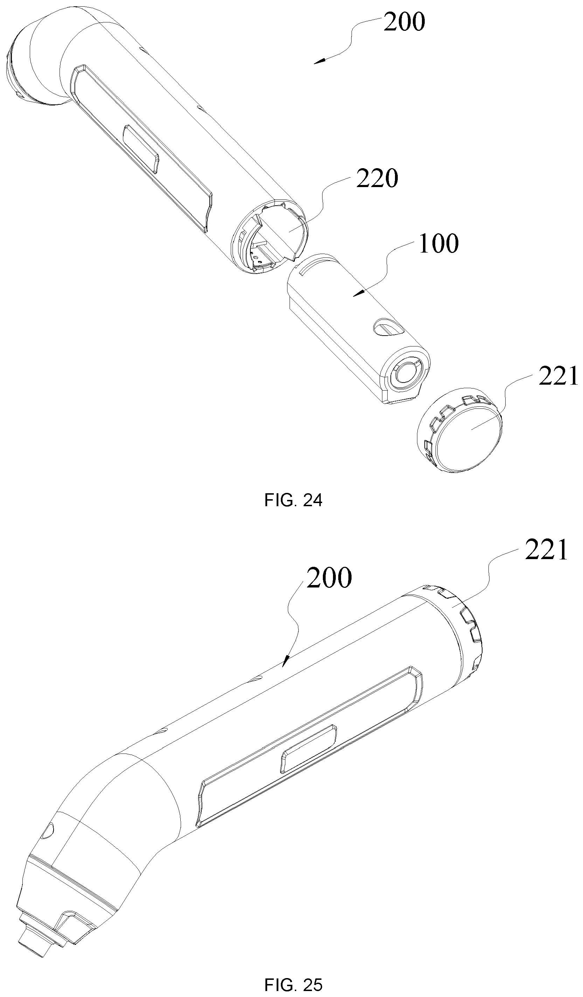

In some examples, as shown in FIG. 20, when the power tool 200 includes one battery mounting portion 220, the battery mounting portion 220 may be disposed at the handle of the power tool 200, and the battery pack 100 is mounted to the handle of the power tool 200. In some examples, when the power tool 200 includes multiple battery mounting portions, the multiple battery mounting portions are provided in different directions on the power tool. As shown in FIG. 21, when the power tool 200 includes two battery mounting portions 220, the two battery mounting portions 220 may be disposed at the handle and the switch of the power tool 200, respectively, and the two battery mounting portions 220 are provided in intersecting directions. As shown in FIGS. 22 and 23, when the power tool 200 includes two battery mounting portions 220, the two battery mounting portions 220 may be provided in the same direction, and the two battery mounting portions 220 are parallel to each other. That is, the included angle formed by the direction in which the two battery mounting portions 220 are provided and the horizontal plane of the power tool 200 along the front and rear direction is an included angle A. In some examples, as shown in FIGS. 24 and 25, when the power tool 200 is used in working conditions in which water exists, to ensure the waterproofness of the battery pack 100 mounted into the battery mounting portion 220, after the battery pack 100 is mounted into the battery mounting portion 220, a cover 221 matching the battery mounting portion 220 may be used. The cover 221 may be a rotary cover with threads to achieve sealing, or the cover 221 closely abuts against the end surface of the battery mounting portion 220 to achieve sealing. In addition, the power tool 200 may also include other numbers of battery mounting portions 220, which is not limited in the present application.

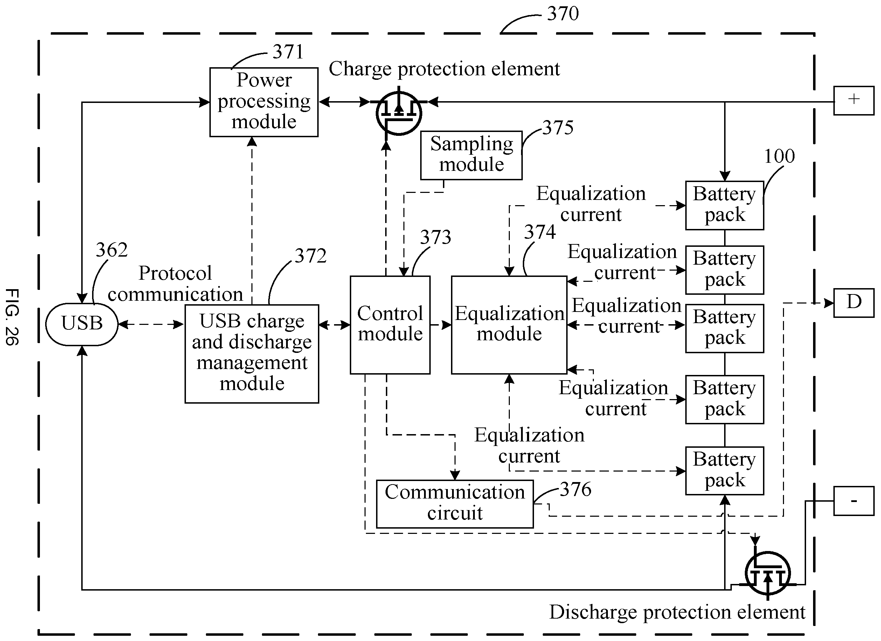

In some examples, the battery assembly device 300 includes a balanced charging and discharging system 370 for managing the charging and discharging of the multiple battery packs 100. As shown in FIG. 26, the balanced charging and discharging system 370 includes the device USB terminal 362, a power processing module 371, a USB charge and discharge management module 372, a control module 373, an equalization module 374, a sampling module 375, and a communication circuit 376. The control module 373 corresponds to a controller 373. In the following text of the present application, the control module 373 is used to represent the controller 373 for a specific description. The USB charge and discharge management module 372 may also be referred to as the charge and discharge management module 372. The USB charge and discharge management module 372 is used for a specific description in the following text of the present application.

The device USB terminal 362 is a bidirectional USB terminal. The battery assembly device 300 is charged via the device USB terminal 362, and the battery assembly device 300 may be discharged externally via the device USB terminal 362. That is, the device USB terminal 362 is a plug-in charging terminal that can be directly connected to an external charger, and the device USB terminal 362 may also be a plug-in discharging terminal that can be directly connected to an external electrical device. Optionally, the device USB terminal 362 may be a Type-C terminal. The balanced charging and discharging system 370 further includes a charge protection element and a discharge protection element. The charge protection element is used for providing protection when the battery packs 100 are charged, and the discharge protection element is used for providing protection when the battery packs 100 are discharged externally through the battery assembly device 300. Specifically, the charge protection element and the discharge protection element are used for performing charge protection and discharge protection when the device electrical connection terminal 361 is coupled to the power interface 210 of the power tool 200, thereby preventing overcharging, overdischarging, charging overcurrent, and discharging overcurrent of the battery packs 100. Optionally, the charge protection element may be a charge protection MOS, and the discharge protection element may be a discharge protection MOS.

An end of the device USB terminal 362 is electrically connected to the power processing module 371, the charge protection element, and the battery pack 100, and the other end of the device USB terminal 362 is directly electrically connected to the battery pack 100, thereby forming a charging and discharging circuit between the device USB terminal 362 and the battery pack 100. In addition, when the battery assembly device 300 is electrically connected to the power tool 200, an end of the battery pack 100 is electrically connected to the positive electrode of the power tool 200, the other end of the battery pack 100 is electrically connected to the negative electrode of the power tool 200, and the discharge protection element is disposed on the connection path where the battery pack 100 is electrically connected to the negative electrode of the power tool 200 so that discharge safety is ensured when the battery pack 100 supplies power to the power tool 200 through the battery assembly device 300. Since the battery assembly device 300 is coupled to multiple battery packs 100, the battery packs 100 electrically connected to the positive and negative electrodes of the power tool 200 are different battery packs 100, and the different battery packs 100 are connected to each other. Optionally, as shown in FIG. 26, the case where five battery packs 100 are provided is used as an example for a specific description. In addition, the number of battery packs 100 may be any number greater than two, which is not limited in the present application.

The device USB terminal 362 is electrically connected to the USB charge and discharge management module 372, the device USB terminal 362 and the USB charge and discharge management module 372 communicate with each other through a corresponding communication protocol, and the USB charge and discharge management module 372 transmits a charging or discharging signal to the device USB terminal 362. Optionally, the USB charge and discharge management module 372 may include a Type-C charging circuit. The USB charge and discharge management module 372 is separately electrically connected to the power processing module 371 and the control module 373. The power processing module 371 is used for controlling the boost or buck of the battery packs 100 or the direct current (DC)-AC conversion or the DC-DC conversion of the battery packs 100 when the battery assembly device 300 is connected to the power tool 200.

The control module 373 is used for controlling the battery packs 100 inside the battery assembly device 300 to be charged via the device USB terminal 362 or controlling the battery packs 100 to be discharged externally via the device USB terminal 362 on the battery assembly device 300, thereby transmitting corresponding control signals to the USB charge and discharge management module 372. The USB charge and discharge management module 372 can use the electrical energy inputted from the device USB terminal 362 to charge at least one battery pack 100, or the USB charge and discharge management module 372 can output electrical energy externally via the device USB terminal 362. The control module 373 is electrically connected to the sampling module 375 and the communication circuit 376 separately, and the sampling module 375 collects information such as the current, voltage, and temperature of the battery packs 100 and transmits the information to the control module 373. The communication circuit 376 is used for transmitting information between the battery assembly device 300 and the power tool 200. The communication circuit 376 acquires multiple pieces of information about the battery packs 100 acquired by the sampling module 375 from the control module 373 and is connected to the signal input and output pin D to transmit the multiple pieces of information about the battery packs 100 (that is, the information about the battery assembly device 300) to the power tool 200.

The control module 373 is electrically connected to the charge protection element and the discharge protection element so that when controlling the battery packs 100 inside the battery assembly device 300 to be charged or discharged, the control module 373 can activate the corresponding protection element to perform a protection operation.

The control module 373 is further electrically connected to the equalization module 374, the equalization module 374 is electrically connected to the multiple battery packs 100 inside the battery assembly device 300 separately, the equalization module 374 can transmit the energy stored in the battery packs 100 between the multiple battery packs 100 based on the equalization current, and the control module 373 is used for controlling the working state of the equalization module 374. Specifically, the control module 373 adjusts the working state of the equalization module 374 according to the relationship between the battery parameters of the multiple battery packs 100 and controls the energy stored in the multiple battery packs 100 to be transferred through the equalization module 374 until the battery parameters of the multiple battery packs 100 are basically consistent. The energy stored in the battery pack 100 is the battery level of the battery pack 100, and the battery parameter includes at least one of the voltage, energy, capacity, and power of the battery pack 100, that is, the sampling module 375 mentioned above in the present application samples part of the information about the battery packs 100 from the multiple battery packs 100 and transmits the information to the control module 373. The present application does not limit which specific parameter(s) the battery parameters refer to. Battery parameters of the same type are selected for comparison among the multiple battery packs 100. That is, the relationship between battery parameters may be the relationship between voltages, or the relationship between voltages and the relationship between energies, or the relationship between capacities and the relationship between powers, or the like.

The energy stored in the multiple battery packs 100 is transferred through the equalization module 374 until the battery parameters of the multiple battery packs 100 are basically consistent so that when the multiple battery packs 100 inside the battery assembly device 300 are subsequently charged, the probability of the following case can be reduced: a large difference exists in battery parameters of the multiple battery packs 100, causing some battery packs 100 to be overcharged, leading to safety hazards. In addition, when the battery assembly device 300 subsequently supplies power to the power tool 200 and the multiple battery packs 100 are discharged, the probability of the following case can be reduced: a large difference exists in battery parameters of the multiple battery packs 100, causing some battery packs 100 to be overdischarged, leading to safety hazards.

The process in which the control module 373 controls the working state of the equalization module 374 is specifically described below.

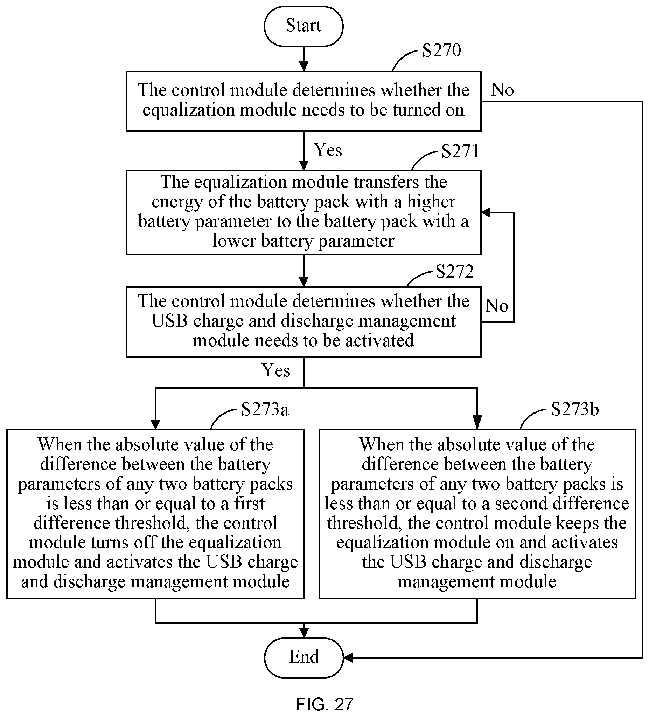

FIG. 27 is a flowchart illustrating that the control module 373 controls the working state of the equalization module 374. The control module 373 controls the equalization module 374 after determining that the multiple battery packs 100 and the battery assembly device 300 have no faults. If a fault exists, the control module 373 stops working.

In step S270, the control module 373 determines whether the equalization module 374 needs to be turned on.

Before the control module 373 controls the equalization module 374 to be turned on to perform energy transfer among the multiple battery packs 100, whether the equalization module 374 needs to be turned on needs to be determined. The control module 373 acquires the battery parameters of the multiple battery packs 100, compares the battery parameters of any two battery packs 100 to obtain the relationship between the battery parameters, and when the relationship between the battery parameters is greater than a parameter threshold, controls the equalization module 374 to be turned on; and step S271 is performed. Otherwise, when the relationship between the battery parameters is less than the parameter threshold, the equalization module 374 does not need to be turned on, and the process ends.

The relationship between the battery parameters may be the absolute value of the difference between the battery parameters. The case where the battery parameter is the voltage is used as an example. The absolute value of the voltage difference between any two battery packs 100 is compared with the parameter threshold. When the absolute value of the voltage difference between any two battery packs 100 is greater than the parameter threshold, the equalization module 374 is turned on. Optionally, when the battery parameter is the voltage, the parameter threshold may be 0.2 V or may be another value determined empirically, which is not limited in the present application. Optionally, the relationship between the battery parameters may be other relationships such as the ratio, the product, and the like, which is not limited in the present application.

In step S271, the equalization module 374 transfers the energy of the battery pack 100 with a higher battery parameter to the battery pack 100 with a lower battery parameter.

In step S270, the control module 373 determines that the equalization module 374 needs to be turned on, and after the control module 373 controls the equalization module 374 to be turned on, the equalization module 374 may transfer the energy of the battery pack 100 with a higher battery parameter to the battery pack 100 with a lower battery parameter. Here, the case where the battery parameter is the voltage and the multiple battery packs 100 are three battery packs 100 is used as an example for description. If the voltage of the first battery pack 100 is 3.5 V, the voltage of the second battery pack 100 is 3 V, and the voltage of the third battery pack 100 is 2 V, then during energy transfer, the 3.5 V battery pack 100 may transfer energy to the 3 V battery pack 100 and/or the 2 V battery pack 100, or the 3.5 V battery pack 100 and/or the 3 V battery pack 100 may transfer energy to the 2 V battery pack 100, that is, the energy of the battery pack 100 with a higher battery parameter is transferred to the battery pack 100 with a lower battery parameter.

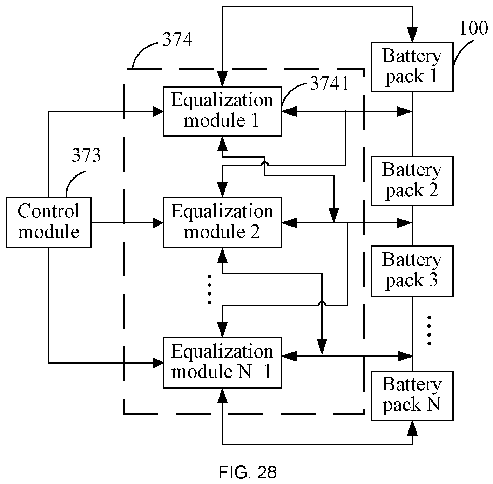

As shown in FIG. 28, the equalization module 374 is formed by multiple sub-equalization modules 3741, and each sub-equalization module 3741 is disposed between two battery packs 100. The number of the sub-equalization modules 3741 is one less than the number of the battery packs 100. When the number of the multiple battery packs 100 is N, the number of the sub-equalization modules 3741 is N-1. For example, when the multiple battery packs 100 are five battery packs 100, the number of the sub-equalization modules 3741 is four.

The equalization module 374 includes capacitors C, transistors Q, and magnetic elements D. Specifically, each sub-equalization module 3741 includes capacitors C, transistors Q, and a magnetic element D, and based on the capacitors C, the transistors Q, and the magnetic element D, the energy of the battery pack 100 with a higher battery parameter is transferred to the battery pack 100 with a lower battery parameter. Optionally, the magnetic element D may be an inductor or another magnetic element, which is not limited in the present application.

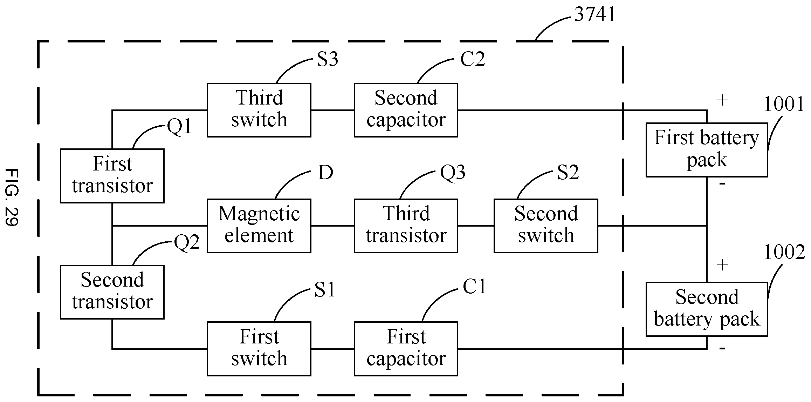

The case where the battery packs 100 include two battery packs 100: a first battery pack 1001 and a second battery pack 1002 is used as an example to illustrate the specific process of energy transfer by the equalization module 374. As shown in FIG. 29, the capacitors C include a first capacitor C1 and a second capacitor C2, the transistors Q include a first transistor Q1, a second transistor Q2, and a third transistor Q3, and the sub-equalization module 3741 further includes a first switch S1, a second switch S2, and a third switch S3. An end of the second switch S2 is electrically connected to the third transistor Q3, and the other end of the second switch S2 is electrically connected to the negative electrode of the first battery pack 1001 and the positive electrode of the second battery pack 1002. The first switch S1 is electrically connected to the second transistor Q2 and the first capacitor C1, and the third switch S3 is electrically connected to the first transistor Q1 and the second capacitor C2. The first capacitor C1 is electrically connected to the negative electrode of the second battery pack 1002, and the second capacitor C2 is electrically connected to the positive electrode of the first battery pack 1001. An end of the magnetic element D is electrically connected to the third transistor Q3, and the other end of the magnetic element D is electrically connected to the first transistor Q1; or an end of the magnetic element D is electrically connected to the third transistor Q3, and the other end of the magnetic element D is electrically connected to the second transistor Q2. The first transistor Q1 and the second transistor Q2 are not turned on at the same time, the first transistor Q1 and the second transistor Q2 are turned on alternately, and the switching frequency at which the first transistor Q1 and the second transistor Q2 are turned on and off is greater than or equal to 100 kHz and less than or equal to 1 MHz. Optionally, the time for which the first transistor Q1 is on and the time for which the second transistor Q2 is on may be equal or unequal, which is not limited in the present application.

When the battery parameter of the second battery pack 1002 is greater than the battery parameter of the first battery pack 1001, the process of transferring energy between the first battery pack 1001 and the second battery pack 1002 by the sub-equalization module 3741 (that is, the equalization module 374) is described below.

After the sub-equalization module 3741 is turned on, the first switch S1, the second switch S2, and the third switch S3 are all turned on, and the first transistor Q1 is turned on first. In this case, the energy of the second battery pack 1002 flows out from the positive electrode, flows through the second switch S2, the third transistor Q3, and the magnetic element D, flows to the first transistor Q1, the third switch S3, and the second capacitor C2, and then flows into the positive electrode of the first battery pack 1001 to charge the first battery pack 1001. In this process, when the energy flows through the magnetic element D, the magnetic element D stores energy, and when the energy flows through the second capacitor C2, the second capacitor C2 filters the energy flowing through the second capacitor C2 before allowing the energy to flow into the first battery pack 1001. Then, when the first transistor Q1 is not turned on and the second transistor Q2 is turned on, the energy of the second battery pack 1002 still flows out from the positive electrode, flows through the second switch S2, the third transistor Q3, and the magnetic element D, flows to the second transistor Q2, the first switch S1, and the first capacitor C1, and then flows back to the negative electrode of the second battery pack 1002. Moreover, when the first transistor Q1 is turned on, the stored energy released from the magnetic element D also flows back to the negative electrode of the second battery pack 1002. The first capacitor C1 filters the energy flowing through the first capacitor C1 before allowing the energy to flow back to the second battery pack 1002.

The first transistor Q1 and the second transistor Q2 are turned on alternately, and the preceding process is repeatedly performed, thereby transferring the energy of the second battery pack 1002 to the first battery pack 1001, returning the excess transferred energy to the second battery pack 1002, and avoiding energy waste.

When the battery parameter of the second battery pack 1002 is less than the battery parameter of the first battery pack 1001, the process of transferring energy between the first battery pack 1001 and the second battery pack 1002 by the sub-equalization module 3741 (that is, the equalization module 374) is described below.

After the sub-equalization module 3741 is turned on, the first switch S1, the second switch S2, and the third switch S3 are all turned on, and the first transistor Q1 is turned on first. In this case, the energy of the first battery pack 1001 flows out from the positive electrode, flows through the second capacitor C2, the third switch S3, and the first transistor Q1, flows to the magnetic element D, the third transistor Q3, and the second switch S2, and then flows into the positive electrode of the second battery pack 1002 to charge the second battery pack 1002. In this process, when the energy flows through the magnetic element D, the magnetic element D stores energy, and when the energy flows through the second capacitor C2, the second capacitor C2 filters the energy flowing through the second capacitor C2 before allowing the energy to flow into the second battery pack 1002. Then, when the first transistor Q1 is not turned on and the second transistor Q2 is turned on, the direction of energy flow remains unchanged, and the energy released from the magnetic element D flows through the third transistor Q3 and the second switch S2 and then flows into the positive electrode of the second battery pack 1002 to charge the second battery pack 1002. Then, part of the energy flows out from the negative electrode of the second battery pack 1002, flows through the first capacitor C1, the first switch S1, and the second transistor Q2, and flows back to the magnetic element D, and the preceding process is repeated so that the energy flows into the positive electrode of the second battery pack 1002 and flows out from the negative electrode of the second battery pack 1002 to charge the second battery pack 1002. The first capacitor C1 filters the energy flowing through the first capacitor C1 before allowing the energy to flow into the second battery pack 1002.

The first transistor Q1 and the second transistor Q2 are turned on alternately, and the preceding process is repeatedly performed, thereby transferring the energy of the first battery pack 1001 to the second battery pack 1002, transferring the energy stored in the magnetic element D to the second battery pack 1002, and avoiding energy waste.

Therefore, after the sub-equalization module 3741 is turned on, when the magnetic element D, the third transistor Q3, and the first transistor Q1 are turned on or when the magnetic element D, the third transistor Q3, and the second transistor Q2 are turned on, the energy of the battery pack 100 with a higher battery parameter can be transferred to the battery pack 100 with a lower battery parameter. Moreover, when the first transistor Q1 is turned on, the magnetic element D stores energy, and when the second transistor Q2 is turned on, the magnetic element D releases energy.

When the equalization module 374 transfers the energy of the battery pack 100 with a higher battery parameter to the battery pack 100 with a lower battery parameter, the control module 373 needs to perform step S272 to determine whether the charge and discharge management module needs to be activated.

In step S272, the control module 373 determines whether the USB charge and discharge management module 372 needs to be activated.

The USB charge and discharge management module 372 may be activated to control the multiple battery packs 100 to be charged or may be activated to allow the multiple battery packs 100 to be discharged externally.

When the relationship between the battery parameters of any two battery packs 100 is still greater than the parameter threshold, for example, when the absolute value of the voltage difference between any two battery packs 100 described above in the present application is still greater than 0.2 V, the control module 373 does not activate the USB charge and discharge management module 372, step S271 is performed, and the equalization module 374 transfers the energy of the battery pack 100 with a higher battery parameter to the battery pack 100 with a lower battery parameter.

When the relationship between the battery parameters of any two battery packs 100 is still less than the parameter threshold, for example, when the absolute value of the voltage difference between any two battery packs 100 is less than or equal to 0.2 V, the control module 373 activates the USB charge and discharge management module 372, and step S273a or step S273b is performed. Two solutions in which the control module 373 activates the USB charge and discharge management module 372 are provided. Each of step S273a and step S273b corresponds to one solution. The control module 373 may select one of the two solutions as required.

In step S273a, when the absolute value of the difference between the battery parameters of any two battery packs 100 is less than or equal to a first difference threshold, the control module 373 turns off the equalization module 374 and activates the USB charge and discharge management module 372.

When the absolute value of the difference between the battery parameters of any two battery packs 100 is less than or equal to the first difference threshold, the control module 373 turns off the equalization module 374 to stop energy transfer and then activates the USB charge and discharge management module 372, thereby using an external power supply to charge the multiple battery packs 100 or discharging the multiple battery packs 100 externally to supply power to an external device. The external power supplies may be the power supply devices 400 with different rated voltages, and the external devices may be different power tools 200.

Optionally, the case where the battery parameter is the voltage is used as an example, and the first difference threshold may be 0.1 V. That is, when the voltage difference between any two battery packs 100 is less than or equal to 0.1 V, which is a smaller difference, it means that the energy has been fully transferred and the equalization module 374 has completed the equalization.

Step S273a corresponds to the first solution in which the control module 373 activates the USB charge and discharge management module 372. After the equalization module 374 completes the equalization of the multiple battery packs 100, the control module 373 activates the USB charge and discharge management module 372.

In step S273b, when the absolute value of the difference between the battery parameters of any two battery packs 100 is less than or equal to a second difference threshold, the control module 373 keeps the equalization module 374 on and activates the USB charge and discharge management module 372.

When the absolute value of the difference between the battery parameters of any two battery packs 100 is less than or equal to the second difference threshold, it means that the equalization of the multiple battery packs 100 has stabilized. In this case, the equalization module 374 is still kept on, and the USB charge and discharge management module 372 is activated, thereby using an external power supply to charge the multiple battery packs 100 or discharging the multiple battery packs 100 externally to supply power to an external device. In this manner, the multiple battery packs 100 can be in a state of simultaneous equalization and charging (or simultaneous equalization and discharging). The second difference threshold is greater than the first difference threshold in step S273a.

Optionally, the case where the battery parameter is the voltage is used as an example, and the second difference threshold may be 0.2 V. That is, that the voltage difference between any two battery packs 100 is less than or equal to 0.2 V means that the equalization voltage of the multiple battery packs 100 is stable.

When the multiple battery packs 100 are in the state of simultaneous equalization and charging, the equalization module 374 equalizes the multiple battery packs 100 during the charging process, corrects the energy distribution among the multiple battery packs 100, reduces the energy charged to the battery pack 100 with higher energy, and increases the energy charged to the battery pack 100 with lower energy so that the multiple battery packs 100 can be fully charged at almost the same time. Similarly, when the multiple battery packs 100 are in the state of simultaneous equalization and discharging, the equalization module 374 equalizes the multiple battery packs 100 during the discharging process, corrects the energy distribution among the multiple battery packs 100, increases the energy consumption of the battery pack 100 with higher energy, and reduces the energy consumption of the battery pack 100 with lower energy so that the energy of the multiple battery packs 100 can be depleted at almost the same time.

Step S273b corresponds to the second solution in which the control module 373 activates the USB charge and discharge management module 372. When determining that the equalization of the multiple battery packs 100 is in a stable state, the control module 373 may directly activate the USB charge and discharge management module 372.

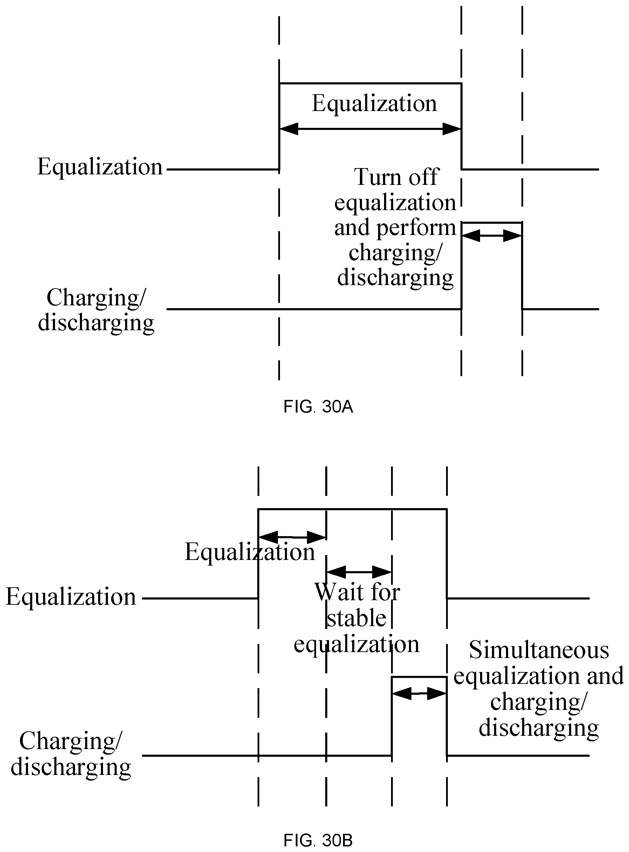

FIG. 30A is a schematic diagram of the time consumed by the first solution corresponding to step S273a, and FIG. 30B is a schematic diagram of the time consumed by the second solution corresponding to step S273b. As shown in FIGS. 30A and 30B, compared with waiting for the completion of the equalization of the multiple battery packs 100 and then activating the USB charge and discharge management module 372 to control the charging and discharging, after the equalization of the multiple battery packs 100 is in the stable state, the USB charge and discharge management module 372 is directly activated, and the time consumed for simultaneous equalization and control of the charging and discharging is shorter so that the multiple battery packs 100 can be fully charged faster or charge the external device faster.

Through the process of the control module 373 controlling the working state of the equalization module 374, in the case where the multiple battery packs 100 are coupled to the battery assembly device 300 and are all fault-free, when the multiple battery packs 100 included in the battery assembly device 300 are charged, the multiple battery packs 100 can be fully charged almost at the same time, thereby avoiding the following case: some battery packs 100 are fully charged first and then continue being charged, resulting in overcharging. In this manner, the safety of the charging process can be improved. Similarly, when the battery assembly device 300 is assembled to the power tool 200 to supply power to the power tool 200, that is, when the multiple battery packs 100 included in the battery assembly device 300 are discharged, the multiple battery packs 100 can be fully discharged almost at the same time, thereby avoiding the following case: some battery packs 100 are fully discharged first and then continue being discharged, resulting in overdischarging. In this manner, the safety of the discharging process can be improved. Therefore, the safety of the battery assembly device 300 in use can be comprehensively improved.

In addition, since the battery assembly device 300 can be coupled to multiple battery packs 100, when the battery assembly device 300 is charged, based on the total voltage of the battery assembly device 300, the power supply device 400 with a corresponding rated voltage is selected without considering the voltages of the coupled battery packs 100. For example, when the rated voltage of the battery pack 100 is 4 V and the battery assembly device 300 can be coupled to at most five battery packs 100, the power supply device 400 with a rated voltage of 20 V can be used to charge the battery assembly device 300, that is, the power supply device 400 with a rated voltage of 20 V can be used to charge the multiple battery packs 100 each with a rated voltage of 4 V, and the equalization module 374 performs equalization during or before charging.

In some examples, the battery assembly device 300 further includes a circuit board assembly 301 on which the multiple modules described above in the present application are provided to support the operation of the battery assembly device 300. The circuit board assembly 301 is formed by two circuit boards, including a first circuit board 3011 and a second circuit board 3012. The equalization module 374 is disposed on the first circuit board 3011, and the USB charge and discharge management module 372 is disposed on the second circuit board 3012. In addition, the equalization module 374 is disposed on the second circuit board 3012, and the USB charge and discharge management module 372 is disposed on the first circuit board 3011.

During the operation of the battery assembly device 300, the equalization module 374 and the USB charge and discharge management module 372 generate relatively large amounts of heat. The equalization module 374 and the USB charge and discharge management module 372 are disposed on two circuit boards, respectively so that the heat generated by the equalization module 374 and the USB charge and discharge management module 372 is dispersed, thereby avoiding the following case: the heat generated by the equalization module 374 and the USB charge and discharge management module 372 that are disposed on one circuit board is concentrated, causing the circuit board temperature to be too high, resulting in an excessively high temperature of the battery assembly device 300, leading to a probability that problems occur during operation. In this manner, the heat generated by the battery assembly device 300 during operation is reduced in a relatively simple and convenient manner, thereby improving the stability and safety of the battery assembly device 300 during operation.

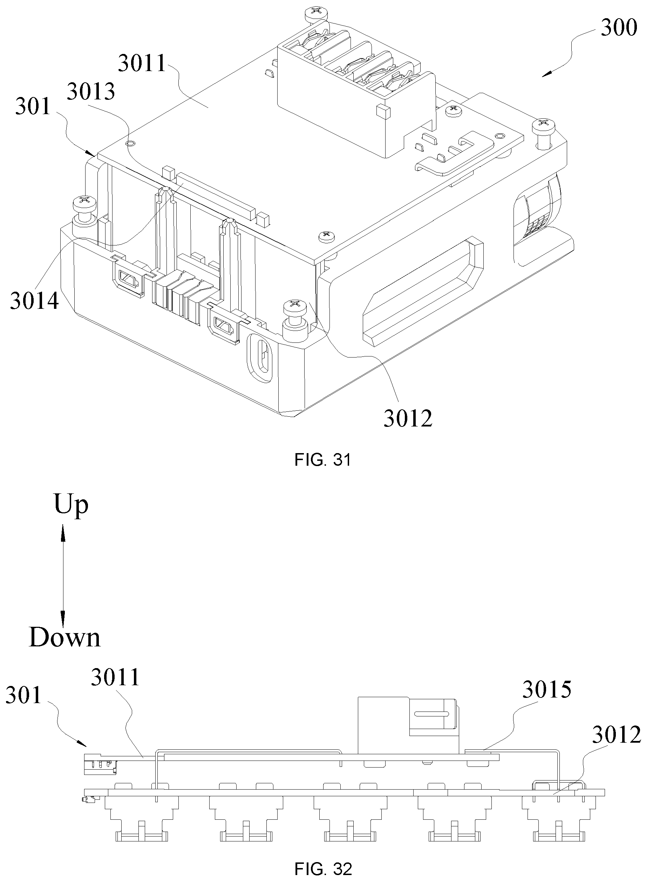

In some examples, as shown in FIG. 31, a groove 3013 is formed on the first circuit board 3011, and a protrusion 3014 matching the groove 3013 is formed on the second circuit board 3012 so that the protrusion 3014 can fit into the groove 3013 to vertically connect the first circuit board 3011 to the second circuit board 3012, and the first circuit board 3011 and the second circuit board 3012 can be directly electrically connected based on the groove 3013 and the protrusion 3014, which is convenient and quick. In addition, the first circuit board 3011 and the second circuit board 3012 may be connected at an inclined angle, which is not limited in the present application.

In some examples, as shown in FIG. 32, the first circuit board 3011 and the second circuit board 3012 are provided correspondingly in the up and down direction, the first circuit board 3011 is disposed above the second circuit board 3012, and a certain gap exists between the first circuit board 3011 and the second circuit board 3012. The first circuit board 3011 and the second circuit board 3012 are electrically connected based on at least one circuit board connector 3015, an end of the circuit board connector 3015 is connected to the first circuit board 3011, and the other end of the circuit board connector 3015 is connected to the second circuit board 3012. Optionally, the circuit board connector 3015 may be a pin header.

In some examples, a power supply device 600 includes a housing 601, a charging interface 602, and coupling portions 603. The coupling portions 603 are used for coupling multiple battery packs 100, and the charging interface 602 is used for connecting an external power supply to charge the multiple coupled battery packs 100. The power supply device 600 may further include a tool interface 604 for connecting the power tool 200 to supply power to the power tool 200 by using at least one battery pack. As shown in FIG. 18, when the power supply device 600 does not include the tool interface 604 and includes the charging interface 602, the power supply device 600 is the power supply device 400 described above in the present application. The power supply device 600 charges the battery assembly devices 300 or the battery packs 100 with different rated voltages separately, and the power supply device 600 is a charger. As shown in FIG. 9, when the power supply device 600 includes both the charging interface 602 and the tool interface 604, the power supply device 600 is the battery assembly device 300 described above in the present application, the battery packs 100 can be charged via the charging interface 602, and the battery packs 100 can supply power to the power tool 200 via the tool interface 604.

When the power supply device 600 is the power supply device 400 or the battery assembly device 300, the power supply device 600 includes the balanced charging and discharging system 370 described above in the present application. When the power supply device 600 is the power supply device 400, the control module 373 controls the equalization module 374 to perform energy transfer during the charging process of multiple battery packs 100 so that the battery parameters of the multiple battery packs 100 are basically consistent, and the multiple battery packs 100 can be fully charged almost at the same time. The discharging process is not included in this case. The specific process of energy transfer during charging is described above in the present application, and the details are not repeated here. When the power supply device 600 is the battery assembly device 300, the control module 373 controls the equalization module 374 to perform energy transfer during the charging and discharging process of multiple battery packs 100 so that the battery parameters of the multiple battery packs 100 are basically consistent, and the multiple battery packs 100 can be fully charged or discharged almost at the same time. The specific process of energy transfer during charging and discharging is described above in the present application, and the details are not repeated here.

The case where the power supply device 600 is the battery assembly device 300 is used as an example for a specific description of the present application. Similarly, when the power supply device 600 that does not include the tool interface 604 is the power supply device 400, the structure, function, and the like are described below in the present application, and the details are not repeated in the present application.

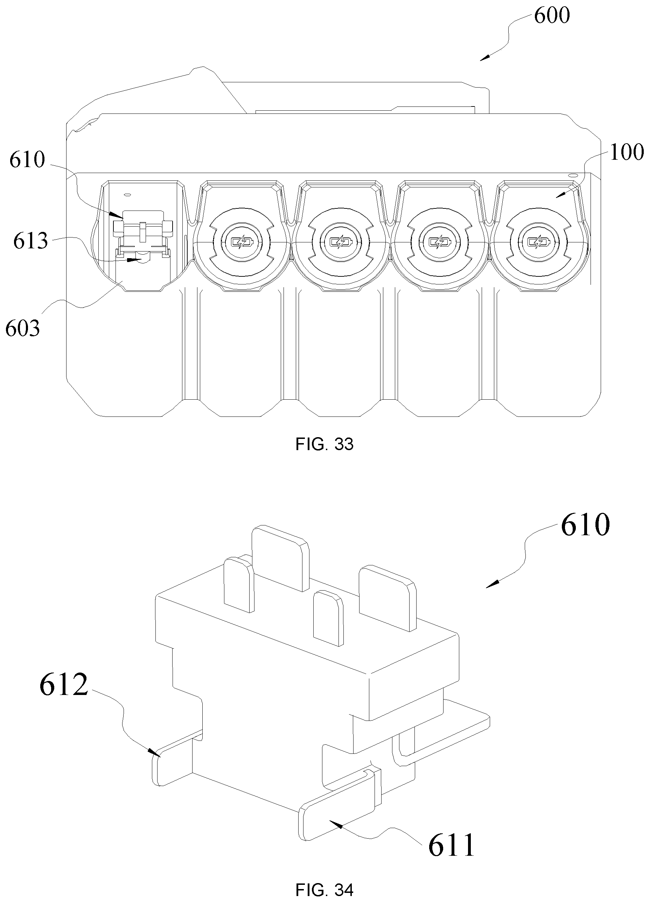

In some examples, as shown in FIGS. 33 and 34, the power supply device 600 includes multiple temperature acquisition devices 610, the number of temperature acquisition devices 610 corresponds to the number of coupling portions 603 included in the power supply device 600, and the multiple temperature acquisition devices 610 are disposed in different coupling portions 603, respectively. The temperature acquisition device 610 includes a positive terminal 611 and a negative terminal 612. The positive terminal 611 is a temperature acquisition terminal. When the battery pack 100 is coupled to the coupling portion 603 and in contact with the temperature acquisition device 610, the positive terminal 611 is electrically or communicatively connected to the battery pack 100. The potential of the negative terminal 612 relative to the ground is a positive voltage, a negative voltage, or 0 V. When the potential of the negative terminal 612 is 0 V, the negative terminal 612 is directly grounded. When the potential of the negative terminal 612 relative to the ground is a positive voltage or a negative voltage, the negative terminal 612 is connected to at least one of the components such as a capacitor, a resistor, and an inductor before being grounded. That is, the negative terminal 612 may be grounded directly or indirectly. Optionally, both the positive terminal 611 and the negative terminal 612 are NTC connectors.

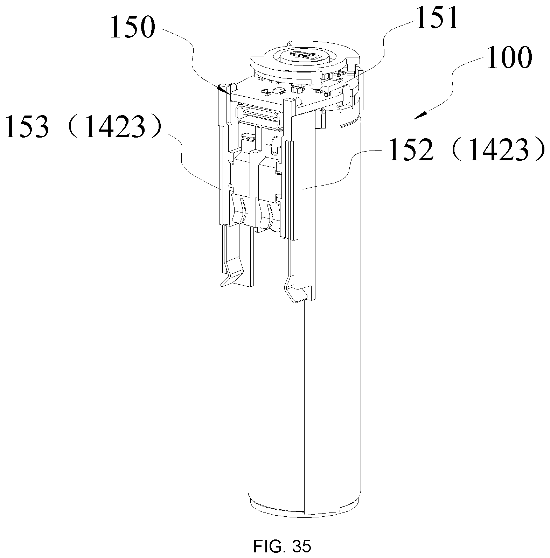

The battery pack 100 includes a temperature detection device 150 for detecting the temperature of the battery pack 100. The temperature detection device 150 is electrically connected to the temperature acquisition device 610 and transmits the detected temperature to the temperature acquisition device 610. As shown in FIG. 35, the temperature detection device 150 includes a detection element 151, a first transmission terminal 152, and a second transmission terminal 153. The detection element 151 is used for detecting the temperature of the battery pack 100. The first transmission terminal 152 can be electrically coupled to a temperature acquisition terminal (that is, the positive terminal 611) to transmit the temperature of the battery pack 100 so that the positive terminal 611 can acquire the temperature of the battery pack 100. The second transmission terminal 153 can be electrically coupled to the negative terminal 612, that is, an end of the negative terminal 612 is electrically coupled to the second transmission terminal 153, and the other end of the negative terminal 612 is grounded directly or indirectly. The first transmission terminal 152 and the second transmission terminal 153 are both the signal pole pieces 1423 described above in the present application.

The power supply device 600 includes a ground terminal. Specifically, the negative terminal 612 is grounded by being directly or indirectly connected to the ground terminal of the power supply device 600. The grounding conditions of the multiple temperature acquisition devices 610 included in the power supply device 600 are the same. Optionally, if one temperature acquisition device 610 is directly grounded, the remaining multiple temperature acquisition devices 610 are also directly grounded. Optionally, if one temperature acquisition device 610 is connected to a capacitor and then grounded, then the remaining multiple temperature acquisition devices 610 are also connected to capacitors and then grounded, which is an indirect grounding manner.

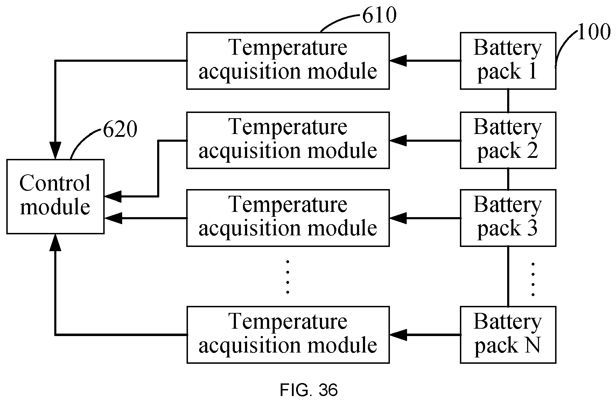

In some examples, the power supply device 600 further includes a controller 620 electrically connected to the multiple temperature acquisition devices 610. The temperatures of the multiple battery packs 100 collected by the multiple temperature acquisition devices 610 are transmitted to the controller 620. The controller 620 performs temperature protection on the multiple battery packs 100 based on the received temperatures of the multiple battery packs 100. As shown in FIG. 36, the controller 620 corresponds to a control module 620 shown in the figure, and the temperature acquisition devices 610 correspond to temperature acquisition modules 610 shown in the figure.

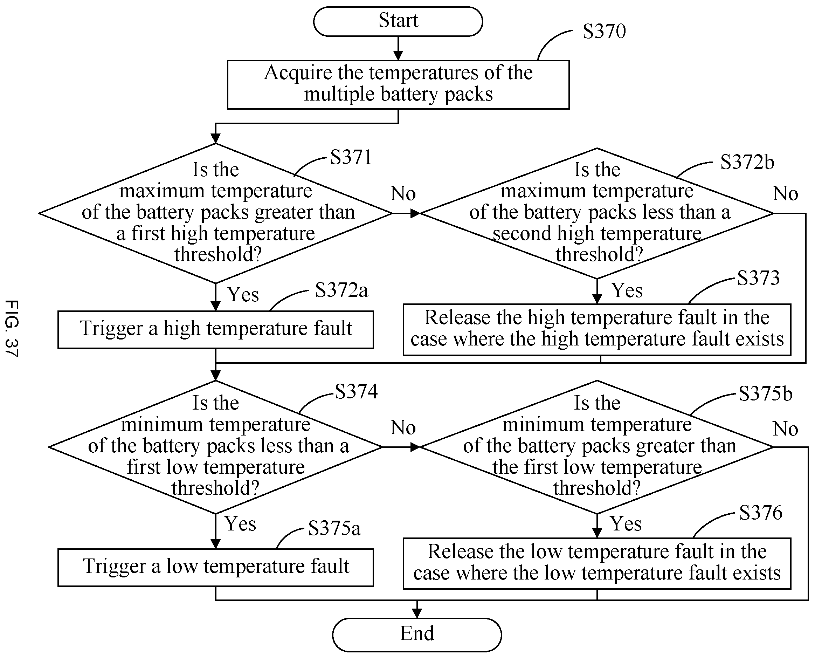

As shown in FIG. 37, the process in which the controller 620 performs temperature protection on the temperatures of the multiple battery packs 100 is described below.

In step S370, the temperatures of the multiple battery packs 100 are acquired.

The temperature acquisition devices 610 collect the temperatures of the multiple battery packs 100 and transmit the temperatures to the controller 620. The controller 620 receives the collected temperatures of the multiple battery packs 100.

In step S371, whether the maximum temperature of the battery packs 100 is greater than a first high temperature threshold is determined.

After the controller 620 acquires the temperatures of the multiple battery packs 100, the maximum temperature of the multiple battery packs 100 may be obtained, and the maximum temperature is compared with the first high temperature threshold. When the maximum temperature is greater than the first high temperature threshold, step S372a is performed, otherwise step S372b is performed. The first high temperature threshold is set according to empirical values. Optionally, the first high temperature threshold may be 60 degrees. In addition, the first high temperature threshold may be another temperature set according to empirical values, which is not limited in the present application.

In step S372a, a high temperature fault is triggered.

After the controller 620 determines in step S371 that the maximum temperature of the multiple battery packs 100 is greater than the first high temperature threshold, the temperatures of the multiple battery packs 100 are too high, and the controller 620 triggers the high temperature fault so that the power supply device 600 cannot continue operating normally, thereby protecting the battery packs 100 and preventing unsafe charging and discharging due to excessively high temperatures of the battery packs 100. After the high temperature fault is triggered, step S374 is performed.

In step S372b, whether the maximum temperature of the battery packs 100 is less than a second high temperature threshold is determined.

After the controller 620 determines in step S371 that the maximum temperature of the multiple battery packs 100 is not greater than the first high temperature threshold, the controller 620 continues to determine whether the maximum temperature of the multiple battery packs 100 is less than the second high temperature threshold. When the maximum temperature is less than the second high temperature threshold, step S373 is performed, otherwise step S374 is performed. The second high temperature threshold is set according to empirical values, and the second high temperature threshold is less than the first high temperature threshold. Optionally, the second high temperature threshold may be 50 degrees or may be another temperature set according to empirical values, which is not limited in the present application.

In step S373, the high temperature fault is released in the case where the high temperature fault exists.

When the maximum temperature of the multiple battery packs 100 is less than the second high temperature threshold, it means that the maximum temperature of the multiple battery packs 100 is suitable. If the multiple battery packs 100 have previously triggered high temperature faults, the controller 620 controls the high temperature faults to be released.

In step S374, whether the minimum temperature of the battery packs 100 is less than a first low temperature threshold is determined.

After the controller 620 determines the relationship between the maximum temperature of the multiple battery packs 100 and the two high temperature thresholds, the controller 620 determines the relationship between the minimum temperature of the multiple battery packs 100 and the first low temperature threshold. When the minimum temperature is less than the first low temperature threshold, step S375a is performed, otherwise step S375b is performed. The first low temperature threshold is determined according to empirical values. Optionally, the first low temperature threshold may be 0 degrees or may be another temperature set according to empirical values, which is not limited in the present application.

In step S375a, a low temperature fault is triggered.

After the controller 620 determines in step S374 that the minimum temperature of the multiple battery packs 100 is less than the first low temperature threshold, the temperatures of the multiple battery packs 100 are too low, and the controller 620 triggers the low temperature fault so that the power supply device 600 cannot continue operating normally, thereby protecting the battery packs 100 and preventing unsafe charging and discharging due to excessively low temperatures of the battery packs 100. The process ends after the low temperature fault is triggered.

In step S375b, whether the minimum temperature of the battery packs 100 is greater than a second low temperature threshold is determined.

After the controller 620 determines in step S374 that the minimum temperature of the multiple battery packs 100 is not less than the first low temperature threshold, the controller 620 continues to determine whether the minimum temperature of the multiple battery packs 100 is greater than the second lower temperature threshold. When the minimum temperature is greater than the second low temperature threshold, step S376 is performed, otherwise the process ends. The second low temperature threshold is set according to empirical values, and the second low temperature threshold is greater than the first low temperature threshold. Optionally, the second low temperature threshold may be 3 degrees or may be another temperature set according to empirical values, which is not limited in the present application.

In step S376, the low temperature fault is released in the case where the low temperature fault exists.

When the minimum temperature of the multiple battery packs 100 is greater than the second low temperature threshold, it means that the minimum temperature of the multiple battery packs 100 is suitable and is no longer too low. If the multiple battery packs 100 have previously triggered low temperature faults, the controller 620 controls the low temperature faults to be released.

In some examples, the power supply device 600 further includes a temperature simulation device 630. The temperature simulation device 630 may acquire the temperatures of the multiple battery packs 100 acquired by the multiple temperature acquisition devices 610 and based on the temperatures of the multiple battery packs 100, estimate the equivalent temperature of the multiple battery packs 100, that is, the overall temperature of the multiple battery packs 100. Optionally, the temperature simulation device 630 may be formed by multiple transistors and resistors.

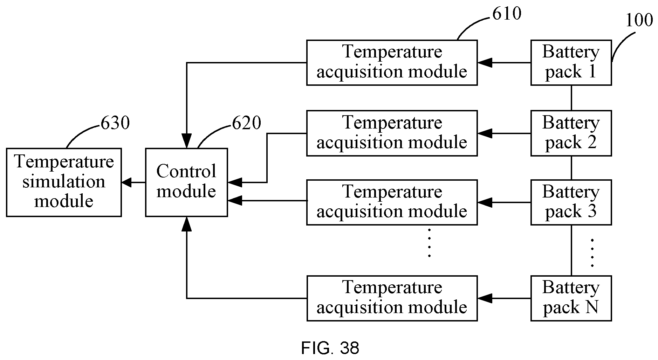

In some examples, as shown in FIG. 38, the controller 620 is electrically connected to the temperature simulation device 630 (corresponding to a temperature simulation module 630 in the figure), and the controller 620 may acquire the equivalent temperature of the multiple battery packs 100 simulated by the temperature simulation device 630, compare the equivalent temperature with preset temperature thresholds, and trigger the temperature fault response based on the relationship between the equivalent temperature and the preset temperature thresholds. The controller 620 triggers the temperature faults based on the relationship between the equivalent temperature and the preset temperature thresholds, which is similar to the triggering of the temperature faults by comparing the temperatures of multiple battery packs 100 with multiple temperature thresholds as shown in FIG. 37 above. The equivalent temperature is compared with two high temperature thresholds and two low temperature thresholds, and then the temperature faults are triggered or released. In this case, the specific temperature values of the two high temperature thresholds and the two low temperature thresholds may be the same as or different from those of the first high temperature threshold, the second high temperature threshold, the first low temperature threshold, and the second low temperature threshold described above, which is not limited in the present application. Therefore, the controller 620 can provide temperature protection for the power supply device 600 in a more timely manner, thereby further enhancing the safety of the charging and discharging of the multiple battery packs 100 in the power supply device 600.

In some examples, the temperature simulation device 630 may be electrically connected to the tool interface 604 to transmit the equivalent temperature to the power tool 200 connected to the tool interface 604 so that the power tool 200 can acquire the overall temperature condition of the multiple battery packs 100 in the connected power supply device 600 and provide temperature protection for the overall temperature condition of the multiple battery packs 100 based on the power tool 200, thereby further enhancing the safety of the charging and discharging of the multiple battery packs 100. In some examples, the temperature simulation device 630 may be electrically connected to the charging interface 602 to transmit the equivalent temperature to an external power supply connected to the charging interface 602. Based on the external power supply, temperature protection can be provided for the overall temperature condition of the multiple battery packs 100, thereby enhancing the safety of the charging and discharging of the multiple battery packs 100.

In some examples, the power tool 200 may include multiple coupling portions for coupling multiple battery packs 100, that is, as shown in FIG. 22, the power tool 200 may include multiple battery mounting portions 220 (that is, coupling portions) through which the multiple battery packs 100 are mounted, respectively. In this case, the power tool 200 may include multiple temperature acquisition devices, the number of temperature acquisition devices corresponds to the number of the multiple battery mounting portions 220, and the multiple temperature acquisition devices are disposed in different battery mounting portions 220, respectively. The temperature acquisition device of the power tool 200 is the temperature acquisition device 610 described above in the present application. Except for the grounded terminal of the negative terminal 612 of the temperature acquisition device 610, the structures and connection manners are the same. As for the grounded terminal, the power tool 200 includes a ground terminal. In this case, the negative terminal 612 is grounded by being directly or indirectly connected to the ground terminal of the power tool 200.

In some examples, the power tool 200 may include the controller and the temperature simulation device, the controller included in the power tool 200 is the controller 620 described above in the present application, the temperature simulation device is the temperature simulation device 630 described above in the present application, and the controller 620 is electrically connected to the temperature simulation device 630. The temperature simulation device 630 in the power tool 200 may acquire the temperatures of the multiple battery packs 100 acquired by the multiple temperature acquisition devices 610 and based on the temperatures of the multiple battery packs 100, estimate the equivalent temperature of the multiple battery packs 100, that is, the overall temperature of the multiple battery packs 100 included in the power tool 200. The controller 620 acquires the equivalent temperature of the multiple battery packs 100 simulated by the temperature simulation device 630, compares the equivalent temperature with preset temperature thresholds, and triggers the temperature fault response based on the relationship between the equivalent temperature and the preset temperature thresholds. The specific process of triggering the temperature fault response is described above in the present application, and the details are not repeated here.

In some examples, when the power supply device 600 includes the tool interface 604, that is, the power supply device 600 is the battery assembly device 300, in the direction in which the battery pack 100 is coupled to the coupling portion 603, the length of the battery pack 100 is basically consistent with the length of the power supply device 600.

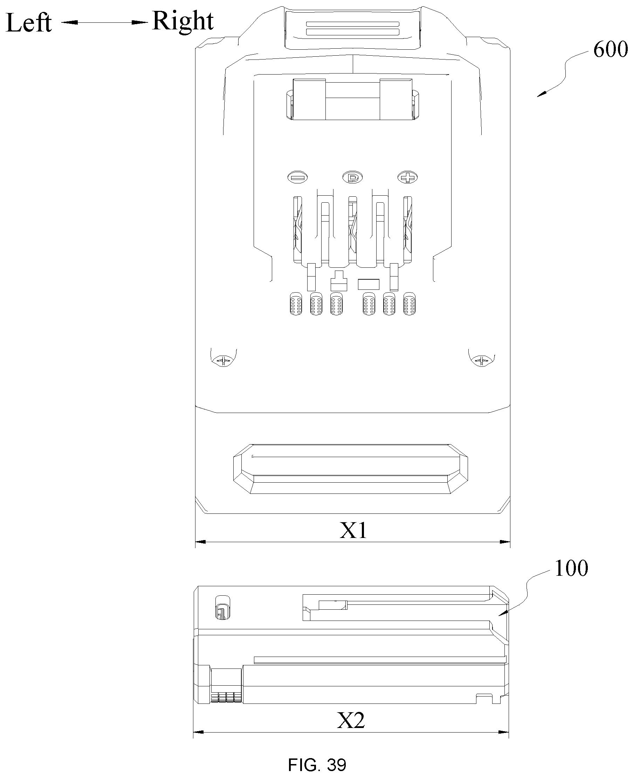

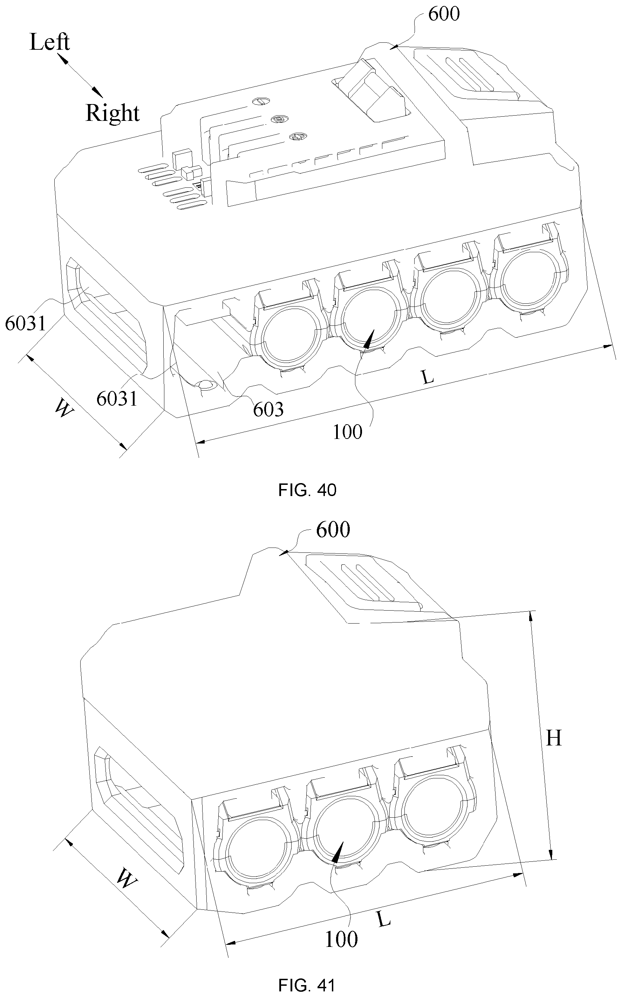

As shown in FIGS. 39 and 40, the case where the direction in which the battery pack 100 is coupled to the coupling portion 603 is the left and right direction is used as an example for description. In the left and right direction, the length of the power supply device 600 is X1, the length of the battery pack 100 is X2, and the length X1 is basically consistent with the length X2. After the battery pack 100 is coupled into the power supply device 600, the length of the power supply device 600 in the left and right direction is smaller, thereby avoiding the disadvantage that the overall dimension of the power supply device 600 becomes greater due to a greater length X1 of the power supply device 600 required for coupling the battery pack 100. In this manner, the overall dimension of the power supply device 600 can be smaller.

Multiple coupling portions 603 are specifically multiple accommodation compartments, and the coupling portions 603 are the accommodation compartments 603. An avoidance portion 6031 is disposed on the sidewall or the bottom of the accommodation compartment 603 so that the operator can take out the battery pack 100 from the accommodation compartment 603 more easily and conveniently based on the avoidance portion 6031.

As shown in FIG. 40, the avoidance portions 6031 are specifically disposed on the sidewalls of the accommodation compartment 603 in FIG. 40. Specifically, in the left and right direction, corresponding avoidance portions 6031 are disposed on two sidewalls of the accommodation compartment 603, and the avoidance portions 6031 are hollow portions. That is, in this case, the accommodation compartment 603 has opposite openings, and the opposite openings are the corresponding avoidance portions 6031. Therefore, when the user couples the battery pack 100 to the accommodation compartment 603, the user needs to push the battery pack 100 into the accommodation compartment 603 via the avoidance portions 6031 along the left and right direction. When the user takes the battery pack 100 out of the accommodation compartment 603, the user needs to push the battery pack 100 out of the accommodation compartment 603 via the avoidance portions 6031 along the left and right direction.

In addition, the length of the preceding power supply device 600 is X1, and based on the avoidance portions 6031, the length X2 of the battery pack 100 is basically consistent with X1. The two sidewalls of the power supply device 600 in the left and right direction are configured to be hollow portions so that when the battery pack 100 is coupled to the accommodation compartment 603, two ends of the battery pack 100 in the power supply device 600 are exposed via the avoidance portions 6031, and the power supply device 600 does not wrap the battery pack 100 in the left and right direction. In this manner, the overall dimension of the power supply device 600 is smaller.

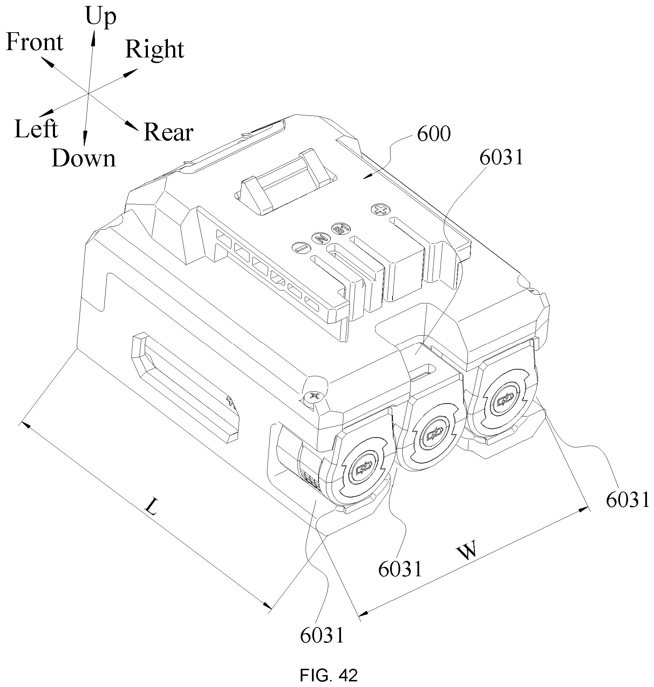

As shown in FIG. 42, the battery packs 100 are coupled to the power supply device 600 along the front and rear direction. In this case, in the front and rear direction, the length of the battery pack 100 is still basically consistent with the length of the power supply device 600. Specifically, the avoidance portion 6031 is disposed on the bottom or the sidewall of the accommodation compartment 603 in FIG. 42. The bottom of the accommodation compartment 603 refers to at least one end of the accommodation compartment 603 in the up and down direction, that is, at least one end of the accommodation compartment 603 in the up and down direction is provided with the avoidance portion 6031. In FIG. 42, the avoidance portion 6031 is disposed on each of the upper end and the lower end of the middle accommodation compartment 603, the avoidance portion 6031 is disposed on the sidewall of each of the accommodation compartments 603 on two sides, and the avoidance portions 6031 are hollow portions. Therefore, when the user takes the battery packs 100 out of the accommodation compartments 603, the user may take out the battery pack 100 in the middle directly and then take out the battery packs 100 on two sides via the avoidance portions 6031 on two sides, respectively, which is convenient and quick.

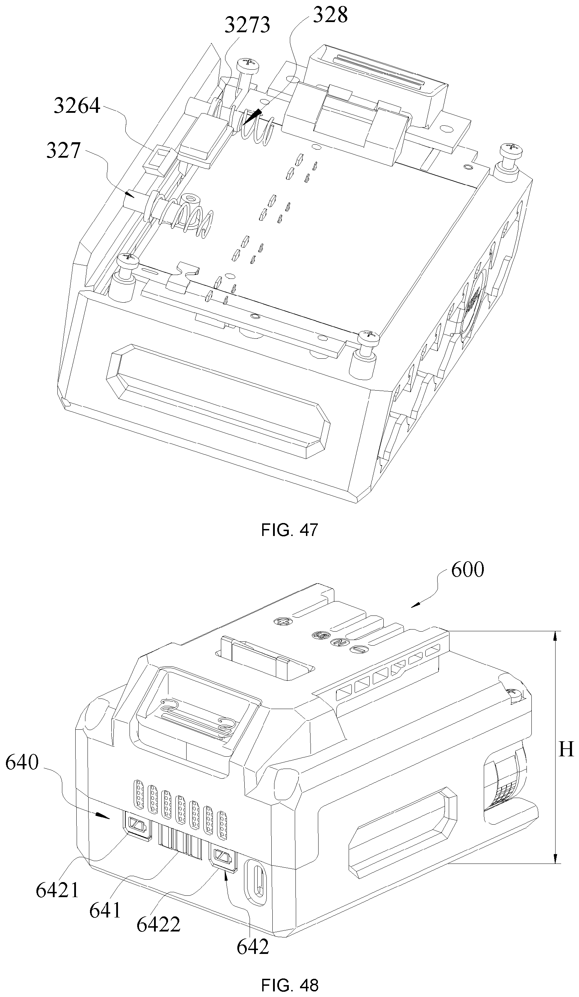

In some examples, when the power supply device 600 accommodates at most three battery packs 100, the length L of the power supply device 600 is less than or equal to 110 mm, the width W of the power supply device 600 is less than or equal to 100 mm, and the height H of the power supply device 600 is less than or equal to 75 mm. Here, the length L is the length of the power supply device 600 along the front and rear direction, and the width W is the length of the power supply device 600 along the left and right direction. The power supply device 600 can accommodate at most three battery packs 100 in the accommodation manner shown in FIG. 41 or 42. FIG. 48 is a perspective view of the accommodation manner shown in FIG. 42 from another perspective.

The length L, the width W, and the height H of the power supply device 600 are determined based on the length and diameter of the coupled battery pack 100. When the battery pack 100 has a length of 5 mm and a diameter of 3 mm and the battery packs 100 are accommodated in the power supply device 600 in a manner shown in FIG. 41, the power supply device 600 has a length L of 88 mm, a width W of 83 mm, and a height H of 73 mm. When the battery pack 100 has a length of 5 mm and a diameter of 3 mm and the battery packs 100 are accommodated in the power supply device 600 in a manner shown in FIG. 42, the power supply device 600 has a length L of 101 mm, a width W of 87 mm, and a height H of 67 mm.

In addition, when the power supply device 600 accommodates at most three battery packs 100, optionally, the length L of the power supply device 600 may be 79 mm. Optionally, the length L of the power supply device 600 may be 96 mm. Optionally, the length L of the power supply device 600 may be 105 mm. Optionally, the width W of the power supply device 600 may be 78 mm. Optionally, the width W of the power supply device 600 may be 80 mm. Optionally, the width W of the power supply device 600 may be 90 mm. Optionally, the height H of the power supply device 600 may be 64 mm. Optionally, the height H of the power supply device 600 may be 66 mm. Optionally, the height H of the power supply device 600 may be 68 mm. Optionally, the height H of the power supply device 600 may be 70 mm.

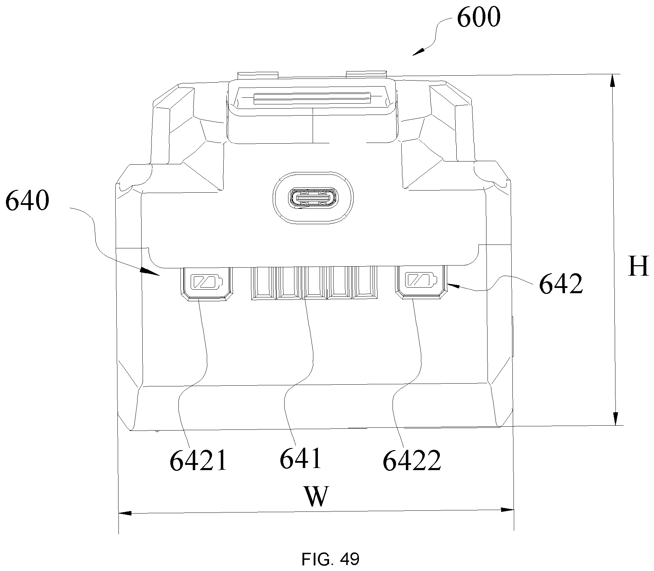

In some examples, when the power supply device 600 accommodates at most five battery packs 100, the length L of the power supply device 600 is less than or equal to 150 mm, the width W of the power supply device 600 is less than or equal to 90 mm, and the height H of the power supply device 600 is less than or equal to 80 mm. The power supply device 600 can accommodate at most five battery packs 100 in the manner shown in FIGS. 40 and 49, and FIG. 49 is a front view of FIG. 40.

When the battery pack 100 has a length of 5 mm and a diameter of 3 mm and the battery packs 100 are accommodated in the power supply device 600 in a manner shown in FIG. 40, the power supply device 600 has a length L of 146 mm, a width W of 83 mm, and a height H of 73 mm. In addition, optionally, the length L of the power supply device 600 may be 115 mm. Optionally, the length L of the power supply device 600 may be 124 mm. Optionally, the length L of the power supply device 600 may be 131 mm. Optionally, the width W of the power supply device 600 may be 68 mm. Optionally, the width W of the power supply device 600 may be 74 mm. Optionally, the width W of the power supply device 600 may be 78 mm. Optionally, the height H of the power supply device 600 may be 70 mm. Optionally, the height H of the power supply device 600 may be 74 mm. Optionally, the height H of the power supply device 600 may be 78 mm.

Generally, to make the volume of the power supply device 600 as small as possible, when the power supply device 600 accommodates at most three battery packs 100, the power supply device 600 can adopt the accommodation manner shown in FIG. 41 or 42. When the power supply device 600 can accommodate more than three battery packs 100 at most, the power supply device 600 preferably adopts the accommodation manner shown in FIG. 40 (that is, FIG. 41). In addition, when the power supply device 600 accommodates an even number of battery packs 100, such as four battery packs 100, accommodation compartments 603 in an upper layer and a lower layer are provided in the power supply device 600. When the number of battery packs 100 is greater, multiple upper and lower layers of accommodation compartments 603 may be provided.

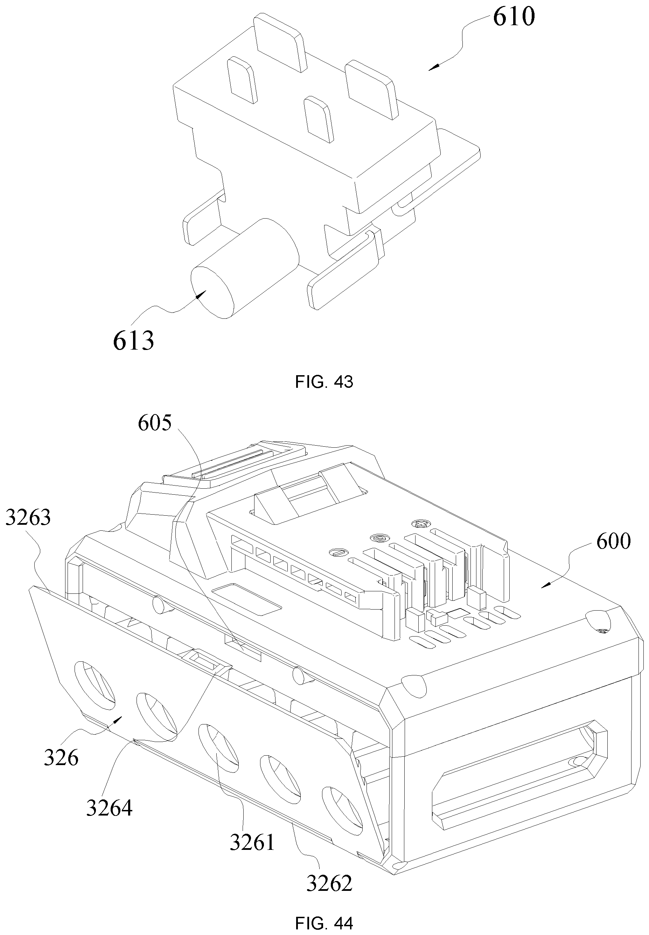

In some examples, a shock absorber 613 is disposed inside the accommodation compartment 603 (that is, the coupling portion 603) and configured to be an elastic element. Optionally, the shock absorber 613 may be a rubber post. As shown in FIGS. 33 and 43, the shock absorber 613 is disposed at the bottom of the accommodation compartment 603, and the shock absorber 613 is connected to the temperature acquisition device 610. Specifically, the shock absorber 613 is connected to the rear end of the temperature acquisition device 610. Optionally, the shock absorber 613 is detachably connected to the temperature acquisition device 610. Optionally, the shock absorber 613 is fixedly connected to the temperature acquisition device 610. Therefore, when the battery pack 100 is coupled to the accommodation compartment 603, the battery pack 100 compresses the shock absorber 613, and the shock absorber 613 is in indirect contact with the battery pack 100 to provide shock absorption for the battery pack 100.

Therefore, after the battery pack 100 is coupled into the accommodation compartment 603, the shock absorber 613 can reduce the amplitude of vibration or shaking of the battery pack 100, providing a certain buffering effect, thereby enhancing the safety of the battery pack 100. In addition, when the power supply device 600 is coupled to the power tool 200 and the power tool 200 is in operation, the vibration of the battery packs 100 can be reduced, thereby improving the safety of the battery packs 100 and the user experience.

The power supply device 600 includes the battery fixing members 320. After the battery pack 100 is inserted and mounted into the coupling portion 603, the battery fixing member 320 can fix the battery pack 100 in the coupling portion 603 to prevent the battery pack 100 from sliding out of the coupling portion 603 or moving in the coupling portion 603.

In some examples, in addition to the two types of battery fixing members 320 shown in FIGS. 10 to 13 of the present application, a third battery fixing member 320 shown in FIGS. 44 to 47 is further provided. As shown in FIGS. 44 to 47, the battery fixing member 320 includes a second fixing plate 326, fixing connectors 327, and fixing adjustment members 328. The second fixing plate 326 is disposed on a side surface of the power supply device 600. Multiple holes 3261 are formed on the second fixing plate 326. The number of the multiple holes 3261 is the same as the number of the coupled battery packs 100 so that the battery packs 100 can dissipate heat through the multiple holes 3261, thereby improving the safety of the battery packs 100 during charging and discharging. In the up and down direction, a first end 3262 of the second fixing plate 326 is fixedly connected to the power supply device 600, and a second end 3263 of the second fixing plate 326 is non-fixedly connected to the power supply device 600. The fixed connection between the first end 3262 and the power supply device 600 is specifically a rotatable connection. The non-fixed connection between the second end 3263 and the power supply device 600 is specifically described below. A protrusion 3264 is further formed on the second end 3263 of the second fixing plate 326, and a groove 605 matching the protrusion 3264 is formed on the side surface of the power supply device 600. The protrusion 3264 can mate with the groove 605 so that the second fixing plate 326 is closed on the side surface of the power supply device 600, and the protrusion 3264 can disengage from the groove 605 so that the second end 3263 of the second fixed plate 326 is away from the power supply device 600.

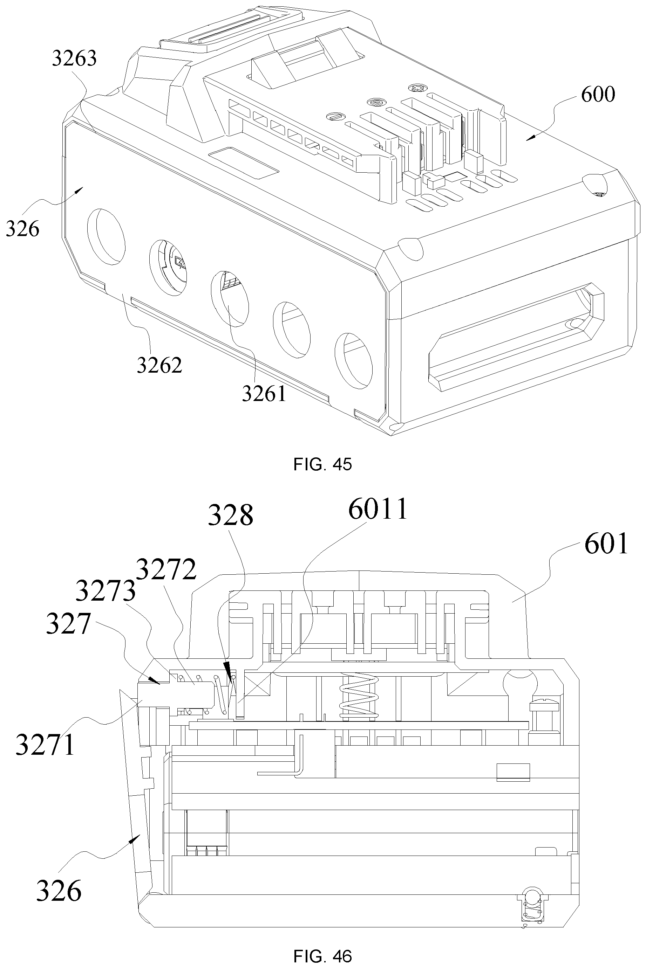

The fixing connectors 327 pass through the interior of the housing 601 of the power supply device 600. When the fixing connectors 327 are in an initial state as shown in FIGS. 46 and 47, two ends of each of the fixing connectors 327 protrude beyond the interior of the housing 601. A first end 3271 of the fixing connector 327 may be in contact with the second fixing plate 326, and a second end 3272 of the fixing connector 327 is disposed inside the power supply device 600. A limiting portion 3273 is formed on the fixing connector 327, and the limiting portion 3273 protrudes from the outer surface of the fixing connector 327. The fixing connectors 327 can move relative to the housing 601 in the left and right direction.

The fixing adjustment member 328 is sleeved on the fixing connector 327, and an end of the fixing adjustment member 328 is limited by the limiting portion 3273. Downward extension portions 6011 are formed inside the housing 601, and the other end of the fixing adjustment member 328 is limited by the extension portion 6011. That is, the fixing adjustment member 328 is disposed between the limiting portion 3273 and the extension portion 6011 and is limited by the limiting portion 3273 and the extension portion 6011. The fixing adjustment member 328 is an elastic element. Optionally, the fixing adjustment member 328 is a spring.

When the second fixing plate 326 needs to be closed, the second fixing plate 326 presses the fixing connectors 327, and the fixing connectors 327 move toward the inner side of the housing 601 to drive the limiting portions 3273 to move synchronously so that the fixing adjustment members 328 are compressed by the limiting portions 3273 toward the extension portions 6011, and then the protrusion 3264 at the second end 3263 of the second fixing plate 326 can mate with the groove 605, thereby closing the second fixing plate 326. When the second fixing plate 326 is released from closing, the second end 3263 of the second fixing plate 326 is pressed to disengage the protrusion 3264 from the groove 605, and based on the elastic forces of the fixing adjustment members 328, the fixing adjustment members 328 compress the limiting portions 3273 outward to drive the fixing connectors 327 to move outward so that the fixing connectors 327 return to the initial state.

In addition, the third battery fixing member 320 shown in FIGS. 44 to 47 and any one of the two types of battery fixing members 320 shown in FIGS. 10 to 13 can be combined and exist in the power supply device 600 at the same time, thereby further enhancing the fixing effect of the battery fixing members 320 on the battery packs 100 and preventing the battery packs 100 from sliding out of the coupling portions 603 or moving in the coupling portions 603.

In some examples, when the power supply device 600 is the battery assembly device 300 or the power supply device 600 that does not include the tool interface 604 is the power supply device 400, the power supply device 600 further includes a battery state display device 640. The battery state display device 640 is configured to display the single battery state information of one battery pack 100 or display the overall battery state information of multiple battery packs 100. The case where the power supply device 600 is the battery assembly device 300 including the tool interface 604 is used as an example for a specific description of the present application. When the power supply device 600 is the power supply device 400, the structure and function of the battery state display device 640 are the same as those of the battery assembly device 300, and the details are not repeated in the present application.

In some examples, the battery state information includes at least one of battery level information, a connection state, and alarm information. A light-emitting diode (LED) lamp 641 may display different colors corresponding to different pieces of state information. In addition, the battery state information may include other contents related to the battery packs 100, which is not limited in the present application.

The battery state display device 640 includes a group of LED lamps 641, and the battery state information is displayed by the LED lamps 641. The number of LED lamps 641 is the same as the number of battery packs 100 coupled to the power supply device 600. When the battery state display device 640 is configured to display the single battery state information of each battery pack 100, each LED lamp 641 corresponds to the each battery pack 100, the position of each LED lamp 641 corresponds to the position of the battery pack 100 whose battery state information is displayed by the LED lamp 641, and each LED lamp 641 is used for displaying the battery state information of a respective battery pack 100. When the battery state display device 640 is configured to display the overall battery state information of the multiple battery packs 100, multiple LED lamps 641 jointly display the overall battery state information of the multiple battery packs 100. For example, when the LED lamps 641 display battery level information, the multiple LED lamps 641 can indicate the overall battery state information of the multiple battery packs 100 by displaying the same battery level, or the multiple LED lamps 641 can display the battery level information in a different color from the color for displaying the battery level information of a single battery pack 100. In addition, the multiple LED lamps 641 can display the battery state information in other manners, and the specific manner in which the multiple LED lamps 641 jointly display the overall battery state information of the multiple battery packs 100 is not limited in the present application.

The power supply device 600 in FIG. 48 can be coupled to at most three battery packs 100, so the number of LED lamps 641 included in the power supply device 600 is also three. The three LED lamps 641 are disposed at the front end of the power supply device 600 and arranged in sequence. The LED lamp 641 on the left side is used for displaying the battery state information of the battery pack 100 on the left side, the LED lamp 641 in the middle is used for displaying the battery state information of the battery pack 100 in the middle, and the LED lamp 641 on the right side is used for displaying the battery state information of the battery pack 100 on the right side. The power supply device 600 in FIG. 49 can be coupled to at most five battery packs 100, so the number of LED lamps 641 included in the power supply device 600 is also five. The five LED lamps 641 are arranged in sequence at the front end of the power supply device 600 to display pieces of the battery state information of the corresponding battery packs 100, respectively. In addition, the LED lamps 641 may be disposed at any other position on the power supply device 600 that is convenient for the user to observe, which is not limited in the present application.

The battery state display device 640 further includes an operating assembly 642 that can be operated to select display information of the battery state display device 640. As shown in FIGS. 48 and 49, the operating assembly 642 includes a first operating assembly 6421 and a second operating assembly 6422. The first operating assembly 6421 is used for controlling the single battery state information of a single battery pack 100, and the first operating assembly 6421 is operated to switch the displayed content of the single battery state information. The second operating assembly 6422 is used for controlling the overall battery state information of multiple battery packs 100, and the second operating assembly 6422 is operated to switch the displayed content of the overall battery state information.

In some examples, the battery state display device 640 can display the state information of the power tool 200. Specifically, after the power supply device 600 is connected to the power tool 200, the state information of the power tool 200 is displayed via the battery state display device 640 on the power supply device 600. Optionally, the state information of the power tool 200 includes various information such as the rotational speed of the power tool 200 and a locked-rotor warning, which is not limited in the present application.

In some examples, the battery state display device is disposed on the power tool 200, and the battery state display device is the battery state display device 640 for displaying the single battery state information of one battery pack 100 or displaying the overall battery state information of the multiple battery packs 100 when the power tool 200 is coupled to the multiple battery packs 100. The specific method for setting the battery state display device, the method for displaying the battery state information, and the like are the same as those described above in the present application, and the details are not repeated here. Moreover, the battery state display device can also display the state information of the power tool 200.

By providing the battery state display device 640, the user can conveniently observe various battery state information of the battery packs 100 at any time, charge the power supply device 600 in time, or handle the battery packs 100 in time when a warning situation occurs, thereby improving the safety of the battery packs 100 and the convenience of user use. In addition, it is convenient for the user to observe the state information of the power tool 200 at any time, thereby facilitating timely processing.

In some examples, to improve the performance of the single-cell battery pack 100 so that the power density and energy density of the single-cell battery pack 100 are greater, the present application proposes a single-cell battery pack 100 including a composite pole piece. The single-cell battery pack 100 is described in detail below. The single-cell battery pack 100 specifically means that only one cell is included in the battery housing of the battery pack 100.

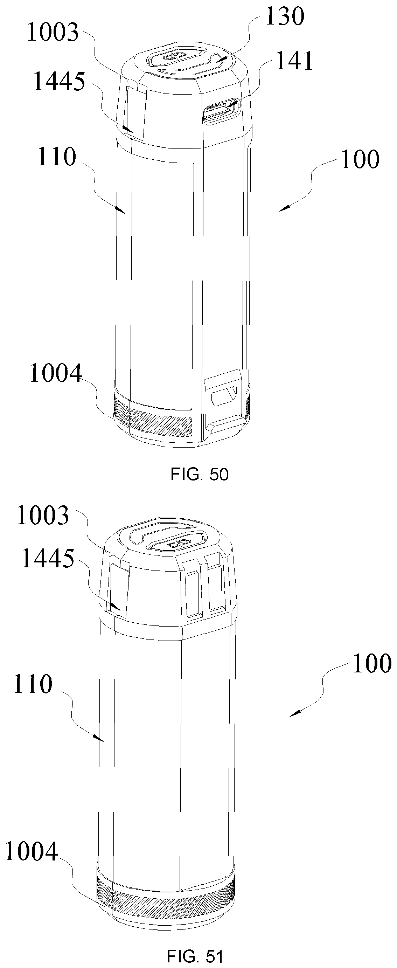

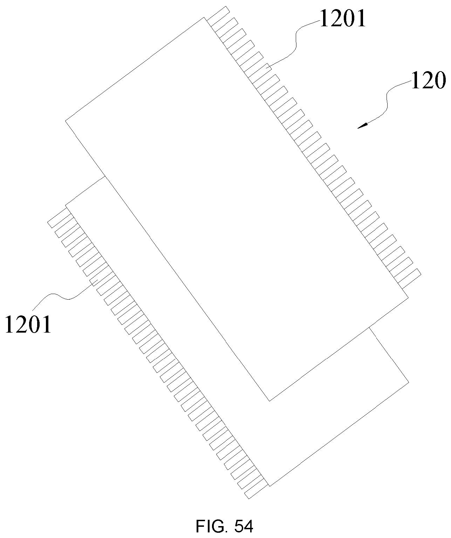

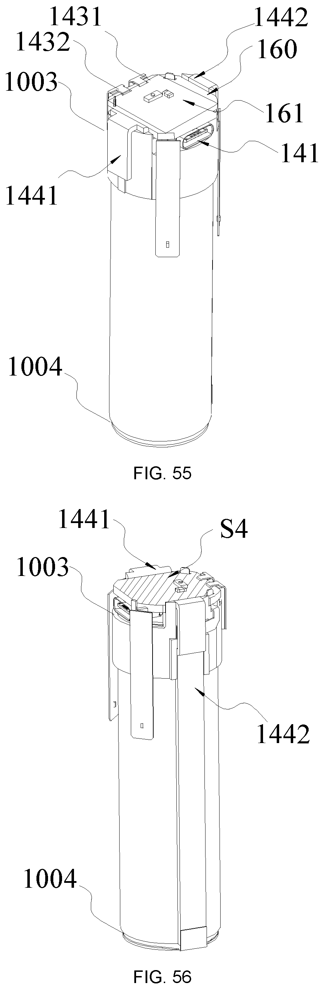

As shown in FIGS. 50 to 54, the battery pack 100 includes the battery housing 110 and a single cell 120, and the single cell 120 is disposed in the battery housing 110. The cell 120 is a full-tab battery, and full coverage tabs 1201 are disposed at the edges of current collectors of the positive electrode and/or the negative electrode of the cell 120. As shown in the simplified schematic view of FIG. 55, when the cell 120 is uncoiled and unfolded, the full coverage tabs 1201 are disposed at the edges of the current collectors of the positive electrode and the negative electrode of the cell 120. The rated voltage of the battery pack 100 is 4 V, and the battery pack 100 supplies power to the power tool 200 with a rated voltage of 4 V.

The outer contour dimension of the battery housing 110 is fixed and configured to be a standard dimension, and the interior of the battery housing 110 is provided with an adjustable support structure 1101 or designed with different internal dimensions to form accommodation spaces for accommodating at least two cells 120 of different dimensions. Therefore, based on the adjustable support structure 1101 or different internal dimensions, the cells 120 of various dimensions can be stably located in the battery housing 110, and the cells 120 do not shake relative to the battery housing 110.

In some examples, the adjustable support structure 1101 includes detachable cell holders of at least two dimensions, and the cell holders of different dimensions are mounted to adapt to the cells 120 of different models. That is, when the cell 120 is mounted in the battery housing 110, the detachable cell holder is located between the cell 120 and the battery housing 110 to stably support the cell 120. The cell holder may be engaged in the battery housing 110 or may be coupled to the battery housing 110 in other detachable manners, which is not limited in the present application.

In some examples, the adjustable support structure 1101 includes a slidable partition, multiple clamping portions are disposed at different positions in the length direction inside the battery housing 110, the multiple clamping portions mate with the slidable partition, and the slidable partition can slide to multiple different mounting positions to form accommodation spaces for accommodating the cells 120 of different models in the battery housing 110.

In some examples, the adjustable support structure 1101 includes detachable filling devices with multiple dimensions matching the multiple cells 120 of different dimensions, respectively so that the filling devices of different dimensions are inserted to form accommodation spaces for accommodating the cells 120 of different models in the battery housing 110.

In some examples, the adjustable support structure 1101 includes an elastic telescopic structure formed by at least part of the inner wall of the battery housing 110. After the cells 120 of different models are disposed in the battery housing 110, different compression forces are applied to the elastic telescopic structure so that the elastic telescopic structure is compressed to different compression degrees, and the elastic telescopic structure is compressed to generate different compression forces.

In some examples, the adjustable support structure 1101 may be any two of the preceding four structures, any three of the preceding four structures, or a combination of the four structures, which is not limited in the present application.

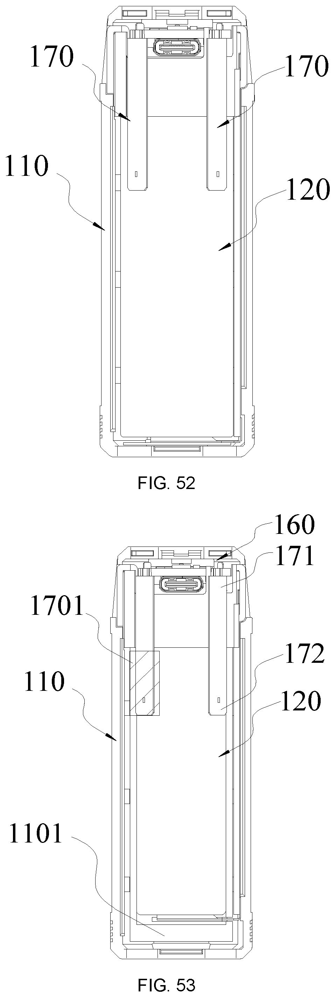

The case where the battery housing 110 accommodates the cells 120 of two dimensions is used as an example for a specific description of the present application. The cell 120 of the first dimension may be a 21700 cell, the cell 120 of the second dimension may be a 18650 cell, and the dimension of the 21700 cell is greater than the dimension of the 18650 cell. As shown in FIGS. 52 and 53, when the cell 120 of a larger dimension is mounted into the battery housing 110, since the cell 120 is larger in dimension and the dimension of the cell 120 matches the size of the accommodation space of the battery housing 110, the cell 120 can be directly mounted into the battery housing 110. When the cell 120 of a smaller dimension is mounted into the battery housing 110, the adjustable support structure 1101 matching the dimension of the cell 120 is provided in the battery housing 110, and the cell 120 of a smaller dimension is mounted into the battery housing 110 via the adjustable support structure 1101.

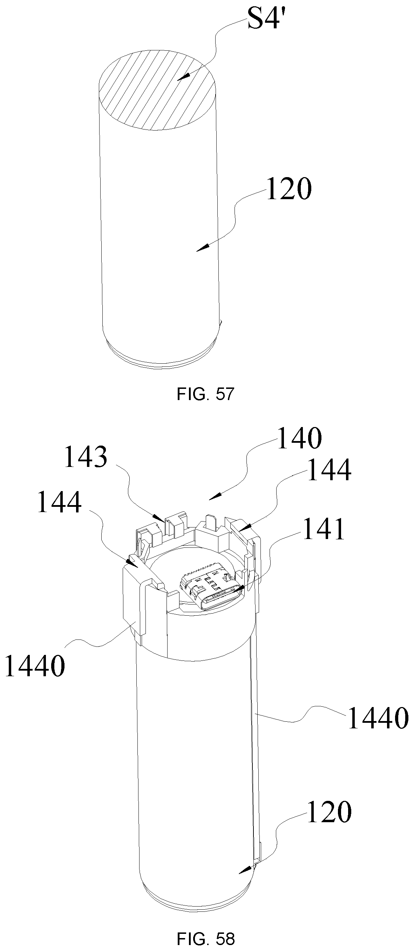

The battery pack 100 further includes a circuit board 160. The battery pack 100 includes a first end 1003 and a second end 1004 opposite to the first end 1003 in the length direction. As shown in FIGS. 55 and 56, the circuit board 160 is disposed at the first end 1003 of the battery pack 100 in the length direction. In addition, the circuit board 160 may also be disposed at the second end 1004. As shown in FIGS. 56 and 57, the board area S4 of the circuit board 160 is less than or equal to 1.2 times the cross-sectional area S4' of the cell 120. Therefore, after the circuit board 160 is mounted at an end of the cell 120, the board area S4 of the circuit board 160 does not exceed the cross-sectional area of the battery pack 100, and the circuit board 160 does not have a portion that exceeds the external battery housing 110 of the battery pack 100, thereby avoiding the following case: the volume of the battery pack 100 is increased due to the dimension of the circuit board 160. In some examples, a 3D printed protective layer 161 is disposed on the circuit board 160, the 3D printed protective layer 161 wraps the surface of the circuit board 160, and the 3D printed protective layer 161 is waterproof so that the circuit board 160 has better waterproof performance, thereby ensuring the service life of the circuit board 160.

The battery pack 100 further includes a battery energy transmission terminal 140, and the battery energy transmission terminal 140 includes a battery USB Type-C terminal 141, a signal terminal 143, and a composite pole piece 144. The battery USB Type-C terminal 141, the signal terminal 143, and the composite pole piece 144 are all electrically connected to the circuit board 160 and transmit the information about the battery pack 100 through the circuit board 160. As shown in FIG. 50, a Type-C interface is disposed on the side surface of the battery housing 110, and the battery USB Type-C terminal 141 is disposed in the Type-C interface. The battery USB Type-C terminal 141 is a bidirectional USB Type-C terminal. The signal terminal 143 is configured to transmit data of the battery pack 100 and includes a first signal terminal 1431 and a second signal terminal 1432. The first signal terminal 1431 is used for transmitting temperature data of the battery pack 100, and the second signal terminal 1432 is used for transmitting battery type data of the battery pack 100. For example, the second signal terminal 1432 transmits the data that the battery pack 100 adopts the 18650 cell or transmits the data that the battery pack 100 adopts the 21700 cell. The composite pole piece 144 is electrically connected to the cell 120 and includes a positive composite pole piece 1441 and a negative composite pole piece 1442.

As shown in FIGS. 55, 56, and 58, the battery USB Type-C terminal 141, the signal terminal 143, and the composite pole piece 144 are all disposed on the side surface of the battery pack 100, the battery USB Type-C terminal 141, the signal terminal 143, and the composite pole piece 144 are arranged around the circumference of the battery housing 110, and the first signal terminal 1431 and the second signal terminal 1432 are adjacent to each other, that is, the first signal terminal 1431 and the second signal terminal 1432 are adjacent to each other. In the length direction of the battery pack 100, the signal terminal 143 and the composite pole piece 144 both partially overlap the cell 120, and the overlapping portions of the composite pole piece 144 and the cell 120 are main regions 1440. Optionally, as shown in FIGS. 55, 56, and 58, the signal terminal 143 is opposite to the battery USB Type-C terminal 141, and the positive composite pole piece 1441 is opposite to the negative composite pole piece 1442. In addition, the battery USB Type-C terminal 141, the signal terminal 143, and the composite pole piece 144 may have other relative positional relationships, which is not limited in the present application. The voltage at the battery USB Type-C terminal 141 is set to 9 V, 12 V, or 15 V so that the electrical energy transmission power of the battery USB Type-C terminal 141 is greater than or equal to 15 W, which is relatively large. Optionally, the electrical energy transmission power of the battery USB Type-C terminal 141 is 18 W. Optionally, the electrical energy transmission power of the battery USB Type-C terminal 141 is 20 W. Optionally, the electrical energy transmission power of the battery USB Type-C terminal 141 is 25 W.

The composite pole piece 144 is formed by stacking at least two metal pole pieces and is used for transmitting the current of the battery pack 100 to the outside. The at least two metal pole pieces forming the composite pole piece 144 are made of different materials, that is, the at least two metal pole pieces are made of different metals. The at least two metal pole pieces forming the composite pole piece 144 have different thicknesses, and the overcurrent capabilities of the at least two metal pole pieces are different.

Each of the positive composite pole piece 1441 and the negative composite pole piece 1442 is formed by at least two metal pole pieces. The case where the composite pole piece 144 is formed by two metal pole pieces, which are a first metal pole piece 1443 and a second metal pole piece 1444, is used as an example for a description in the present application, that is, each of the positive composite pole piece 1441 and the negative composite pole piece 1442 is formed by the two metal pole pieces, which are the first metal pole piece 1443 and the second metal pole piece 1444. The positive composite pole piece 1441 and the negative composite pole piece 1442 may be opposite to each other at the first end 1003 of the battery pack 100 in the length direction or may be opposite to each other at the second end 1004 of the battery pack 100 in the length direction, which is not limited in the present application.

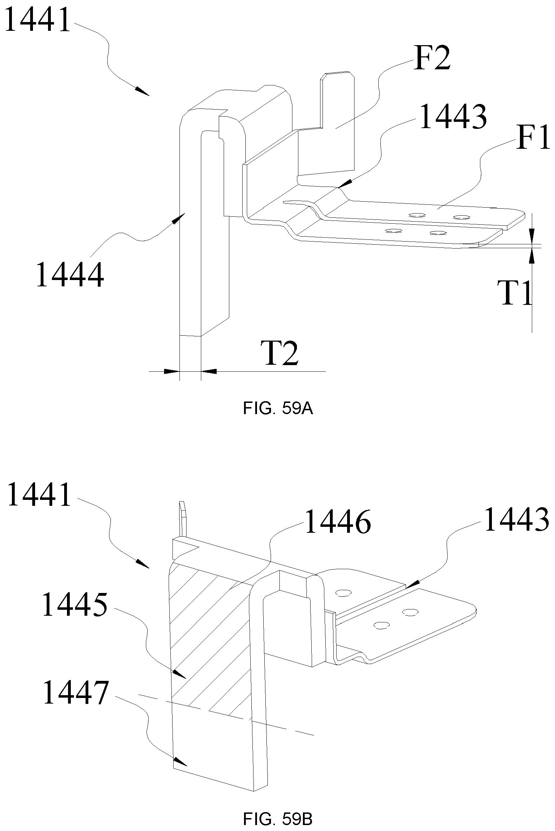

As shown in FIGS. 59A to 59C, the first metal pole piece 1443 is fixedly connected to the second metal pole piece 1444. Specifically, the first metal pole piece 1443 is welded to the second metal pole piece 1444. Optionally, the first metal pole piece 1443 may be laser welded to the second metal pole piece 1444. Optionally, the first metal pole piece 1443 may be butt welded to the second metal pole piece 1444. The first metal pole piece 1443 and the second metal pole piece 1444 are made of different materials. Optionally, the first metal pole piece 1443 may be made of NB109, which is a copper-nickel-tin-phosphorus alloy. Optionally, the second metal pole piece 1444 may be made of T2 copper, which is a red copper material.

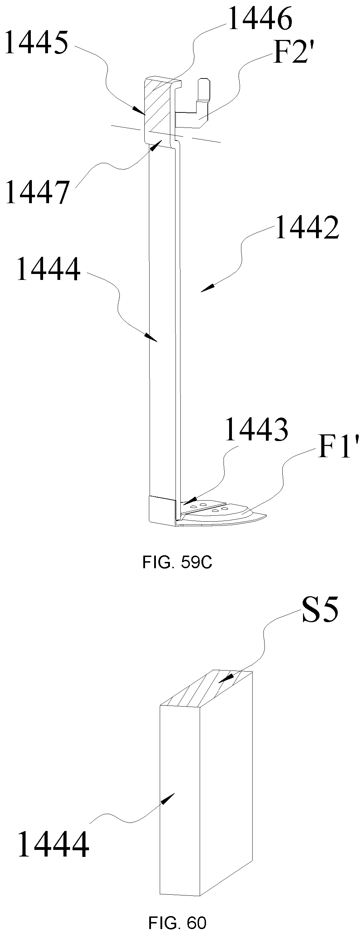

FIGS. 59A and 59B show the positive composite pole piece 1441, and FIG. 59C shows the negative composite pole piece 1442. The first metal pole piece 1443 in each of the positive composite pole piece 1441 and the negative composite pole piece 1442 may be connected to the cell 120. Specifically, as shown in FIGS. 55, 59A, and 59B, the positive composite pole piece 1441 is disposed at the first end 1003 of the battery pack 100, the first metal pole piece 1443 in the positive composite pole piece 1441 includes a first part F1 and a second part F2, the first part F1 and the second part F2 are directly electrically connected, the first part F1 is electrically connected to the positive electrode of the cell 120, and the second part F2 is electrically connected to the circuit board 160. As shown in FIG. 56, the negative composite pole piece 1442 extends from the first end 1003 of the battery pack 100 to the second end 1004 of the battery pack 100. Similarly, the first metal pole piece 1443 in the negative composite pole piece 1442 includes a first part F1' and a second part F2', the first part F1' and the second part F2' are electrically connected through the second metal pole piece 1444, the first part F1' is electrically connected to the negative electrode of the cell 120, and the second part F2' is electrically connected to the circuit board 160.

The composite pole piece 144 includes a connection region 1445. Specifically, a sheet region portion of the composite pole piece 144 exposed outside the battery housing 110 forms the connection region 1445, and the connection region 1445 can be electrically connected to the tool terminal (not shown in the figure) of the power tool 200 to transmit the current of the battery pack 100 to the power tool 200 to supply power to the power tool 200. The connection region 1445 is specifically formed on the second metal pole piece 1444 in the composite pole piece 144, and the connection region 1445 is formed on each of the second metal pole piece 1444 in the positive composite pole piece 1441 and the second metal pole piece 1444 in the negative composite pole piece 1442.

As shown in FIGS. 50 and 51, the connection region 1445 is disposed at the first end 1003 of the battery pack 100 in the length direction. In addition, the connection region 1445 may be disposed at the second end 1004 opposite to the first end 1003 of the battery pack 100 in the length direction. In some examples, the area of the connection region 1445 is greater than or equal to 45 mm². The area of the connection region 1445 is larger to ensure the efficiency of current transmission from the battery pack 100 to the power tool 200 and ensure that the battery pack 100 can transmit a larger current to the power tool 200. As shown in FIGS. 59B and 59C, at least part of the surface of the second metal pole piece 1444 is covered with a wear-resistant conductive coating 1446. Specifically, the surface of the connection region 1445 included in the second metal pole piece 1444 is covered with the wear-resistant conductive coating 1446 so that the wear resistance of the connection region 1445 can be improved, the probability of wear and damage caused by frequent contact and friction between the connection region 1445 and the tool terminal can be reduced, and the service life of the connection region 1445 can be extended. The wear-resistant conductive coating 1446 may be a nickel-plated coating or a coating made of other materials, which is not limited in the present application.

In some examples, a non-connection region 1447 is further formed on the second metal pole piece 1444, the non-connection region 1447 is wrapped by the battery housing 110, no current flows through the non-connection region 1447, and the non-connection region 1447 is used for dissipating heat from the second metal pole piece 1444. When heat is generated when current is transmitted to the power tool 200 through the second metal pole piece 1444, the heat generated on the second metal pole piece 1444 can be dissipated via the non-connection region 1447, thereby increasing the battery life of the battery pack 100.

The thickness T1 of the first metal pole piece 1443 is less than the thickness T2 of the second metal pole piece 1444, that is, the thickness T1 of the first metal pole piece 1443 connected to the cell 120 is less than the thickness T2 of the second metal pole piece 1444 on which the connection region 1445 is formed. Therefore, when the current flowing out of the cell 120 flows to the second metal pole piece 1444 via the first metal pole piece 1443, a larger current can flow through the second metal pole piece 1444 due to the thicker second metal pole piece 1444 so that a larger current can flow through the composite pole piece 144. The ratio of the thickness T1 of the first metal pole piece 1443 to the thickness T2 of the second metal pole piece 1444 is greater than or equal to 0.1 and less than or equal to 0.5. Optionally, the ratio of the thickness T1 of the first metal pole piece 1443 to the thickness T2 of the second metal pole piece 1444 is 0.15. Optionally, the ratio of the thickness T1 of the first metal pole piece 1443 to the thickness T2 of the second metal pole piece 1444 is 0.21. Optionally, the ratio of the thickness T1 of the first metal pole piece 1443 to the thickness T2 of the second metal pole piece 1444 is 0.33. Optionally, the ratio of the thickness T1 of the first metal pole piece 1443 to the thickness T2 of the second metal pole piece 1444 is 0.4.

In some examples, as shown in FIG. 60, the cross-sectional area S5 of a portion of the composite pole piece 144 transmitting the current is greater than or equal to 2 mm². The cross-sectional area S5 of the portion of the composite pole piece 144 transmitting the current specifically refers to the cross-sectional area S5 of the second metal pole piece 1444, that is, the cross-sectional area S5 of the second metal pole piece 1444 included in each of the positive composite pole piece 1441 and the negative composite pole piece 1442 is greater than or equal to 2 mm². Optionally, the cross-sectional area S5 of the second metal pole piece 1444 may be 2.5 mm². Optionally, the cross-sectional area S5 of the second metal pole piece 1444 may be 3 mm². Optionally, the cross-sectional area S5 of the second metal pole piece 1444 may be 4 mm². Optionally, the cross-sectional area S5 of the second metal pole piece 1444 may be 5 mm². Optionally, the cross-sectional area S5 of the second metal pole piece 1444 may be 6 mm².

In some examples, the electrical energy transmission power of the composite pole piece 144 is greater than or equal to 170 W. Optionally, the electrical energy transmission power of the composite pole piece 144 is 175 W. Optionally, the electrical energy transmission power of the composite pole piece 144 is 180 W. Optionally, the electrical energy transmission power of the composite pole piece 144 is 190 W. Optionally, the electrical energy transmission power of the composite pole piece 144 is 200 W.

The composite pole piece 144 is formed by two metal pole pieces of different thicknesses so that a larger current can flow through the composite pole piece 144 due to the thicker second metal pole piece 1444, and the maximum continuous operating current transmitted by the composite pole piece 144 is greater than or equal to 50 A. The duration of the maximum continuous operating current transmitted by the composite pole piece 144 is greater than or equal to 4s, and the composite pole piece 144 can continuously transmit the maximum continuous operating current for a relatively long period. Optionally, the duration of the maximum continuous operating current transmitted by the composite pole piece 144 is 5s. Optionally, the duration of the maximum continuous operating current transmitted by the composite pole piece 144 is 7s.

After a larger current can flow through the composite pole piece 144, the composite pole piece 144 can transmit a larger current to the battery pack 100, thereby making the power density and energy density of the battery pack 100 larger. Moreover, since the composite pole piece 144 can transmit a larger current, the discharge rate of the cell 120 is larger. In addition, the AC internal resistance of the cell 120 is smaller so that the power density is further increased.

In some examples, the discharge rate of the cell 120 is greater than or equal to 10 C. Optionally, the discharge rate of the cell 120 is 12 C. Optionally, the discharge rate of the cell 120 is 14 C. Optionally, the discharge rate of the cell 120 is 15 C. In some examples, the AC internal resistance of the cell 120 is less than or equal to 5.5 mΩ. Optionally, the AC internal resistance of the cell 120 is 5.2 mΩ. Optionally, the AC internal resistance of the cell 120 is 5 mΩ. Optionally, the AC internal resistance of the cell 120 is 4.8 mΩ. Optionally, the AC internal resistance of the cell 120 is 4.5 mΩ.

In some examples, the continuous power density of the battery pack 100 is greater than or equal to 2.5 W/cm³, where the continuous power density is the ratio of the continuous power of the battery pack 100 to the volume of the battery pack 100. When the composite pole piece 144 transmits the maximum continuous operating current until the cell 120 is exhausted, or the composite pole piece 144 transmits the maximum continuous operating current until the battery pack 100 is over-temperature protected, the power outputted by the battery pack 100 in both cases is continuous power. Optionally, the continuous power density of the battery pack 100 is 2.32 W/cm³. Optionally, the continuous power density of the battery pack 100 is 2.4 W/cm³. Optionally, the continuous power density of the battery pack 100 is 2.8 W/cm³. Optionally, the continuous power density of the battery pack 100 is 3.5 W/cm³. Optionally, the continuous power density of the battery pack 100 is 4 W/cm³. For example, for a 18650 cell with a smaller volume, after the composite pole piece 144 is used, the continuous power density may be 3.7 W/cm³. For a 21700 cell with a larger volume, after the composite pole piece 144 is used, the continuous power density may be 3.9 W/cm³.

In some examples, the instantaneous power density of the battery pack is greater than or equal to 8.5 W/cm³, where the instantaneous power density is the ratio of the instantaneous power of the battery pack 100 to the volume of the battery pack 100, the instantaneous power is pulsed power, and the power corresponding to the maximum allowable discharge current during the period when the composite pole piece 144 transmits the maximum continuous operating current is the instantaneous power. Optionally, the instantaneous power density of the battery pack 100 is 8.7 W/cm³. Optionally, the instantaneous power density of the battery pack 100 is 9 W/cm³. Optionally, the instantaneous power density of the battery pack 100 is 12 W/cm³. Optionally, the instantaneous power density of the battery pack 100 is 15 W/cm³. For example, for a 18650 cell with a smaller volume, after the composite pole piece 144 is used, the instantaneous power density may be 14.5 W/cm³. For a 21700 cell with a larger volume, after the composite pole piece 144 is used, the instantaneous power density may be 10 W/cm³.

In some examples, the continuous power density of the battery pack 100 is greater than or equal to 1.2 W/g, where the continuous power density is the ratio of the continuous power of the battery pack 100 to the weight of the battery pack 100. The definition of continuous power is described above in the present application, and the details are not repeated here. Optionally, the continuous power density of the battery pack 100 is 1.5 W/g. Optionally, the continuous power density of the battery pack 100 is 1.7 W/g. Optionally, the continuous power density of the battery pack 100 is 2.2 W/g. For example, for a 18650 cell with a smaller volume, after the composite pole piece 144 is used, the continuous power density may be 2.1 W/g. For a 21700 cell with a larger volume, after the composite pole piece 144 is used, the continuous power density may be 2 W/g.

In some examples, the instantaneous power density of the battery pack 100 is greater than or equal to 4.5 W/g. The instantaneous power density is the ratio of the instantaneous power of the battery pack 100 to the weight of the battery pack 100. The definition of instantaneous power is described above in the present application, and the details are not repeated here. Optionally, the instantaneous power density of the battery pack 100 is 5 W/g. Optionally, the instantaneous power density of the battery pack 100 is 6.5 W/g. Optionally, the instantaneous power density of the battery pack 100 is 8.5 W/g. For example, for a 18650 cell with a smaller volume, after the composite pole piece 144 is used, the instantaneous power density may be 8 W/g. For a 21700 cell with a larger volume, after the composite pole piece 144 is used, the instantaneous power density may be 5.1 W/g.

In some examples, the energy density of the battery pack 100 is greater than or equal to 35 Ah/kg. The energy density is the ratio of the product of the capacity and voltage of the battery pack 100 to the weight of the battery pack 100. Optionally, the energy density of the battery pack 100 may be 36 Ah/kg. Optionally, the energy density of the battery pack 100 may be 38 Ah/kg. Optionally, the energy density of the battery pack 100 may be 42 Ah/kg. Optionally, the energy density of the battery pack 100 may be 45 Ah/kg. For example, for a 18650 cell with a smaller volume, the capacity is 3Ah and the energy density may be 44 Ah/kg. For a 21700 cell with a larger volume, the capacity is 4 Ah and the energy density may be 40 Ah/kg.

In some examples, the battery pack 100 further includes at least one thin film NTC thermistor 170, a first end 171 of the thin film NTC thermistor 170 is connected to the circuit board 160, and a second end 172 of the thin film NTC thermistor is attached to the surface of the cell 120. In this manner, the thin film NTC thermistor senses the temperature on the surface of the cell 120 and transmits the temperature to the circuit board 160. The first signal terminal 1431 connected to the circuit board 160 transmits the temperature information of the battery pack 100 to the power tool 200 so that the power tool 200 can perform corresponding control based on the temperature of the battery pack 100.

As shown in FIGS. 52 and 53, the case where two thin film NTC thermistors 170 are provided is used as an example for a specific description of the present application. The battery pack 100 further includes fixing members 1701 each of which is used for fixedly attaching the second end 172 of a respective thin film NTC thermistor to the surface of the cell 120. Optionally, the fixing member 1701 may be a heat-resistant flexible adhesive member for directly adhering the second end 172 of the thin film NTC thermistor to the surface of the cell 120. Optionally, the fixing member 1701 may be an abutment member for abutting the second end 172 of the thin film NTC thermistor against the surface of the cell 120. In addition, the fixing member 1701 may be another structure for fixing the thin film NTC thermistor 170 to the surface of the cell 120, which is not limited in the present application.

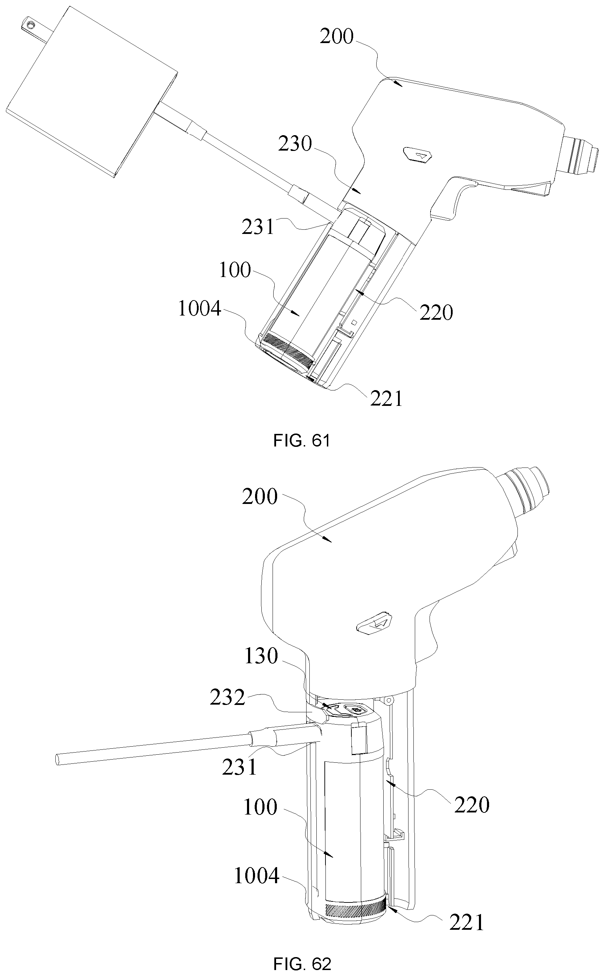

In some examples, as shown in FIGS. 61 to 63, the power tool 200 to which the battery pack 100 is adapted includes the battery mounting portion 220 for accommodating the battery pack 100. The accommodation space of the battery mounting portion 220 is a fixed accommodation space that matches the outer contour dimension of the battery housing 110. Optionally, the battery mounting portion 220 is an open mounting portion, and the battery mounting portion 220 includes an open end 221. When the battery pack 100 is mounted into the battery mounting portion 220, the first end 1003 or the second end 1004 of the battery pack 110 in the length direction is basically flush with the open end 221.

In some examples, when the battery pack 100 is mounted to the power tool 200, a battery pack clamping portion is disposed on the battery pack 100, a tool clamping portion is disposed in the battery mounting portion 220 of the power tool 200, and the battery pack clamping portion mates with the tool clamping portion so that the battery pack 100 can be detachably mounted to the power tool 200. The specific structures of the battery pack clamping portion and the tool clamping portion are not limited in the present application and may be any structures that can achieve cooperative clamping.

In some examples, as shown in FIGS. 61 to 63, after the battery pack 100 is mounted into the power tool 200, an opening 231 matching the Type-C interface is formed on a tool housing 230 of the power tool 200 so that the battery pack 100 can be charged by directly inserting a charger interface through the opening 231 into the Type-C interface without removing the battery pack 100 from the power tool 200.

In some examples, the battery pack 100 further includes a light display device 130 (that is, the indicator light 130) at least used for indicating the state information of the cell 120. The light display device 130 is used for indicating the battery level of the battery pack 100. The light display device 130 may include two light indications: a green light and a red light, may include three light indications: a green light, a yellow light, and a red light, or may have any other light indications that can distinguish between the battery levels of the battery pack 100, which is not limited in the present application.

Optionally, as shown in FIG. 50, the light display device 130 and the connection region 1445 are both located at the first end 1003 of the battery housing 110 in the length direction. In this case, the battery USB Type-C terminal 141 and the signal terminal 143 are also located at the first end 1003 of the battery housing 110 in the length direction, and the first signal terminal 1431 and the second signal terminal 1432 are adjacent to each other at the first end 1003. When the battery pack 100 is coupled to the power tool 200, specifically the signal terminal 143 and the connection region 1445 are coupled to the power tool 200, the light display device 130 is wrapped by the tool housing 230. In addition to being disposed at the top of the first end 1003 as shown in FIG. 50, the light display device 130 may also be disposed on the side of the first end 1003 near the battery USB Type-C terminal 141. As shown in FIG. 62, a transparent window 232 matching the light display device 130 is formed on the tool housing 230 so that the user can observe the indication of the light display device 130 at any time through the transparent window 232.

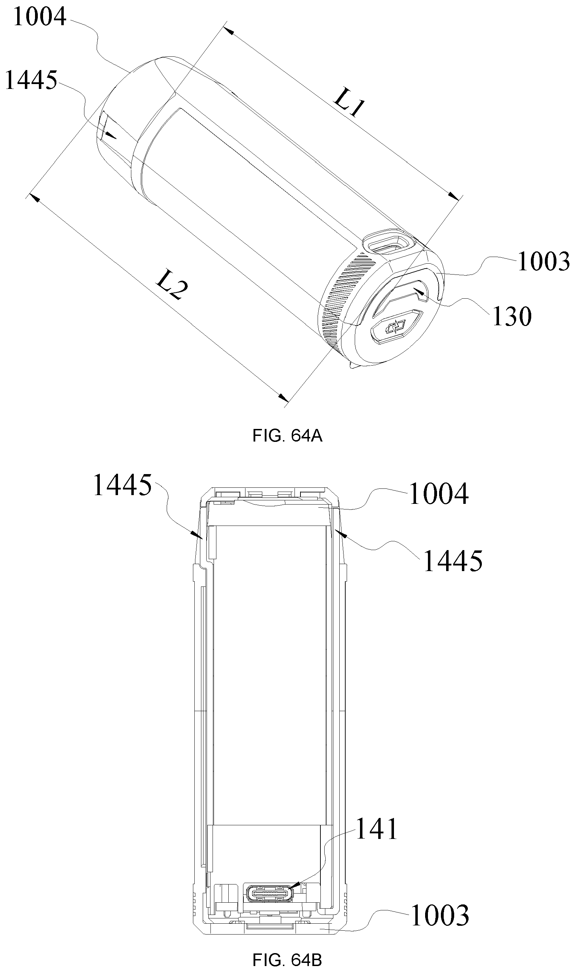

Optionally, as shown in FIGS. 64A and 64B, the ratio of the shortest distance L1 between the light display device 130 and the connection region 1445 to the total length L2 of the battery pack 100 is greater than or equal to 0.8, that is, in this case, the light display device 130 is located at the first end 1003 of the battery housing 110 in the length direction, and the connection region 1445 is located at the second end 1004 of the battery housing 110 in the length direction. In this case, the battery USB Type-C terminal 141 and the light display device 130 are both located at the first end 1003 of the battery housing 110 in the length direction, the signal terminal 143 and the connection region 1445 are both located at the second end 1004 of the battery housing 110 in the length direction, and the first signal terminal 1431 and the second signal terminal 1432 are adjacent to each other at the second end 1004.

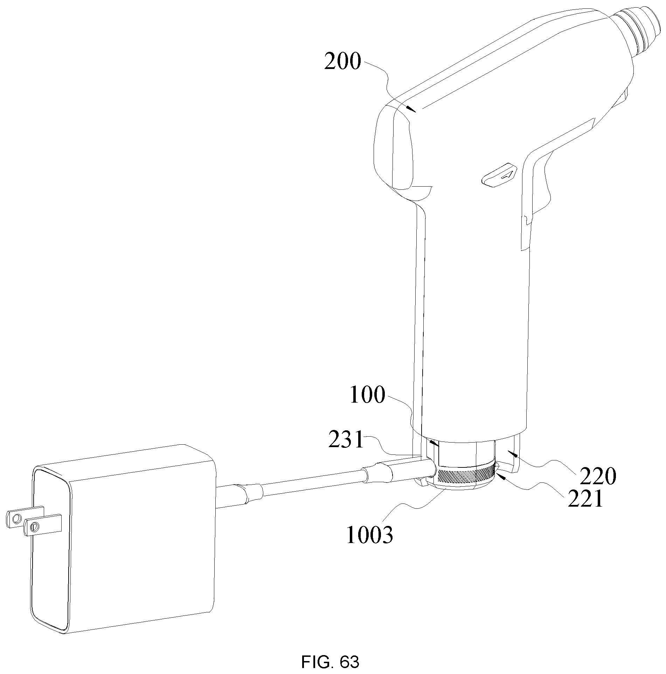

When the battery pack 100 is coupled to the power tool 200, specifically the signal terminal 143 and the connection region 1445 are coupled to the power tool 200. Therefore, by setting the signal terminal 143 and the connection region 1445 at an end of the battery pack 100 and setting the light display device 130 and the battery USB Type-C terminal 141 at the other end of the battery pack 100, as shown in FIG. 63, when the battery pack 100 is coupled to the power tool 200, the user can observe the state of the battery pack 100 at any time via the open end 221 of the battery mounting portion 220, and then the opening 231 and the battery USB Type-C terminal 141 mate with each other, thereby charging the battery pack 100 at any time.

In some examples, the battery housing 110 is made of a thermally conductive material, and heat can be transferred from the cell 120 to the battery housing 110 and then dissipated outward. The thermal conductivity of the battery housing 110 is greater than or equal to 1.1 W/(m·K), which is relatively large. Optionally, the thermal conductivity of the battery housing 110 is 1.3 W/(m·K). Optionally, the thermal conductivity of the battery housing 110 is 1.5 W/(m·K). When the adjustable support structure 1101 is provided to form accommodation spaces for accommodating at least two cells 120 of different dimensions inside the battery housing 110, the adjustable support structure 1101 is also made of a thermally conductive material. After the cells 120 transfer heat to the adjustable support structure 1101, the adjustable support structure 1101 transfers the heat to the battery housing 110, and then the heat is dissipated outward. Optionally, the thermal conductivity of the adjustable support structure 1101 may be the same as that of the battery housing 110.

In some examples, vents 1005 are disposed on the end surfaces of the first end 1003 and the second end 1004 of the battery housing 110 in the length direction, respectively to form the axial airflow from the first end 1003 to the second end 1004. An airflow guiding channel in the same direction as the length direction of the cell 120 is formed inside the battery housing 110 to guide the airflow entering from the first end 1003 or the second end 1004 to flow through the surface of the cell 120 to fully dissipate heat for the cell 120. The airflow guiding channel is fixed by the ribs inside the battery housing 110, and the airflow guiding channel is adjacent to the main regions 1440 of the composite pole piece 144 to dissipate heat for the composite pole piece 144. Optionally, the airflow guiding channel is a straight air duct, and the airflow guiding channel is a straight channel. Optionally, the airflow guiding channel is a labyrinth air duct, and the airflow guiding channel includes multiple bends, baffles, partitions, or special flow-guiding structures to form a channel with a tortuous and complex path.

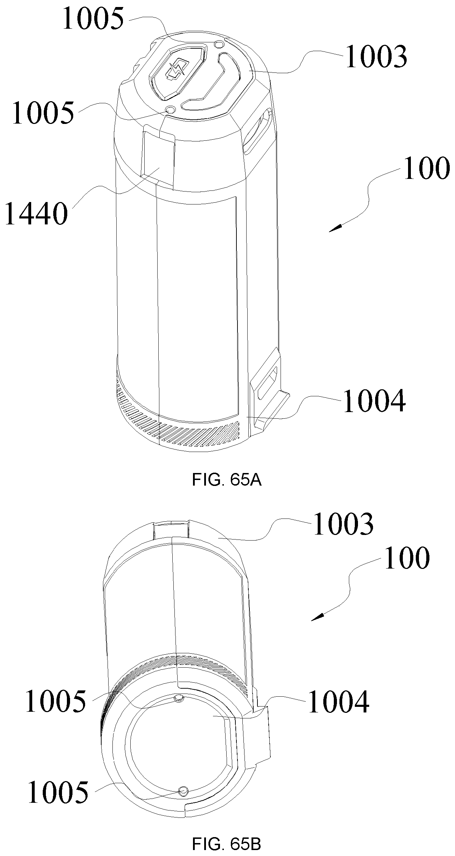

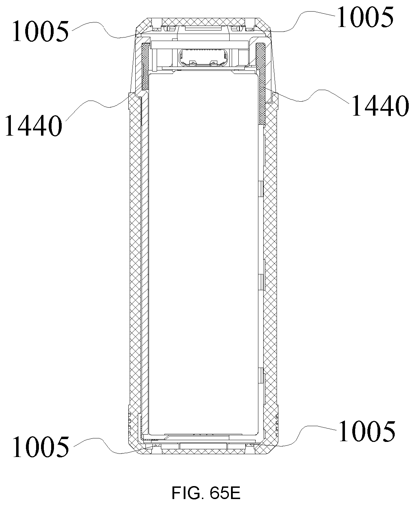

Optionally, two vents 1005 are provided, one vent 1005 is provided on the end surface of the first end 1003, one vent 1005 is provided on the end surface of the second end 1004, and the two vents 1005 are symmetrical in the length direction of the cell 120. Optionally, four vents 1005 are provided, that is, as shown in FIGS. 65A to 65E, two vents 1005 are provided on the end surface of the first end 1003, two vents 1005 are provided on the end surface of the second end 1004, and the two vents 1005 on the end surface of the first end 1003 and the two vents 1005 on the end surface of the second end 1004 are symmetrical in the length direction of the cell 120. In addition, the number of the vents 1005 may be three, five, six, or any other number greater than two, which is not limited in the present application.

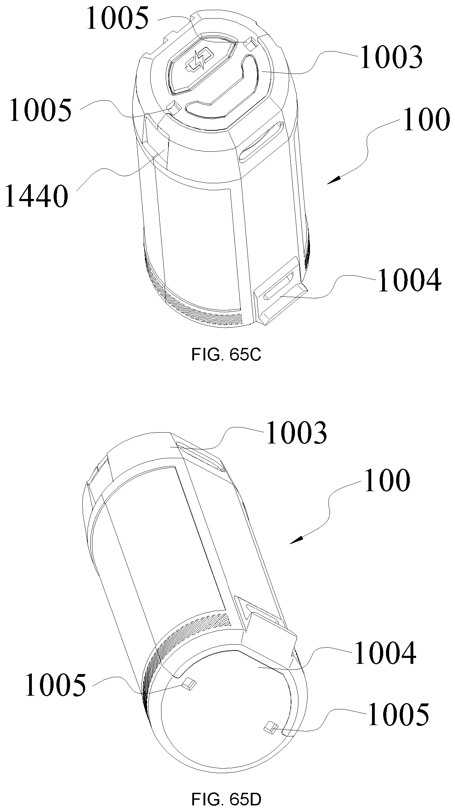

Optionally, the shape of the vent 1005 may be a circle as shown in FIGS. 65A and 65B. Optionally, the shape of the vent 1005 may be a rectangle as shown in FIGS. 65C and 65D. In addition, the shape of the vent 1005 may be any shape such as a triangle, a trapezoid, or an irregular shape, which is not limited in the present application.

In addition, the vent is provided on the circuit board 160. When the airflow entering from the first end 1003 or the second end 1004 flows through the surface of the cell 120, the heat from the circuit board 160 can be dissipated via the vent.

The battery housing 110 and the adjustable support structure 1101 are made of the thermally conductive materials with higher thermal conductivities, the vents 1005 are provided on two end surfaces of the battery housing 110, the airflow guiding channel is provided inside the battery housing 110, and the vent is provided on the circuit board so that the heat generated by the cell 120 can be fully dissipated, and the heat dissipation performance of the battery pack 100 is better, thereby extending the service life of the battery pack 100.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack (100), comprising:
a battery housing (110);
a single cell (120) disposed in the battery housing; and
a battery energy transmission terminal (140) comprising a composite pole piece (144) electrically connected to the cell and formed by stacking at least two metal pole pieces;
wherein a continuous power density of the battery pack is greater than or equal to 2.5 W/cm³, and an energy density of the battery pack is greater than or equal to 35 Ah/kg.

2. The battery pack of claim 1, wherein the cell is configured to be a full-tab battery, and full coverage tabs (1201) are disposed at edges of current collectors of a positive electrode and/or a negative electrode.

3. The battery pack of claim 1, wherein a maximum continuous operating current transmitted by the composite pole piece is greater than or equal to 50 A.

4. The battery pack of claim 1, wherein a cross-sectional area (S5) of a portion of the composite pole piece transmitting a current is at least greater than or equal to 2 mm².

5. The battery pack of claim 3, wherein a duration of the maximum continuous operating current transmitted by the composite pole piece is greater than or equal to 4s.

6. The battery pack of claim 3, wherein the at least two metal pole pieces forming the composite pole piece are made of different materials.

7. The battery pack of claim 3, wherein the at least two metal pole pieces forming the composite pole piece have different thicknesses.

8. The battery pack of claim 1, wherein the battery energy transmission terminal further comprises a battery USB Type-C terminal (141), and electrical energy transmission power of the battery USB Type-C terminal is greater than or equal to 15 W.

9. The battery pack of claim 1, further comprising a circuit board (160) disposed at a first end (1003) of the battery pack in a length direction, wherein a board area of the circuit board is less than or equal to 1.2 times a cross-sectional area of the cell.

10. The battery pack of claim 8, wherein a voltage at the battery USB Type-C terminal is set to 9 V, 12 V, or 15 V.

11. The battery pack of claim 1, wherein an outer contour dimension of the battery housing is fixed and configured to be a standard dimension, and an interior of the battery housing is provided with an adjustable support structure (1101) or designed with different internal dimensions to form accommodation spaces for accommodating one of at least two cells of different dimensions.

12. The battery pack of claim 1, wherein vents (1005) are disposed on at least end surfaces of a first end (1003) and a second end (1004) of the battery housing in a length direction, respectively to form an axial airflow from the first end to the second end.

13. The battery pack of claim 1, wherein thermal conductivity of the battery housing is greater than or equal to 1.1 W/(m·K).

14. The battery pack of claim 1, further comprising a light display device (130) configured to indicate at least state information of the cell, wherein a sheet region portion of the composite pole piece exposed outside the battery housing forms a connection region (1445) electrically connectable to a tool terminal of a power tool (200), the light display device is disposed at a first end (1003) of the battery housing in a length direction, and the connection region is disposed at a second end (1004) of the battery housing opposite to the first end in the length direction.

15. The battery pack of claim 1, wherein an instantaneous power density of the battery pack is greater than or equal to 8.5 W/cm³.
